(19) Europäisches Patentamt
European Patent Office
Office européen des brevets

(11) **EP 2 352 293 A1**

(12) **EUROPEAN PATENT APPLICATION**
published in accordance with Art. 153(4) EPC

(43) Date of publication:
**03.08.2011 Bulletin 2011/31**

(51) Int Cl.:
**H04N 7/26** (2006.01)

(21) Application number: **09828857.4**

(22) Date of filing: **26.11.2009**

(86) International application number:
**PCT/JP2009/006392**

(87) International publication number:
**WO 2010/061607 (03.06.2010 Gazette 2010/22)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.11.2008 EP 08020651**

(71) Applicant: **Panasonic Corporation Kadoma-shi Osaka 571-8501 (JP)**

(72) Inventor: **The designation of the inventor has not yet been filed**

(74) Representative: **Grünecker, Kinkeldey, Stockmair & Schwanhäusser Anwaltssozietät Leopoldstrasse 4 80802 München (DE)**

(54) **METHOD FOR DECODING MOVING IMAGES, METHOD FOR ENCODING MOVING IMAGES, MOVING IMAGE DECODER, MOVING IMAGE ENCODER, PROGRAM AND INTEGRATED CIRCUIT**

(57) A video decoding method includes: a step of obtaining (a) the encoded signal and (b) filter information for specifying filtering; a step (S21) of generating a decoded signal by decoding the encoded signal; and a step (Step 22) of applying the filtering to the decoded signal in frequency domain by using the filter information, the filtering being applied to cancel, for each of frequency components in the decoded signal in the frequency domain, noise superposed during the encoding of the video signal. The filter information includes information for minimizing a mean squared error between (a) the video signal in the frequency domain and (b) the decoded signal in the frequency domain to which the filtering has been applied.

FIG. 21A

**Description**

**Technical Field**

The present invention relates to a method and an apparatus for video encoding and decoding using filters for filtering of video signals.

**Background Art**

At present, the majority of standardized video encoding algorithms is based on hybrid video encoding. Hybrid video encoding methods typically combine several different lossless and lossy compression schemes in order to achieve the desired compression gain. Hybrid video encoding is also the basis for ITU-T standards (H.26x standards such as H.261, H.263) as well as ISO/IEC standards (MPEG-X standards such as MPEG-1, MPEG-2, and MPEG-4). The most recent and advanced video encoding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames (or pictures), each frame being a two-dimensional matrix of pixels. All the above-mentioned standards based on hybrid video encoding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video encoding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transformation coefficients. In this step the actual lossy (irreversible) compression takes place. Usually, the compressed transformation coefficient values are further compacted (losslessly compressed) by means of an entropy encoding. In addition, side information necessary for reconstruction of the encoded video signal is encoded and provided together with the encoded video signal. This is for example information about the spatial and/or temporal prediction, amount of quantization, etc.

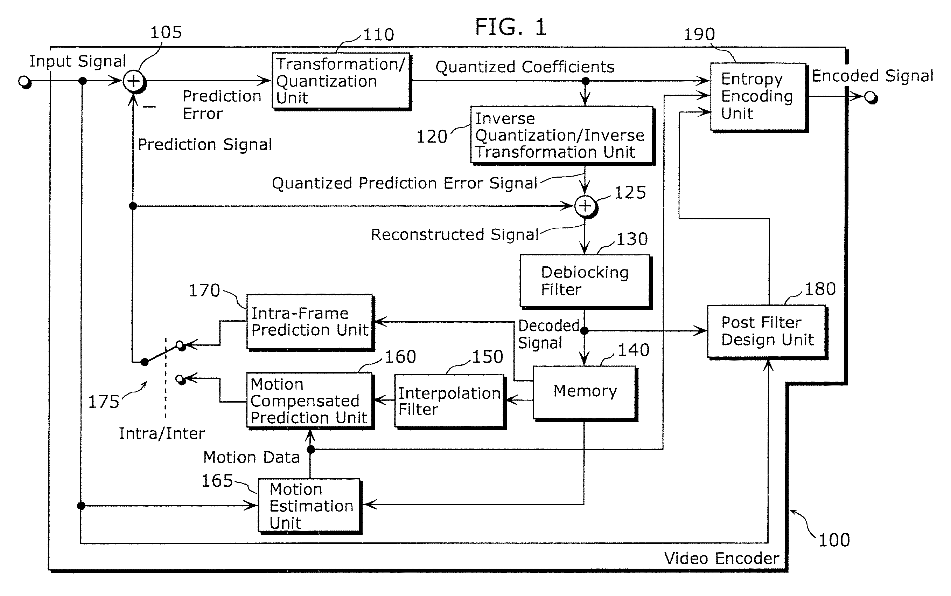

FIG. 1 is an example of a typical H.264/MPEG-4 AVC standard compliant video encoder (hereinafter, referred to also as an "encoder") 100. The H.264/MPEG-4 AVC standard combines all above-mentioned encoding steps. A subtractor 105 first determines differences between a current block (block to be encoded) of a video image (input signal) and a corresponding predicted block (prediction signal).

A temporally predicted block is a block from the previously encoded image, which is stored in a memory 140. A spatially predicted block is interpolated from the values of boundary pixels in the neighboring blocks, which have been previously encoded and stored in the memory 140. The memory 140 thus operates as a delay unit that allows a comparison between current signal values and the prediction signal generated from previous signal values. The memory 140 can store a plurality of previously encoded video frames.

The difference between the input signal and the prediction signal, denoted prediction error or residual, is transformed and quantized at a transformation/quantization unit 110. An entropy encoding unit 190 performs entropy encoding (hereinafter, referred to also as "variable length encoding") on the quantized transformation coefficients in order to further reduce the amount of data in a lossless way. More specifically, this is achieved by applying a code with code words of variable length wherein the length of a code word is chosen based on the probability of occurrence thereof.

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal together with the side information necessary for the decoding of video into standardized units called NAL units according to their further application such as transmission over a channel or storing in storage.

There are VCL NAL units containing the compressed video data and the related information, as well as non-VCt- units encapsulating additional data such as parameter set relating to an entire video sequence, or recently added Supplemental Enhancement Information (SEI) providing additional information that can be use to improve the decoding performance such as post filter hint.

Within the video encoder 100, a decoding unit is incorporated for obtaining a decoded video signal. In compliance with the encoding steps, the decoding steps include an inverse quantization/inverse transformation unit 120. The decoded prediction error signal differs from the original prediction error signal due to the quantization error, called also quantization noise. A reconstructed signal is then obtained by an adder 125 the decoded prediction error signal to the prediction signal. In order to maintain the compatibility between the encoder side and the decoder side, the prediction signal is obtained based on the encoded and subsequently decoded video signal, which is known at both sides. Due to the quantization, quantization noise is superposed to the reconstructed video signal.

Due to the block-wise encoding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter 130 is applied to the reconstructed signal, which is the sum of the prediction signal and the decoded prediction error signal. The video signal after deblocking is the decoded signal, which is generally displayed at the decoder side (if no post filtering is applied).

The deblocking filter 130 in H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The deblocking filter 130 generally smoothes the block edges leading to an improved subjective quality of the decoded images. Moreover, since the filtered part of an image is used for the motion compensated prediction of further images, the filtering also reduces the prediction errors, and thus enables improvement of encoding efficiency. The decoded video signal is then stored in the memory 140.

The prediction signal in H.264/MPEG-4 AVC is obtained either by a temporal or by a spatial prediction. The type of prediction can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames.

The term "intra" refers to the spatial prediction, which only uses the already encoded information within the current video frame. The type of prediction for a video frame can be set by the user or selected by the video encoder 100 so as to achieve a possibly high compression gain. In accordance with the selected type of prediction, an intra/inter switch 175 provides corresponding prediction signal to the subtractor 105.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

Intra-fame prediction uses a predefined set of intra-prediction modes, which basically predict the current block using the boundary pixels of the neighboring blocks already encoded. The different types of spatial prediction refer to a different edge direction, i.e. the direction of the applied two-dimensional interpolation. The prediction signal obtained by such interpolation is then subtracted from the input signal by the subtractor 105 as described above. In addition, spatial prediction type information is entropy encoded and provided together with the encoded video signal.

In order to be decoded, inter-encoded images require also the previously encoded and subsequently decoded image(s). Temporal prediction may be performed uni-directionally, i.e., using only video frames ordered in time before the current frame to be encoded, or bi-directionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks.

An inter-encoded macroblock (P- or B- macroblock) is predicted by employing a motion compensated prediction unit 160. First, a best-matching block is found for the current block within a previously encoded and decoded video frame by a motion estimation unit 165. The best-matching block then becomes a prediction signal and the relative displacement (motion) between the current block and its best match is then signalized as motion data in the form of two-dimensional motion vectors within the side information provided together with the encoded video data.

In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position. Hence, spatial interpolation of such pixel values is needed in order to perform motion compensation. This is achieved by an interpolation filter 150. According to the H.264/MPEG-4 AVC standard, a six-tap Wiener interpolation filter with fixed filter coefficients and a bilinear filter are applied in order to obtain pixel values for sub-pixel positions.

For both the intra- and the inter-encoding modes, the differences between the current input signal and the prediction signal are transformed and quantized by a transformation/quantization unit 110, resulting in the quantized transformation coefficients. Generally, an orthogonal transformation such as a two-dimensional Discrete Cosine Transformation (DCT) or an integer version thereof is employed since it reduces the correlation of the natural video images efficiently. After the transformation, lower frequency components are usually more important for image quality then high frequency components so that more bits can be spent for encoding the low frequency components than the high frequency components.

After quantization, the two-dimensional matrix of quantized transformation coefficients is converted into a one-dimensional array to pass the entropy encoding unit 190. Typically, this conversion is performed by a so-called zig-zag scanning, which starts in the upper left corner of the two-dimensional array and scans the two-dimensional array in a predetermined sequence ending in the lower right corner. As the energy is typically concentrated in the left upper part of the image, corresponding to the lower frequencies, the zig-zag scanning results in an array where usually the last values are zero. This allows for efficient encoding using run-length codes as a part of/before the actual entropy encoding.

H.264/MPEG-4 AVC employs scalar quantization, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

In order to improve the image quality, a so-called post filter 280 may be applied at the video decoder (hereinafter, referred to also as a "decoder") 200. The H.264/MPEG-4 AVC standard allows the sending of post filter information for such a post filter 280 via Supplemental Enhancement Information (SEI) message. The post filter information is determined at the video encoder 100 side by means of a post filter design unit 180, which compares the locally decoded signal and original input signal. The output of the post filter design unit 180 is also fed to the entropy encoding unit 190 in order to be encoded and inserted into the encoded signal. The entropy encoding unit 190 employs different variable length codes for different type of information to be encoded in order to adapt to the statistics thereof.

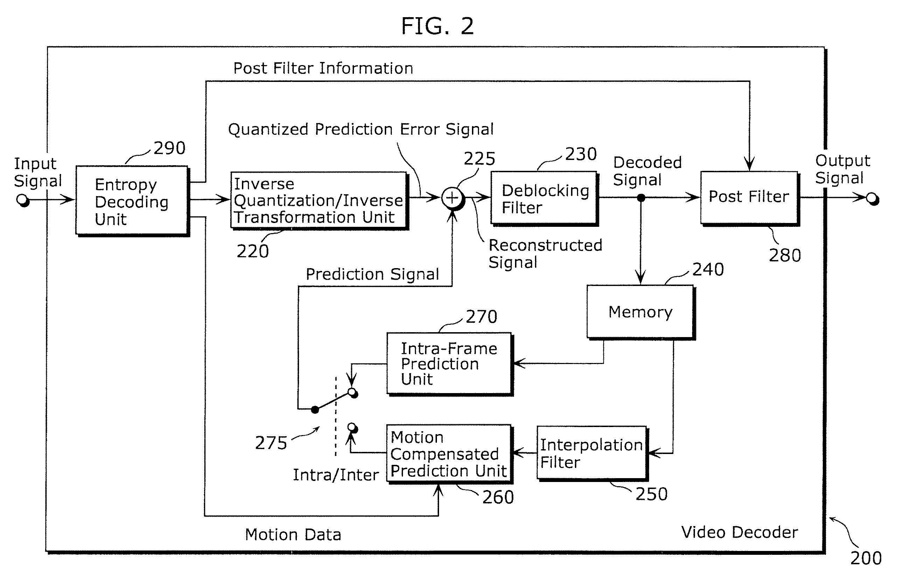

FIG. 2 illustrates an example video decoder 200 compliant with the H.264/AVC video encoding standard. The encoded video signal (input signal to the video decoder 200) first passes to an entropy decoding unit 290. The entropy decoding unit 290 decodes the quantized transformation coefficients, the information elements necessary for decoding such as motion data, type of prediction etc., and the post filter information. The quantized transformation coefficients are inversely scanned in order to obtain a two-dimensional matrix, which is then fed to an inverse quantization/inverse transformation unit 220. After inverse quantization and inverse transformation at the inverse quantization/inverse transformation unit 220, a decoded (quantized) prediction error signal is obtained, which corresponds to the differences obtained by subtracting the prediction signal from the signal input to the video encoder 100.

The prediction signal is obtained from either a motion compensated prediction unit (temporal prediction unit) 260 or an intra-frame prediction unit (spatial prediction unit) 270, respectively. Which prediction signal between these units is to be used is switched by a switch 275 in accordance with a received information element signalizing the prediction applied at the video encoder 100.

The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250.

The quantized prediction error signal in the spatial domain is then added by means of an adder 225 to the prediction signal obtained either from the motion compensated prediction unit 260 or the intra-frame prediction unit 270. The reconstructed image may be passed through a deblocking filter 230 and the resulting decoded signal is stored in a memory 240 to be applied for temporal or spatial prediction of the following blocks.

The post filter information is fed to the post filter 280, which sets up the post filter 280 accordingly. The post filter 280 is then applied to the decoded signal in order to further improve the image quality. Thus, the post filter 280 is capable of adapting to the properties of the video signal entering the video encoder 100 on a per-frame basis.

In summary, there are three types of filter used in the latest standard H.264/MPEG-4 AVC: an interpolation filter, a deblocking filter and a post filter. In general, the suitability of a filter depends on the image to be filtered. Therefore, a filter design capable of adapting the image characteristics is advantageous. The coefficients of such a filter may be designed as Wiener filter coefficients.

The current H.264/MPEG-4 AVC standard furthermore allows the usage of an adaptive post filter. For this purpose, a post filter is estimated at the video encoder 100 for each image by a post filter design unit 180 as described above. The post filter design unit 180 generates filter information (a so-called post filter hint), which is transmitted to the video decoder 200 in the form of an SEI message. At the video decoder 200, the filter information may be used by the post filter 280, which is applied on the decoded signal before displaying. Filter information that is transmitted from the video encoder 100 to the video decoder 200 can either be filter coefficients or a cross correlation vector. Transmitting such side information may improve the quality of filtering, but, on the other hand, requires additional bandwidth. Using the transmitted or calculated filter coefficients, the entire image is post filtered. The deblocking filter in H.264/MPEG-4 AVC is used as a loop filter to reduce blocking artifacts at block edges. All three types of filter may be estimated as a Wiener filter.

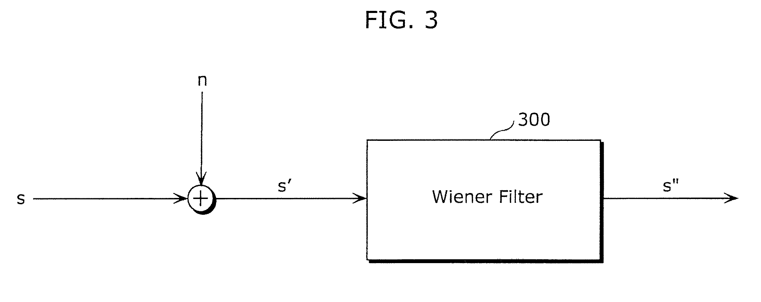

FIG. 3 illustrates a signal flow using a Wiener filter 300 for noise reduction. To an input signal s, noise n is added, resulting in a noisy signal s' to be filtered. With the goal of reducing the noise $n$, the Wiener filter 300 is applied to the signal $s'$, resulting in the filtered signal $s''$. The Wiener filter 300 is designed to minimize the mean squared error between the input signal s, which is a desired signal, and the filtered signal $s''$. This means that Wiener filter coefficients w correspond to the solution of optimization problem $\arg_w \min E[(s-s'')^2]$ which can be formulated as a system of linear equations called Wiener-Hopf equations, operator $E[x]$ indicating the expected value of $x$. The solution is given by:
[Mathematical Formula 1]

$$w = R^{-1} \cdot p,$$   (Equation 1)

where $w$ is an $M$ x 1 vector containing the optimal coefficients of Wiener filter having order $M$, $M$ being a positive integer, $R^{-1}$ denotes the inverse of an $M$ x $M$ autocorrelation matrix $R$ of the noisy signal $s'$ to be filtered, and p denotes an $M$ x 1 cross correlation vector between the noisy signal $s'$ to be filtered and the original signal $s$. Further details on adaptive filter design can be found in Non-Patent Reference 1 that is S. Haykin, "Adaptive Filter Theory", Fourth Edition, Prentice Hall Information and System Sciences Series, Prentice Hall, 2002, which is incorporated herein by reference.

Thus, one of the advantages of the Wiener filter 300 is that the filter coefficients can be determined from the autocorrelation of the corrupted (noisy) signal and the cross correlation of the corrupted signal and the desired signal. In video encoding, quantization noise is superposed to the original (input) video signal in the quantization step. Wiener filtering in the context of video encoding aims at the reduction of the superposed quantization noise in order to minimize the mean squared reconstruction error.

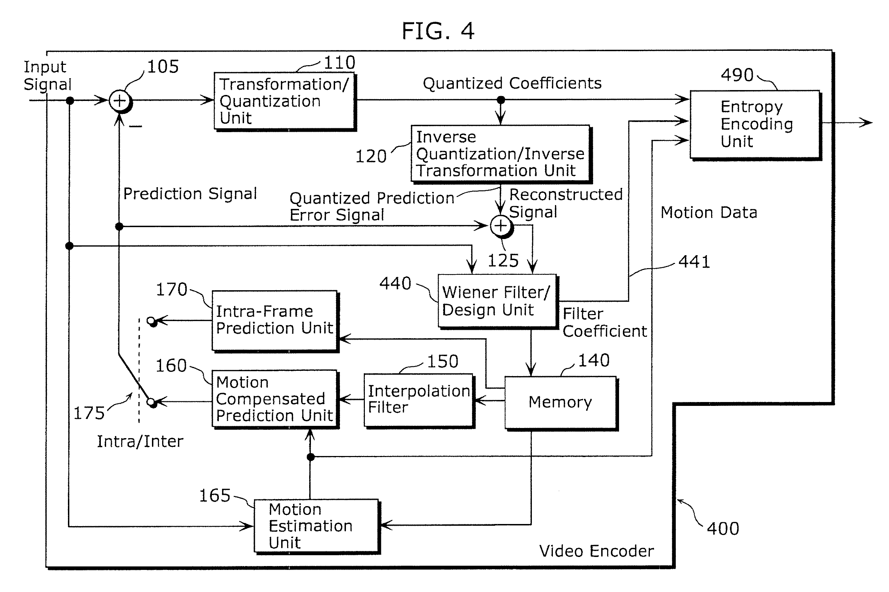

FIG. 4 shows a block diagram of an H.264/MPEG-4 AVC video encoder 400, wherein the deblocking filter 130 of H.264/MPEG-4 AVC is replaced by a Wiener filter/design unit 440, is described in Patent Reference 1 which is incorporated herein by reference. The Wiener filter/design unit 440 is performed within the prediction loop before the motion compensated prediction. The filtered image is stored in the memory 140 and provided to the prediction.

In-loop filtering offers the advantage of improving the signal for prediction, as well as for displaying. If the deblocking filter 130 is implemented as the Wiener filter/design unit 440, the coefficients are estimated using the input signal and the reconstructed signal. The filter coefficients 441 calculated, have to be provided to the decoder in order to ensure the same result of decoding, i.e. the same quality. Before transmitting or storing, the filter coefficients 441 may be entropy encoded by an entropy encoding unit 490 and included into the encoded video data as side information. A decoder compatible with such video encoder 400 obtains the possibly encoded filter information 441, such as filter coefficients, and sets up its filter accordingly.

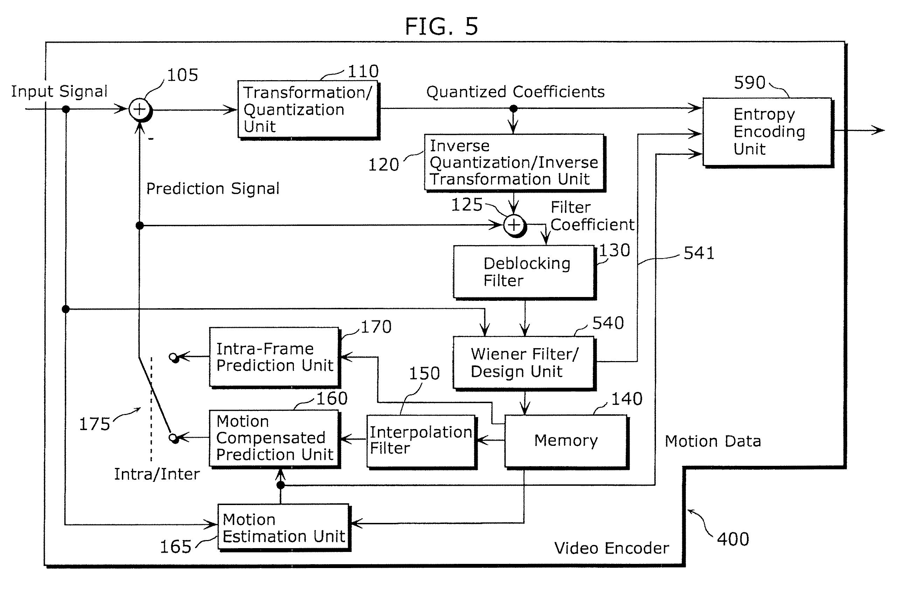

FIG. 5 illustrates another example of the video encoder 500 described in Patent Reference 1 wherein a Wiener filter/design unit 540 is applied in addition and following the deblocking filter 130 of H.264/MPEG-4 AVC. The Wiener filter/design unit 540 calculates the filter coefficients 541 based on the input signal and the reconstructed signal filtered by the deblocking filter 130. The filter coefficients 541 are encoded by an entropy encoding unit 590, which may be adapted to the statistics thereof.

In European patent application, Application No. 08 0120 36.3, which is incorporated herein by reference, it is suggested to consider the prediction signal, the quantized prediction error signal and the decoded signal separately for the filter design. This allows the consideration of noise of each of these three signals individually.

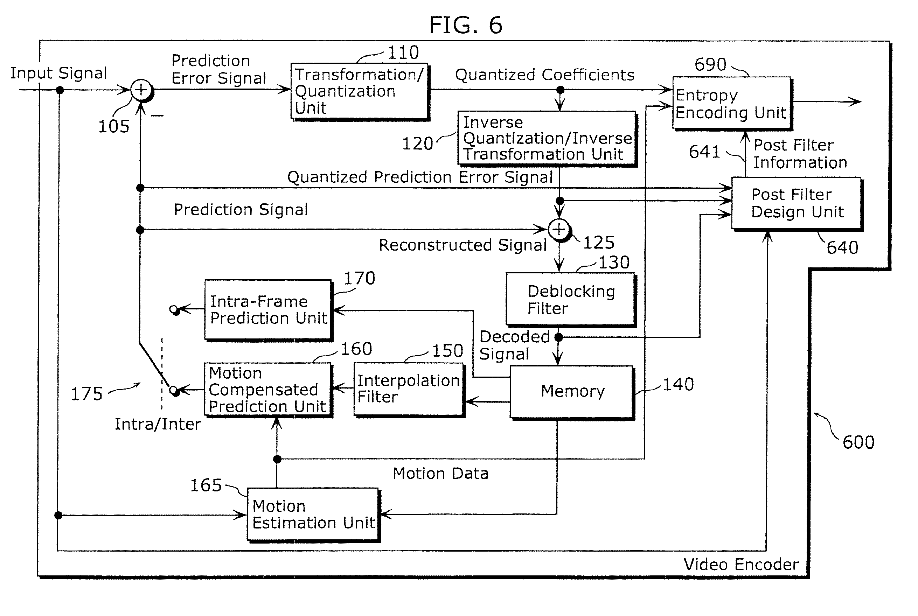

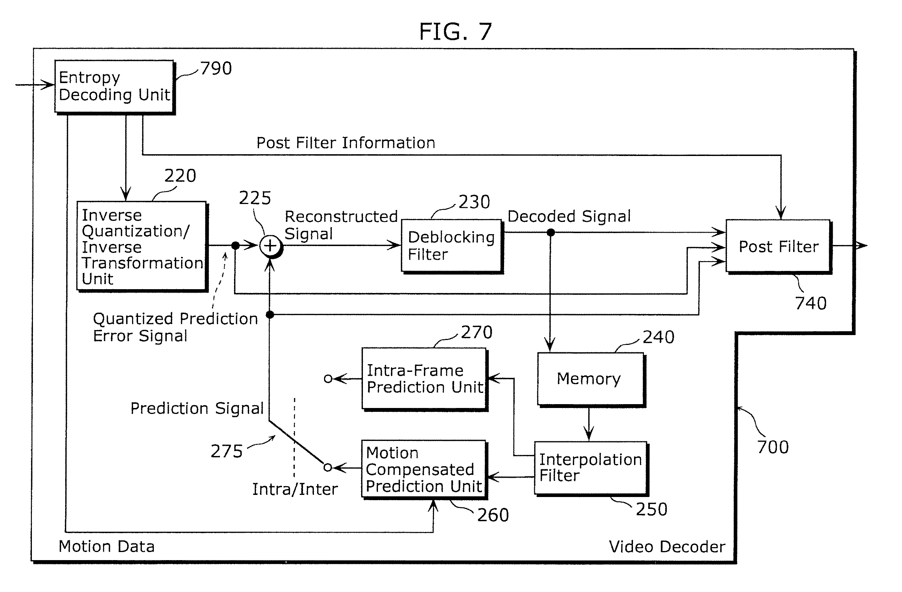

FIG. 6 illustrates such example video encoder 600 based on H.264/MPEG-4 AVC. FIG. 7 shows the corresponding video decoder 700. Accordingly, the post filter coefficients are calculated at the video encoder 600 side in a post filter design unit 640 based on the input signal, decoded signal after deblocking filter applied by the deblocking filter 130, prediction signal and quantized prediction error signal. The post filter design unit 640 provides then either directly the filter coefficients or other kind of new post filter information 641 that can be used to set up a corresponding post filter 740 at the decoder. Such new post filter information 641 may be, for instance, a cross correlation vector, or any other information. Again, the post filter information 641 may be entropy encoded at an entropy encoding unit 690 and correspondingly entropy decoded at the video decoder 700.

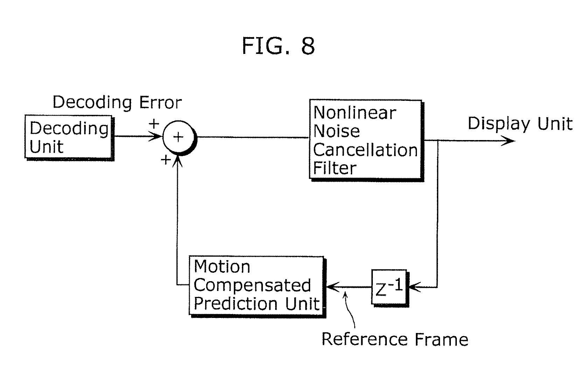

Next, FIG. 8 is a block diagram of a video decoder with a nonlinear noise cancellation filter. The nonlinear noise cancellation filter applies nonlinear noise cancellation filtering to a reconstructed image signal that is a sum of (a) a prediction signal provided from the motion compensated prediction unit and (b) a decoding error (quantized prediction error signal) provided from the decoding unit.

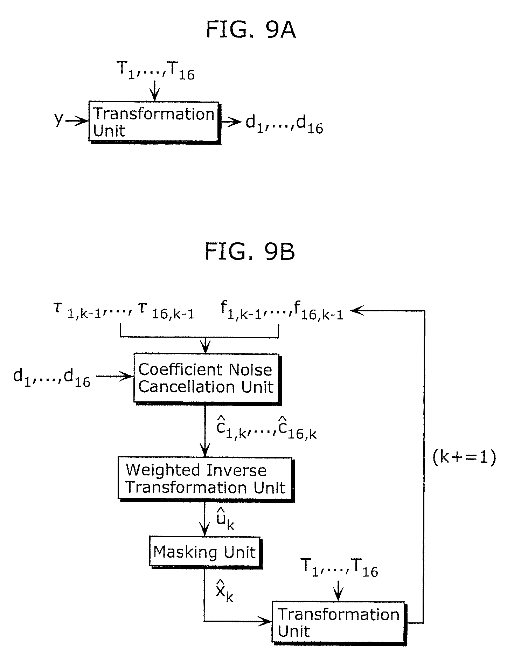

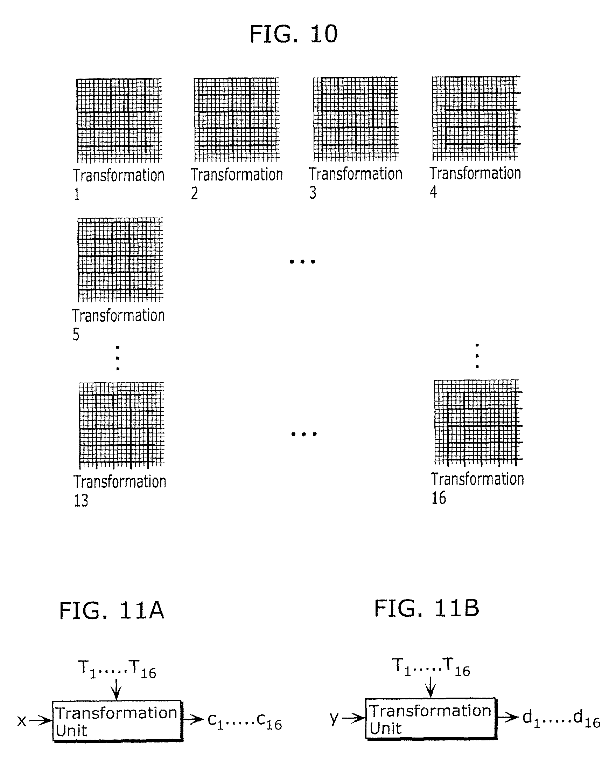

Each of FIGS. 9A and 9B shows a flow of algorism of the nonlinear noise cancellation filtering. First, a transformation unit shown in FIG. 9A generates a plurality of expressions of a reconstructed image signal $y$ by translation invariant transformation (the translation invariant transformation is a pair of transformations generated by horizontally and vertically translating a block start position by one pixel, and defines the number proportional to the number of transformed pixels). More specifically, as shown in FIG. 10, in the case of two-dimensional 4 x 4 transformation, 16 expressions are generated. These are expressed as $d_1, ..., d_{16}$, which are generated from respective different sample sets of the reconstructed image signal y.

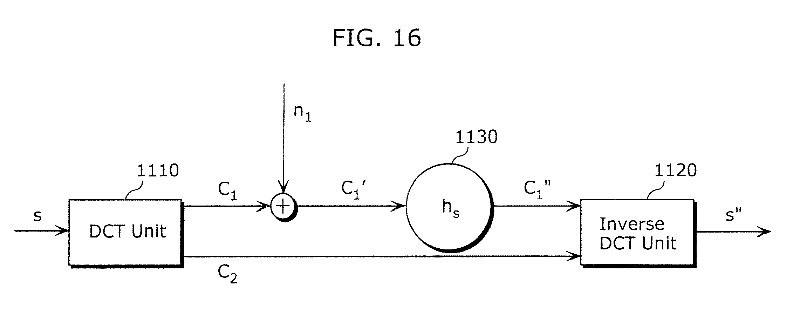

In the video encoder side, the same conversion can be applied to an original image signal x. The original image signal x is a signal which has not yet been hybrid encoded. The video decoder side is, of course, not capable of obtaining the signal. As a result, as shown in FIG. 11B, 16 expressions $c_1$, ..., $c_{16}$ of the original image signal are obtained. The $c_i$ and $d_i$ which are obtained by the processing shown in FIG. 11A and FIG. 11B are vectors of 16 coefficients $c_i(j)$ and vectors of 16 coefficients $d_i(j)$, where $j$ = 1, ..., 16, respectively. Typically, by quantization performed by the video encoder, quantization noise is $q_i(j)$ that is superimposed to the coefficients of the reconstructed signal. According to the quantization noise, a dependency between the coefficient $d_i(j)$ of the reconstructed signal and the coefficient $c_i(j)$ of the original image signal can be expressed as $c_i(j) = d_i(j) + q_i(j)$. A portion serving as a core of the noise cancellation filter is a noise cancellation rule. The noise cancellation rule is expressed by the following equation 2.

[Mathematical Formula 2]

$$\hat{c}_i(j) = \begin{cases} d_i(j) & \text{, condition 1} \\ 0 & \text{, otherwise} \end{cases} \qquad \text{(Equation 2)}$$

The condition 1 in the equation 2 is selected to minimize a mean squared error between the coefficient $c_i(j)$ of the original image signal and a predicted coefficient $c_i^\wedge(j)$. In other words, if the equation 2 is described in more detail, the equation 2 is expressed as equation 3. Here, the symbol "^" is a symbol assigned above an immediately-prior character. In the description, hereinafter, the symbol "^" has the above meaning.

[Mathematical Formula 3]

$$\hat{c}_i(j) = \begin{cases} d_i(j) & , E\left[(d_i(j) - c_i(j))^2\right] < E\left[(c_i(j))^2\right] \\ 0 & \text{, otherwise} \end{cases} \qquad \text{(Equation 3)}$$

According to the above equation 3, the coefficient $d_i(j)$ of the reconstructed signal or zero is used as a prediction value which is selected to cause a square reconstruction error to be further decreased. The selection is made by comparing the coefficient $d_i(j)$ to a threshold value $\tau_i$. In other words, if the equation 3 is rewritten by using $\tau_i$, the following equation 4 is obtained.

[Mathematical Formula 4]

$$\hat{c}_i(j) = \begin{cases} d_i(j) & , d_i(j) \geq \tau_i \\ 0 & \text{, otherwise} \end{cases} \qquad \text{(Equation 4)}$$

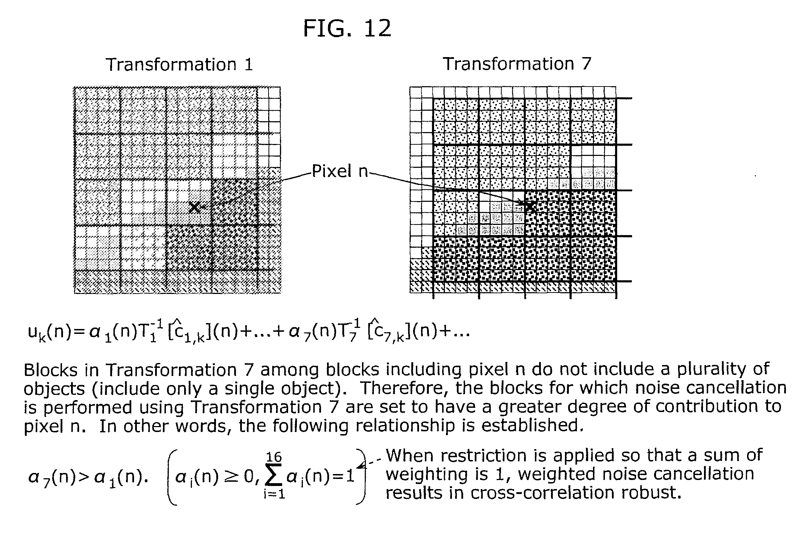

Therefore, 16 prediction values $c_i^\wedge(j)$ for the coefficients of the original image signal are derived from 16 expressions $d_i(j)$ by the threshold value operation. These 16 prediction values $c_i^\wedge(j)$ are, as shown in FIG. 12, inversely transformed at a weighted inverse transformation unit to be a value $u^\wedge$. The weighted inverse transformation is processing of performing weighted addition for each frequency component of the 16 prediction values $c_i^\wedge(j)$ so as to transform the result to a spatial domain. In short, the value $u^\wedge$ is a value in the spatial domain. It is also possible to further mask $u^\wedge$ at a masking unit. If $u^\wedge$ is masked, an image signal $x^\wedge$ is obtained. The masking processing can suppress sharp change of the image signal $x^\wedge$ for the original image signal x.

Thus far, only one loop in the noise cancellation has been explained. As shown in FIG. 9B, three loops indicated by $k$ = 0, ..., 2 are performed. Here, translation invariant transformation is applied to $x^\wedge = x_{k=0}^\wedge = x_0^\wedge$ that is the result of the first loop so as to increment $k$ by 1 ($k$ += 1) to generate coefficients $f_{1,k-1}$, ..., $f_{16,k-1}$. The noise cancellation rule for these coefficients is applied according to the following equation 5. For each of the loops, each threshold value $\tau_{i,k}$ is applied.

**[Mathematical Formula 5]**

$$\hat{c}_{i,k}(j) = \begin{cases} f_{i,k-1}(j) & , f_{i,k-1}(j) \geq \tau_{i,k} \\ 0 & , \text{otherwise} \end{cases} \qquad \text{(Equation 5)}$$

**Prior Arts**

**Patent Reference**

Patent Reference 1: European Patent Application Publication No. 1841230

**Non-Patent Reference**

Non-Patent Reference 1: "Adaptive Filter Theory" (S. Haykin, Prentice Hall Information and System Sciences Series, Prentice Hall, 2002)

**Disclosure of Invention**

**Problems that Invention is to Solve**

The problem underlying the present invention is based on the observation that quantization performed in the frequency domain can be seen as a superposition of each individual frequency component with possibly individual quantization noise. This means that the statistics of noise may differ for each frequency component. The approaches applied in video encoding so far apply filtering (loop and/or post filtering) in the spatial domain. Filtering applied in the spatial domain, however, does not take into account the individual statistics of the quantization noise in each frequency component.
An object of the present invention is to provide encoding and decoding mechanisms which improve the quality of the encoded and/or decoded video signal by means of an efficient filtering approach.

**Means to Solve the Problems**

In accordance with an aspect of the present invention, there is provided a video decoding method of decoding an encoded signal generated by encoding a video signal, the video decoding method including: obtaining (a) the encoded signal and (b) filter information for specifying filtering; generating a decoded signal by decoding the encoded signal; and applying the filtering to the decoded signal in frequency domain by using the filter information, the filtering being applied to cancel, for each of frequency components in the decoded signal in the frequency domain, noise superposed during the encoding of the video signal, wherein the filter information includes information for minimizing a mean squared error between (a) the video signal in the frequency domain and (b) the decoded signal in the frequency domain to which the filtering has been applied.
By the above method, it is possible to appropriately cancel noise superposed during quantization. Here, the "noise superposed during quantization" is typically quantized noise that is superposed in signal transformed into the frequency domain. Therefore, filtering is applied not to signal in the spatial domain but to signal in the frequency domain, so as to more efficiently cancel noise. Furthermore, quantized noise is superposed not homogeneously for all frequency components, but superposed differently for each frequency component. Therefore, filtering is applied independently for each frequency component, so that quantized noise can be cancelled more adaptively. Moreover, by obtaining filter information from the encoder side, it is possible to perform the filtering in consideration of original image signal.
It should be noted that the "encoding" described in the description of this application is a concept including a part or all of transformation from video signal into frequency, quantization, and entropy encoding. In addition, the "decoding" described in the description of this application is a concept including a part or all of inverse quantization of encoded signal, transformation into the spatial domain, addition of prediction signal to generate reconstructed signal, deblocking filtering for reconstructed signal to generate decoded signal, generation of prediction signal from the reconstructed signal.
Furthermore, the filtering may include applying, for each of blocks included in the decoded signal by using a weight coefficient included in the filter information, weighted addition to (a) a value of each of frequency components in a current block that is the each of blocks and (b) a value of a frequency component in a temporally or spatially neighboring block of the current block, the frequency component in the neighboring block corresponding to the each of frequency components in the current block, and the weight coefficient is determined to minimize a mean squared error between (a) the current block in the frequency domain to which the filtering has been applied and (b) a block in the video signal in the frequency domain which corresponds to the current block.

Still further, the filtering further may include: subtracting a first offset value from the value of the each of the frequency components, for the current block to which the weighted addition has not yet been applied; and adding a second offset value included in the filter information to the value of the each of the frequency components, for the current block to which the weighted addition has been applied, wherein the first offset value is calculated for the each of the frequency components by using a plurality of temporally or spatially consecutive blocks including the current block, among the blocks included in the decoded signal in the frequency domain, and the second offset value is calculated for the each of the frequency components by using a plurality of temporally or spatially consecutive blocks including a block corresponding to the current block, among blocks included in the video signal in the frequency domain.

Still further, the encoded signal is generated by: transforming the video signal from spatial domain into the frequency domain; quantizing the transformed video signal; and applying entropy encoding to the quantized video signal, the generating of the decoded signal includes applying entropy decoding to the encoded signal to generate a quantized coefficient as the decoded signal, and the applying of the filtering includes: applying the filtering to the quantized coefficient; and inversely quantizing the quantized coefficient to which the filtering has been applied.

Still further, the encoded signal is generated by: subtracting a prediction signal from the video signal; transforming the subtracted video signal from spatial domain into the frequency domain; quantizing the transformed video signal; and applying entropy encoding to the quantized video signal, the generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate an inversely transformed signal; and adding the prediction signal to the inversely transformed signal to generate a reconstructed signal as the decoded signal, and the applying of the filtering includes: transforming the reconstructed signal from the spatial domain into the frequency domain; applying the filtering to the reconstructed signal transformed into the frequency domain; and inversely transforming the reconstructed signal applied with the filtering from the frequency domain into the spatial domain.

Still further, the encoded signal is generated by: subtracting a prediction signal from the video signal to generate a prediction error signal; transforming the prediction error signal from the spatial domain into the frequency domain; quantizing the transformed prediction error signal; and applying entropy encoding to the prediction error signal that has been quantized, the generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate a quantized prediction error signal; and adding the prediction signal to the quantized prediction error signal to generate a reconstructed signal, the filtering includes applying, by using a weight coefficient included in the filter information, weighted addition to values of same frequency component in respective blocks in (a) the quantized prediction error signal as the decoded signal, (b) the prediction signal, and (c) the reconstructed signal, the respective blocks corresponding to each other, and the weight coefficient is determined to minimize a mean squared error between (a) the prediction error signal in the frequency domain and (b) the quantized prediction error signal in the frequency domain to which the filtering has been applied.

Still further, the encoded signal is generated by: subtracting a prediction signal from the video signal; transforming the subtracted video signal from spatial domain into the frequency domain; quantizing the transformed video signal; and applying entropy encoding to the quantized video signal, and the generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate a quantized prediction error signal; and adding the prediction signal to the quantized prediction error signal to generate a reconstructed signal as the decoded signal, and the applying of the filtering includes: transforming the prediction signal from the spatial domain into the frequency domain; applying the filtering to the prediction signal transformed into the frequency domain; and inversely transforming the prediction signal applied with the filtering from the frequency domain into the spatial domain.

In accordance with another aspect of the present invention, there is provided a video encoding method of encoding a video signal to generate an encoded signal, the video encoding method including: generating the encoded signal by, at least, (a) transforming the video signal from spatial domain into frequency domain and (b) quantizing the transformed video signal to generate a quantized signal in the frequency domain; generating filter information for specifying filtering that is applied to cancel, for each of frequency components in the quantized signal in the frequency domain, noise superposed during the quantization; and outputting the encoded signal and the filter information, wherein the filter information is determined to minimize a mean squared error between (a) the video signal in the frequency domain and (b) the quantized signal in the frequency domain to which the filtering has been applied.

Furthermore, the video encoding method may further include applying the filtering to the quantized signal in the frequency domain by using the filter information, wherein the filtering includes applying, for each of blocks included in the quantized signal as a current block by using a weight coefficient included in the filter information, weighted addition to (a) a value of each of frequency components in the current block and (b) a value of a frequency component in a temporally or spatially neighboring block of the current block, the frequency component in the neighboring block corresponding to the each of frequency components in the current block, and the generating of the filter information includes determining the weight coefficient to minimize a mean squared error between (a) the current block to which the filtering has been applied and (b) a block in the video signal in the frequency domain which corresponds to the current block.

Still further, the filtering may include: subtracting a first offset value from the value of the each of the frequency components, for the current block to which the weighted addition has not yet been applied; and adding a second offset value to the value of the each of the frequency components, for the current block to which the weighted addition has been applied, and the generating of the filter information may include: calculating the first offset value for the each of the frequency components by using a plurality of temporally or spatially consecutive blocks including the current block, among the blocks included in the quantized signal in the frequency domain; and calculating the second offset value for the each of the frequency components by using a plurality of temporally or spatially consecutive blocks including a block corresponding to the current block, among blocks included in the video signal in the frequency domain, wherein at least the second offset value is included in the filter information.

Still further, the generating of the encoded signal may include: subtracting a prediction signal from the video signal to generate a prediction error signal; transforming the prediction error signal from the spatial domain into the frequency domain; and quantizing the transformed prediction error signal to generate a quantized coefficient, and the generating of the filter information may include determining the filter information to minimize a mean squared error between (a) the prediction error signal in the frequency domain and (b) the quantized prediction error signal in the frequency domain to which the filtering has been applied.

Still further, the generating of the encoded signal may include: quantizing the video signal in the frequency domain; and inversely quantizing the quantized video signal to generate a reconstructed signal, and the generating of the filter information may include determining the filter information to minimize a mean squared error between (a) the video signal in the frequency domain and (b) the reconstructed signal in the frequency domain to which the filtering has been applied.

Still further, the generating of the encoded signal may include: subtracting a prediction signal from the video signal to generate a prediction error signal; transforming the prediction error signal from the spatial domain into the frequency domain; quantizing the transformed prediction error signal; inversely quantizing the prediction error signal that has been quantized; transforming the inversely quantized prediction error signal from the frequency domain into the spatial domain to generate a quantized prediction error signal; and adding the prediction signal to the quantized prediction error signal to generate a reconstructed signal, and the generating of the filter information includes determining, based on the (a) the prediction error signal in the frequency domain and (b) the quantized prediction error signal in the frequency domain, and (c) the reconstructed signal in the frequency domain, the filter information to minimize a mean squared error between (a) the prediction error signal in the frequency domain and (b) the quantized prediction error signal in the frequency domain to which the filtering has been applied.

Still further, the generating of the encoded signal may include: subtracting a prediction signal from the video signal to generate a prediction error signal; transforming the prediction error signal from the spatial domain into the frequency domain; quantizing the transformed prediction error signal; inversely quantizing the prediction error signal that has been quantized; transforming the inversely quantized prediction error signal from the frequency domain into the spatial domain to generate a quantized prediction error signal; and adding the prediction signal to the quantized prediction error signal to generate a reconstructed signal, and the generating of the filter information may include determining the filter information to minimize a mean squared error between (a) the video signal in the frequency domain and (b) the prediction signal in the frequency domain to which the filtering has been applied.

In accordance with still another aspect of the present invention, there is provided a video decoder decoding an encoded signal generated by encoding a video signal, the video decoder including: an obtainment unit configured to obtain (a) the encoded signal and (b) filter information for specifying filtering; a decoding unit configured to generate a decoded signal by decoding the encoded signal; and a filter unit configured to apply the filtering to the decoded signal in frequency domain by using the filter information, the filtering being applied to cancel, for each of frequency components in the decoded signal in the frequency domain, noise superposed during the encoding of the video signal, wherein the filter information includes information for minimizing a mean squared error between (a) the video signal in the frequency domain and (b) the decoded signal in the frequency domain to which the filtering has been applied.

In accordance with still another aspect of the present invention, there is provided a video encoder encoding a video signal to generate an encoded signal, the video encoder including: an encoding unit configured to generate the encoded signal by, at least, (a) transforming the video signal from spatial domain into frequency domain and (b) quantizing the transformed video signal to generate a quantized signal in the frequency domain; a filter design unit configured to generate filter information for specifying filtering that is applied to cancel, for each of frequency components in the quantized signal in the frequency domain, noise superposed during the quantization; and an output unit configured to output the encoded signal and the filter information, wherein the filter information is determined to minimize a mean squared error between (a) the video signal in the frequency domain and (b) the quantized signal in the frequency domain to which the filtering has been applied.

In accordance with still another aspect of the present invention, there is provided a program for decoding an encoded signal generated by encoding a video signal, the program causing a computer to execute: obtaining (a) the encoded signal and (b) filter information for specifying filtering; generating a decoded signal by decoding the encoded signal; and applying the filtering to the decoded signal in frequency domain by using the filter information, the filtering being applied to cancel, for each of frequency components in the decoded signal in the frequency domain, noise superposed during the encoding of the video signal, wherein the filter information includes information for minimizing a mean squared error between (a) the video signal in the frequency domain and (b) the decoded signal in the frequency domain to which the filtering has been applied.

In accordance with still another aspect of the present invention, there is provided a program for encoding a video signal to generate an encoded signal, the program causing a computer to execute: generating the encoded signal by, at least, (a) transforming the video signal from spatial domain into frequency domain and (b) quantizing the transformed video signal to generate a quantized signal in the frequency domain; generating filter information for specifying filtering that is applied to cancel, for each of frequency components in the quantized signal in the frequency domain, noise superposed during the quantization; and outputting the encoded signal and the filter information, wherein the filter information is determined to minimize a mean squared error between (a) the video signal in the frequency domain and (b) the quantized signal in the frequency domain to which the filtering has been applied.

In accordance with still another aspect of the present invention, there is provided an integrated circuit decoding an encoded signal generated by encoding a video signal, the integrated circuit including: an obtainment unit configured to obtain (a) the encoded signal and (b) filter information for specifying filtering; a decoding unit configured to generate a decoded signal by decoding the encoded signal; and a filter unit configured to apply the filtering to the decoded signal in frequency domain by using the filter information, the filtering being applied to cancel, for each of frequency components in the decoded signal in the frequency domain, noise superposed during the encoding of the video signal, wherein the filter information includes information for minimizing a mean squared error between (a) the video signal in the frequency domain and (b) the decoded signal in the frequency domain to which the filtering has been applied.

In accordance with still another aspect of the present invention, there is provided an integrated circuit encoding a video signal to generate an encoded signal, the integrated circuit including: an encoding unit configured to generate the encoded signal by, at least, (a) transforming the video signal from spatial domain into frequency domain and (b) quantizing the transformed video signal to generate a quantized signal in the frequency domain; a filter design unit configured to generate filter information for specifying filtering that is applied to cancel, for each of frequency components in the quantized signal in the frequency domain, noise superposed during the quantization; and an output unit configured to output the encoded signal and the filter information, wherein the filter information is determined to minimize a mean squared error between (a) the video signal in the frequency domain and (b) the quantized signal in the frequency domain to which the filtering has been applied.

It should be noted that the present invention can be implemented not only as the video decoding method (video decoder) and the video encoding method (video encoder), but also as: integrated circuits realizing their functions: programs causing a computer to execute the functions; and the like. Of course, such program can be distributed via a recording medium such as a Compact Disc-Read Only Memory (CD-ROM) or via a transmission medium such as the Internet.

This is achieved by the features as set forth in the independent claims.

Preferred embodiments are the subject matter of the dependent claims.

It is the particular approach of the present invention to determine filter parameters based on a video signal in the frequency domain, to set-up a filter accordingly and to apply the filter in the frequency domain.

Such an approach provides improved quality after filtering for the cases where the noise is varying with respect to different frequency components of the signal. Such noise characteristics are typically observed in the quantization noise if quantization is performed in the frequency domain, especially if quantization weighting matrices are used or coarse quantization is applied. However, for certain transmission methods also the errors may result in frequency selective noise.

According to the first aspect of the present invention, a method for encoding a video signal including at least one video frame is provided. First, a video signal is transformed into the frequency domain. Filter information for filtering a video signal in the frequency domain are then determined based on the transformed video signal in the frequency domain. The filter information are provided to a decoder side.

According to another aspect of the present invention, a method for decoding an encoded video signal including at least one video frame is provided. A filter for filtering of a video signal in the frequency domain is set up individually for blocks of the video signal in the frequency domain. The blocks of the video signal are then filtered individually using the filter in the frequency domain.

According to still another aspect of the present invention, an encoder for encoding a video signal including at least one video frame is provided. The encoder comprises a transformation unit for transforming a video signal into the frequency domain, and a filter design unit for determining filter information. The filter information are to be used for filtering a video signal in the frequency domain, and are determined based on the video signal transformed into the frequency domain. Moreover, the encoder is capable of providing the filter information to a decoder side.

According to still another aspect of the present invention, an apparatus for decoding an encoded video signal including at least one video frame is provided. The decoder comprises a filter set-up unit for setting-up a filter for blocks of the video signal individually and in the frequency domain. The decoder further comprises a filter unit for filtering the video signal by the filter also in the frequency domain and block-wise.

Preferably, the blocks for setting-up the filter, filter design and/or filtering correspond to the blocks the transformation is performed for. Here, the transformation may correspond to the transformation performed for the encoding of the video signal or to the inverse transformation performed for the decoding of the video signal. In such case, the segmentation of the video signal in frames and blocks is performed at the encoder and signalized or generically known to the decoder. However, an additional transformation may also be applied to blocks with a raster (size and placement within a frame of the video signal) different from the raster used for the encoding/decoding. In this case, the segmentation of the video signal into blocks may be necessary at both encoder and decoder, or performed at the encoder and signalized/ known to the decoder. The filtering raster may depend on the block raster used in encoding/decoding such as a block raster for transformation or a block raster for temporal and/or prediction. In particular, the block raster for filtering may be set up out of groups of blocks of the underlying encoding/decoding block raster. However, the block raster for filtering may be independent of the underlying block raster for encoding/decoding (if any). The sizes and shapes of the blocks in such a filtering raster are not necessarily identical blocks of different shapes and sizes may be used. Preferably, squares are used of a size allowing for an efficient software/hardware implementation. However, the size and shape of the blocks in the raster may be chosen arbitrarily, for instance, according to the content of the video signal.

Preferably, at the decoder side, filter information are obtained from the encoder side, the filter information being for filtering a video signal in the frequency domain. The filter is then set-up based on the obtained filter information. Obtaining the filter information from the encoder side enables the decoder to obtain information that is only available at the encoder such as information related to the original video signal (before encoding) and thus to set-up the filter in accordance with such information.

Preferably, the encoding in accordance with the present invention also comprises spatial or temporal prediction of an input video signal prediction in the spatial domain, resulting in a prediction signal. A prediction error signal is obtained as a difference between the input video signal and the prediction signal. In accordance with an embodiment of the present invention, the transformed video signal corresponds to the transformed prediction error signal, the filter information are determined based on the transformed prediction error signal in frequency domain and the filtering is applied to the transformed prediction error signal. Alternatively, the determining of the filter information is performed based on reconstructed video signal being a sum of the prediction signal and the (quantized) prediction error signal and being transformed into the frequency domain.

Preferably, the encoding further comprises quantizing the transformed video signal and the filter information comprises calculated correlation information or filter coefficients based on the transformed video signal in frequency domain before and after the quantization. In particular, the correlation information may be a cross correlation vector of the video signal in frequency domain before and after quantization, or autocorrelation of quantization noise given by the difference between the video signal in frequency domain before and after quantization. Such information may be advantageously used to calculate filter coefficients at the encoder and/or decoder, for instance, as Wiener filter coefficients. However, the coefficients may also be directly provided to the decoder. The filter coefficients may be estimated based on solving other optimization problem than minimizing the mean squared error as in case of Wiener filtering. The filter may be a finite impulse response filter, weighting only the signal on its input, or an infinite impulse response filter, weighting also the signal of its output.

In accordance with another embodiment of the present invention, the encoding also includes setting-up a filter for filtering of the video signal based on the filter information and filtering the video signal by the filter in the frequency domain. In particular, the filtering performed at the encoder may be a loop filtering applied within the prediction loop. However, filtering is not necessarily performed at the encoder. Encoding may comprise only the filter design for determining the filter information, which are provided to the decoder. The decoder then sets up its filter accordingly and performs filtering, such as post filtering. Preferably, the filtering at the encoder is also applied block-wise. In particular, in case of a loop-filter, the filtering applied at the encoder and at the decoder is similar, based on equal filter information.

However, a decoding mechanism in accordance with the present invention may comprise both loop filtering and post filtering. Correspondingly, filter information may be determined and provided at the encoder for both a loop filter and a post filter, wherein the loop filtering may also be performed equally at the encoder and the decoder. In particular, the loop filter may perform also the de-blocking filtering. However, a loop filter may also work in addition to an existing deblocking filter or there does not need to be a deblocking filter at all.

In accordance with another embodiment of the present invention, the decoder obtains from the encoder side a prediction error signal transformed into the frequency domain and transforms it inversely into the spatial domain. Moreover a video signal in the spatial domain is predicted spatially or temporally by a prediction signal based on the encoded data received from the encoder side. A reconstructed video signal is then calculated as a sum of the prediction error signal in the spatial domain and the prediction signal. Preferably, the filtering is applied to the video signal, which is either the reconstructed video signal transformed in the frequency domain or the obtained prediction error signal in the frequency domain.

The filter information may directly comprise the filter coefficients and/or offset of the video signal in frequency domain. Preferably, the filter information are provided for each slice, in particular within the slice header. However, the filter information may be provided also in other regular or irregular time intervals, for instance, per picture, per macroblock, per block or per a number of such picture elements. The filter information is provided by storing in storage or by transmitted over a transmission channel together with the encoded video signal.

The design and filtering may be performed for selected frequencies only. In particular, filtering may be applied only to DC frequency component.

In accordance with another embodiment of the present invention, the filtering in frequency domain is disabled based on evaluation of the transformation coefficients of the same frequency used in filtering. In particular, variance of the coefficients is compared to a threshold. The threshold may be fixed or determined dynamically, for instance, based on quantization settings. Other evaluation criteria may be used, such as differences between the coefficients, etc.

The filtering in accordance with the present invention preferably weights the transformation coefficients of the same frequency in different blocks belonging to the neighbourhood of the current block to be filtered. In particular, the neighbourhood is a spatial neighbourhood comprising blocks already decoded and surrounding the current block. Alternatively or in addition, the neighbourhood is a temporal neighbourhood comprising blocks in different frames (time instants) corresponding to the present block. Preferably, the correspondence is determined using motion estimation. However, blocks at the same position within the frame as the current block may be used, or any other blocks in the previous and/or following frames.

Preferably, the video signal is encoded and/or decoded based on the H.264/MPEG-4 AVC standard and the filter information is provided within the Supplemental Enhancement Information message. However, the present invention is not limited to H.264/MPEG-4 AVC and its enhancements and followers, and may be used for any video encoding mechanism, standardized or proprietary.

In accordance with still another embodiment of the present invention, the prediction signal, the quantized prediction error signal, and the reconstructed signal are considered separately in the filtering process, i.e. when determining the filter information at the encoder and/or when setting-up the filter at the decoder. Alternatively, only the prediction signal or the prediction error signal is filtered. In order to perform filtering using filter of an order higher than one, the prediction signal and/or the prediction error signal of the previously filtered blocks are stored in a memory.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings.

**Effects of the Invention**

The present invention can appropriately cancel noise superimposed during encoding.

**Brief Description of Drawings**

  **[FIG. 1]** FIG. 1 is a block diagram of a conventional H.264/MPEG-4 AVC video encoder.

**[FIG. 2]** FIG. 2 is a block diagram of a conventional H.264/MPEG-4 AVC video decoder.

**[FIG. 3]** FIG. 3 is a schematic drawing illustrating Wiener filter design.

**[FIG. 4]** FIG. 4 is a block diagram of a video encoder with deblocking filter replaced by a Wiener filter.

**[FIG. 5]** FIG. 5 is a block diagram of a video encoder with deblocking filter complemented by a Wiener filter.

**[FIG. 6]** FIG. 6 is a block diagram of a video encoder with a post filter designed by considering input signal with prediction signal, quantized prediction error signal, and decoded signal separately.

**[FIG. 7]** FIG. 7 is a block diagram of a video decoder with a post filter being set up using obtained post filter information.

**[FIG. 8]** FIG. 8 is a block diagram illustrating an example of a conventional video decoder.

**[FIG. 9A]** FIG. 9A is a block diagram of translation invariant transformation.

**[FIG. 9B]** FIG. 9B is a block diagram of the nonlinear noise cancellation filter.

**[FIG. 10]** FIG. 10 is a diagram illustrating an example of translation invariant transformation.

**[FIG. 11A]** FIG. 11A is a diagram illustrating an example of application of translation invariant transformation to an original image signal x.

**[FIG. 11B]** FIG. 11B is a diagram illustrating an example of application of translation invariant transformation to a reconstructed signal y.

**[FIG. 12]** FIG. 12 is a flowchart of processing performed by the nonlinear noise cancellation filter.

**[FIG. 13]** FIG. 13 is a schematic drawing illustrating an example encoding system with noise applied in the frequency domain.

**[FIG. 14]** FIG. 14 is a schematic drawing illustrating an example encoding system with noise applied in the frequency domain and filtering applied in the spatial domain.

**[FIG. 15]** FIG. 15 is a schematic drawing illustrating the equivalent example encoding system with both noise and filtering applied in the spatial domain.

**[FIG. 16]** FIG. 16 is a schematic drawing illustrating the example encoding system with both noise and filtering applied in the frequency domain.

**[FIG. 17]** FIG. 17 is a graph representing the reduction of minimum mean squared error achieved by designing and applying filtering in the frequency domain rather than in the spatial domain for the example encoding system.

**[FIG. 18A]** FIG. 18A is a block diagram of a video encoder in accordance with the present invention.

**[FIG. 18B]** FIG. 18B is a block diagram of another video encoder in accordance with the present invention.

**[FIG. 19A]** FIG. 19A is a block diagram of a video decoder in accordance with a preferred embodiment of the present invention.

**[FIG. 19B]** FIG. 19B is a block diagram of another video decoder in accordance with a preferred embodiment of the present invention.

**[FIG. 20A]** FIG. 20A is a block diagram of a video encoder in accordance with an embodiment of the present invention implementing an in-loop filter in the frequency domain.

**[FIG. 20B]** FIG. 20B is a flowchart of processing performed by the video encoder illustrated in FIG. 20A.

**[FIG. 21A]** FIG. 21A is a block diagram of a video decoder in accordance with an embodiment of the present invention implementing an in-loop filter in the frequency domain.

**[FIG. 21B]** FIG. 21B is a flowchart of processing performed by the video encoder illustrated in FIG. 21A.

**[FIG. 22]** FIG. 22 is a block diagram illustrating example filtering in the frequency domain as applied in an encoder or a decoder according to the present invention.

**[FIG. 23]** FIG. 23 is a block diagram of a video encoder in accordance with another embodiment of the present invention implementing a post filter in the frequency domain.

**[FIG. 24]** FIG. 24 is a block diagram of a video decoder in accordance with another embodiment of the present invention implementing a post filter in the frequency domain.

**[FIG. 25]** FIG. 25 is a block diagram illustrating example filtering in the frequency domain as applied in an encoder or a decoder according to the present invention.

**[FIG. 26]** FIG. 26 is a block diagram of an example video encoder in accordance with the present invention implementing a loop filter in the frequency domain.

**[FIG. 27]** FIG. 27 is a block diagram of an example video encoder in accordance with the present invention implementing a loop filter in the frequency domain in addition to a deblocking filter.

**[FIG. 28]** FIG. 28 is a block diagram of an example video encoder in accordance with the present invention implementing a post filter design in the frequency domain.

**[FIG. 29]** FIG. 29 is a block diagram of an example video decoder in accordance with the present invention implementing a post filter design in the frequency domain.

**[FIG. 30]** FIG. 30 is a block diagram showing another example filtering in the frequency domain as applied in an encoder or a decoder according to the present invention.

**[FIG. 31A]** FIG. 31A is a schematic drawing illustrating an example of spatially neighboring non-overlapping blocks, which may be used for the filtering.

[FIG. 31B] FIG. 31B is a schematic drawing illustrating an example of spatially neighboring overlapping blocks, which may be used for the filtering.

[FIG. 32A] FIG. 32A is a schematic drawing illustrating an example of temporally neighboring blocks, which may be used for the filtering.

[FIG. 32B] FIG. 32B is a schematic drawing illustrating another example of temporally neighboring blocks, which may be used for the filtering.

[FIG. 33] FIG. 33 is a block diagram of an example video encoder in accordance with the present invention implementing filtering of prediction signal in the frequency domain.

[FIG. 34] FIG. 34 is a block diagram of an example video decoder in accordance with the present invention implementing filtering of prediction signal in the frequency domain.

[FIG. 35] FIG. 35 is a block diagram of a part of an example encoder in accordance with the present invention wherein the filtering is applied to a prediction error signal or to a prediction signal.

[FIG. 36] FIG. 36 is a block diagram of a part of an example encoder in accordance with the present invention wherein an IIR filtering is applied to a prediction error signal or to a prediction signal.

[FIG. 37] FIG. 37 is a schematic drawing of a system with an encoder and a decoder in accordance with the present invention.

[FIG. 38] FIG. 38 s a graph illustrating the results achieved by applying encoding and decoding in accordance with the present invention in comparison with state of the art encoding and decoding.

[FIG. 39A] FIG. 39A is a diagram illustrating an example of a transformation unit in accordance with the sixth embodiment.

[FIG. 39B] FIG. 39B is a flowchart of an example of processing performed by a filter unit in accordance with the sixth embodiment.

[FIG. 40A] FIG. 40A is a diagram illustrating another example of the transformation unit in accordance with the sixth embodiment.

[FIG. 40B] FIG. 40B is a flowchart of another example of the processing performed by the filter unit in accordance with the sixth embodiment.

[FIG. 41A] FIG. 41A is a diagram illustrating still another example of the transformation unit in accordance with the sixth embodiment.

[FIG. 41B] FIG. 41B is a flowchart of still another example of the processing performed by the filter unit in accordance with the sixth embodiment.

[FIG. 42] FIG. 42 is a schematic diagram showing the overall configuration of a content supply system for realizing content distribution service.

[FIG. 43] FIG. 43 is an external view of a cell phone.

[FIG. 44] FIG. 44 is a block diagram showing a structure example of the cell phone.

[FIG. 45] FIG. 45 is a schematic diagram showing an example of the overall configuration of a digital broadcast system.

[FIG. 46] FIG. 46 is a block diagram showing a structure example of a TV.

[FIG. 47] FIG. 47 is a block diagram showing a structure example of an information reproduction/recording unit which reads/writes information from/to a recording medium that is an optical disc.

[FIG. 48] FIG. 48 is a diagram showing a structure example of the recording medium that is an optical disc.

[FIG. 49] FIG. 49 is a block diagram showing a structure example of an integrated circuit that implements the image encoding method and the image decoding method in accordance with the respective embodiments.

**Best Mode for Carrying Out the Invention**

In accordance with the present invention, filter design and filtering of video signal is performed in the domain of spatial frequency (frequency domain). Moreover, information that is available at the encoder side but not at the decoder side is provided together with encoded video data in order to enable a decoder setting up the filtering appropriately. At a decoder in accordance with the present invention, a filter is set-up and the filtering is applied in the frequency domain block-wise.

Designing a filter for filtering the video signal and filtering in the frequency domain is especially advantageous in case that the noise is added in the frequency domain, too. This is indeed the case for the majority of today's video encoding methods that quantize and transmit/store video signal transformed in the frequency domain.

In the following, the advantage of a Wiener filter operating in the frequency domain compared to a Wiener filter operating in the spatial domain is demonstrated for an example encoding system encoding an one dimensional signal with two samples.

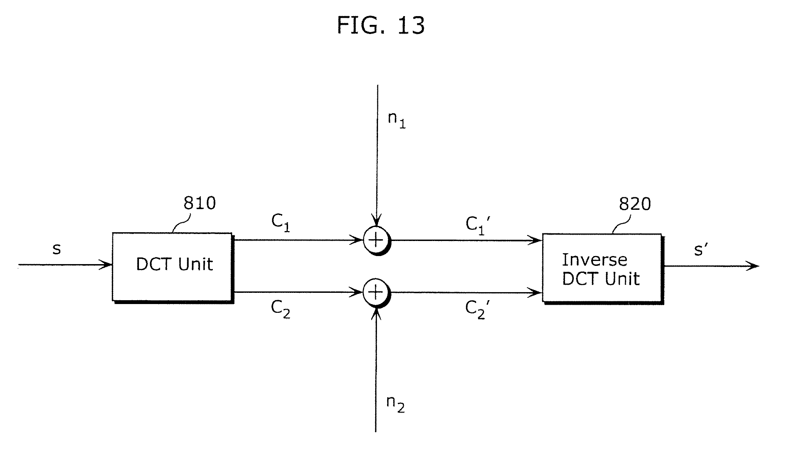

FIG. 13 shows the considered example encoding system, which employs quantization in the frequency domain. Signal s enters a DCT unit 810. The here-applied DCT unit 810 is a one-dimensional Discrete Cosine Transformation (DCT) with block size of 2. Accordingly, two consecutive samples $s(x)$ and $s(x+1)$ of the signal s are transformed into the frequency domain by the use of such DCT unit 810. The resulting two transformation coefficients $c_1$ and $c_2$ are given by the following equation 6.

[Mathematical Formula 6]

$$\begin{pmatrix} c_1 \\ c_2 \end{pmatrix} = \frac{1}{\sqrt{2}} \begin{pmatrix} 1 & 1 \\ 1 & -1 \end{pmatrix} \cdot \begin{pmatrix} s(x) \\ s(x+1) \end{pmatrix} \qquad \text{(Equation 6)}$$

The two transformation coefficients $c_1$ and $c_2$ are quantized independently resulting in the quantized transformation coefficients $c'_1$ and $c'_2$, which may thus be expressed as a sum of transformation coefficients $c_1$ and $c_2$ and noise $n_1$ and $n_2$, the noise $n_1$ and $n_2$ corresponding in this example to the quantization noise, as expressed by the following equation 7.

[Mathematical Formula 7]

$$\begin{pmatrix} c'_1 \\ c'_2 \end{pmatrix} = \begin{pmatrix} c_1 \\ c_2 \end{pmatrix} + \begin{pmatrix} n_1 \\ n_2 \end{pmatrix} \qquad \text{(Equation 7)}$$

An inverse DCT unit 820 generates reconstructed samples $s'(x)$ and $s'(x+1)$ by applying the inverse DCT to the quantized transformation coefficients $c'_1$ and $c'_2$. The reconstructed samples $s'(x)$ and $s'(x+1)$ are expressed by the following equation 8.

[Mathematical Formula 8]

$$\begin{pmatrix} s'(x) \\ s'(x+1) \end{pmatrix} = \frac{1}{\sqrt{2}} \begin{pmatrix} 1 & 1 \\ 1 & -1 \end{pmatrix} \cdot \begin{pmatrix} c_1 + q_1 \\ c_2 + q_2 \end{pmatrix} = \begin{pmatrix} s(x) \\ s(x+1) \end{pmatrix} + \frac{1}{\sqrt{2}} \begin{pmatrix} 1 & 1 \\ 1 & -1 \end{pmatrix} \cdot \begin{pmatrix} n_1 \\ n_2 \end{pmatrix}.$$

$$\text{(Equation 8)}$$

Since the discrete cosine transform is a unitary transform, the mean squared quantization error $E[(s-s')^2]$ in the spatial domain is the same as the mean squared quantization error $E[(c-c')^2]$ in the transformation (frequency) domain, which results for the example above in the following equation 9.

[Mathematical Formula 9]

$$E[(s-s')^2] = \frac{1}{2} \cdot \sum_{i=1}^{2} E[(c_i - c'_i)^2]. \qquad \text{(Equation 9)}$$

In the following, the noise reduction by a Wiener filter in the frequency domain is compared to the noise reduction by a Wiener filter in the spatial domain. In order to keep the comparison simple, the following assumptions are made. The two components $n_1$ and $n_2$ of the noise are zero mean and pair wise uncorrelated with the transformation coefficients $c_1$ and $c_2$. Signal $s$ is zero mean and at least wide sense stationary. Based on these assumptions, the first two moments of the quantization noise signal are:

[Mathematical Formula 10]

$$E[n_1] = E[n_2] = 0, \qquad \text{(Equation 10)}$$

[Mathematical Formula 11]

$$E[n_1^2] = \sigma_{n_1}^2, \qquad \text{(Equation 11)}$$

it is further assumed that there is no quantization applied to the transformation coefficient $c_2$

[Mathematical Formula 12]

$$E[n_2^2] = \sigma_{n_2}^2 = 0, \qquad \text{(Equation 12)}$$

the first two moments for components $s(x+i)=s_i$ of signal $s$ for each $i = 0,1,2,...$ are:

[Mathematical Formula 13]

$$E[s_i] = 0, \qquad \text{(Equation 13)}$$

[Mathematical Formula 14]

$$E[s_i^2] = \sigma_s^2, \qquad \text{(Equation 14)}$$

and the joint moments of the transformed signal $s$ and noise are

[Mathematical Formula 15]

$$E[c_1 \cdot n_1] = E[c_1 \cdot n_2] = E[c_2 \cdot n_1] = E[c_2 \cdot n_2] = 0. \qquad \text{(Equation 15)}$$

The correlation coefficient of two arbitrary consecutive samples $s_i$ and $s_{i+1}$ of the signal $s$ is
[Mathematical Formula 16]

$$\rho = \frac{E[s_i \cdot s_{i+1}]}{\sigma_s^2} \,. \qquad \text{(Equation 16)}$$

The noise reducing Wiener filter has the filter length of one and thus, only one filter coefficient. This filter coefficient is denoted $h_s$ in the case of filtering in the spatial domain and $h_c$ in the case of filtering in the frequency domain. With these assumptions, the variances of the transformation coefficients $c_1$ and $c_2$ are given by
[Mathematical Formula 17]

$$E[c_1^2] = \sigma_{c_1}^2 = \sigma_s^2 \cdot (1 + \rho)\,, \qquad \text{(Equation 17)}$$

[Mathematical Formula 18]

$$E[c_2^2] = \sigma_{c_2}^2 = \sigma_s^2 \cdot (1 - \rho)\,. \qquad \text{(Equation 18)}$$

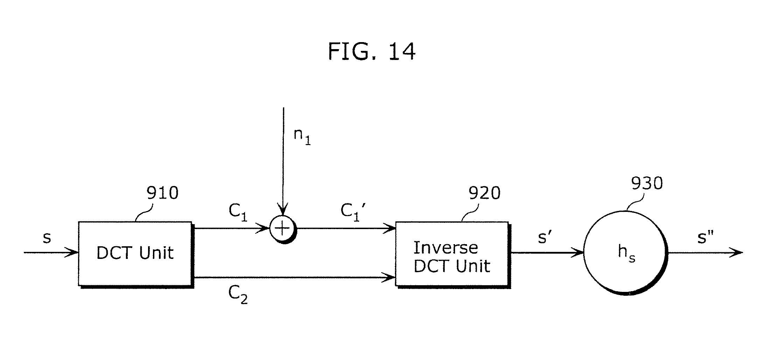

FIG. 14 illustrates a corresponding encoding system with quantization in the frequency domain and with a noise reducing Wiener filter with one filter coefficient in the spatial domain. The encoding system, comprising a DCT unit 910, a quantization unit, and an inverse DCT unit 920 has been simplified by applying the above assumptions and by using a noise reducing Wiener filter 930 with only one filter coefficient $h$, in the spatial domain. Due to the quantization of the transformation coefficient $c_1$, the mean squared error between the input signal $s$ and the signal $s'$ after filtering is
[Mathematical Formula 19]

$$\sigma_q^2 = E[(s - s')^2] = \frac{1}{2} \cdot (\sigma_{n_1}^2 + \sigma_{n_2}^2) = \frac{\sigma_{n_1}^2}{2}\,. \qquad \text{(Equation 19)}$$

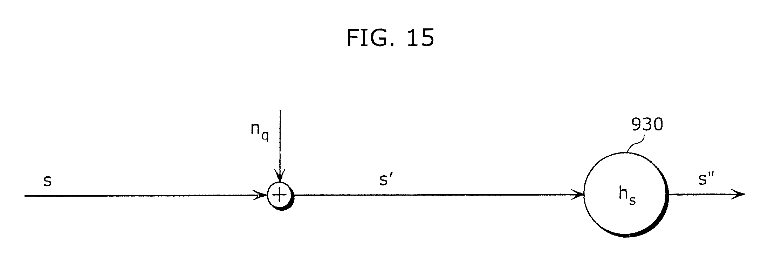

The encoding system shown in FIG. 15 is equivalent to the encoding system shown in FIG. 14. A noise signal $n_q$ of zero mean, variance $\sigma_q^2 = \dfrac{\sigma_{n_1}^2}{2}$ and correlation $E[s \cdot n_q]=0$, which is equivalent to the noise $n_1$ inserted in the frequency domain, is added to the signal sin the spatial domain.

The filter coefficient $h_s$ that minimizes the mean squared error between the input signal $s$ and the signal $s''$ after filtering, which means that $E[s - s'')^2] \to \min$, can be calculated by setting the following derivative to zero:
## [Mathematical Formula 20]

$$\frac{dE\left[(s-s'')^2\right]}{dh_s} = \frac{dE\left[\left(s-(s+n_q)\cdot h_s\right)^2\right]}{dh_s} = 0 . \qquad \text{(Equation 20)}$$

Solving of the above equation 20 provides the optimum value of filter coefficient $h_s$ that minimizes the mean squared error as follows.

## [Mathematical Formula 21]

$$h_s = \frac{\sigma_s^2}{\sigma_s^2 + \sigma_q^2} \qquad \text{(Equation 21)}$$

The corresponding minimum mean squared error between the signal s and the signal $s''$ after the noise reducing Wiener filtering using the optimum value of filter coefficient $h_s$ in the spatial domain is given by

## [Mathematical Formula 22]

$$MSE_{Spatial} = E\left[(s-s'')^2\right] = \sigma_s^2 \cdot \left(1-h_s^2\right) + h_s^2 \cdot \sigma_q^2 = \sigma_s^2 \cdot \left(1-h_s^2\right) + \frac{1}{2}\cdot h_s^2 \cdot \sigma_{n_1}^2 .$$

$$\text{(Equation 22)}$$

FIG. 16 shows an encoding system applying quantization in the frequency domain after DCT of a DCT unit 1110 and applying Wiener filtering of a noise reducing Wiener filter 1130 with one coefficient $h_s$ after the transformation (in the frequency domain). Inverse DCT is performed at an inverse DCT unit 1120 for the signal $c_1$ provided from the Wiener filter 1130.

Due to the quantization of the transformation coefficient $c_1$ and under the same above assumptions, the mean squared error between the transformed signal $c_1$ and the transformed quantized signal $c'_1$ is $\sigma_{n_1}^2$.

The filter coefficient $h_c$ of the Wiener filter 1130 that minimizes the mean squared error between the transformed signal $c_1$ and the transformed quantized signal $c''_1$ after filtering, which means that $E[(c_1 - c''_1)^2] \rightarrow \min$, can be calculated by setting the following derivative term to zero:

## [Mathematical Formula 23]

$$\frac{dE\left[(c_1-c''_1)^2\right]}{dh_c} = \frac{dE\left[\left(c_1-(c_1+n_1)\cdot h_c\right)^2\right]}{dh_c} = 0 . \qquad \text{(Equation 23)}$$

Solution of the above equation 23 provides the optimum value of the filter coefficient $h_c$, which minimizes the mean squared error:

## [Mathematical Formula 24]

$$h_c = \frac{\sigma_{c_1}^2}{\sigma_{c_1}^2 + \sigma_{n_1}^2} \cdot \qquad \text{(Equation 24)}$$

The corresponding minimum mean squared error between the signal $c_1$ and the signal $c''_1$ filtered by the Wiener filter with the optimum filter coefficient $h_c$ is given by:
## [Mathematical Formula 25]

$$E\left[(c_1 - c''_1)^2\right] = \sigma_{c_1}^2 \cdot \left(1 - h_c^2\right) + h_c^2 \cdot \sigma_{n_1}^2 \cdot \qquad \text{(Equation 25)}$$

Accordingly, the minimum mean squared error between the signal $s$ and the signal $s''$ with the noise reducing Wiener filter 1130 in the frequency domain is
## [Mathematical Formula 26]

$$MSE_{Frequency} = E\left[(s - s'')^2\right] = \frac{1}{2} \cdot \sigma_{c_1}^2 \cdot \left(1 - h_c^2\right) + \frac{1}{2} \cdot \sigma_{n_1}^2 \cdot h_c^2 = \frac{1}{2} \cdot \sigma_s^2 \cdot (1 + \rho) \cdot \left(1 - h_c^2\right) + \frac{1}{2} \cdot \sigma_{n_1}^2 \cdot h_c^2$$

$$\text{(Equation 26)}$$

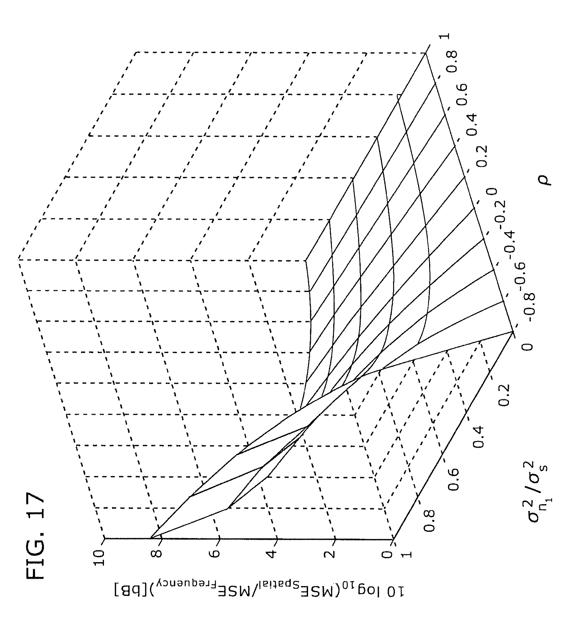

FIG. 17 provides comparison between the minimum mean squared error resulting from filtering in the spatial domain and the minimum mean squared error resulting from filtering in the frequency domain for the above examples. The graph shows the following equation 27.
## [Mathematical Formula 27]

$$10 \cdot \log_{10} \frac{MSE_{Spatial}}{MSE_{Frequency}} \qquad \text{(Equation 27)}$$

More specifically, the reduction of the minimum mean squared error that is achieved by the Wiener filter 1130 applied to the signal $c_1$ in the frequency domain is shown in comparison to the Wiener filter 930 applied to the signal $s'$ in the spatial domain with respect to the value of the correlation coefficient $p$ and to the variance of the quantization noise $n_1$ normalized by the variance of the signal $s$.
As can be seen from the graph for this example, the mean squared error can be reduced in all cases where the correlation coefficient p is unequal to 1 and the variance of quantization noise is larger than zero. This example for a one-dimensional signal with two samples thus demonstrates that filtering in the domain where the noise has been inserted results in reduced mean squared error.
Based on these considerations, the present invention provides a video encoder and a video decoder, a method for encoding and a method for decoding of video signal, wherein the filter design and the filtering is performed in the frequency domain.
At the video encoder side, the filter design is performed in frequency domain and filter information for filtering the video signal in the frequency domain are provided to the video decoder side. At the video decoder, the filter is set up with filter information and applied block-wise in the frequency domain.

In order to ensure similar operation of the video encoder and the video decoder, in accordance with a preferred embodiment of the present invention, the filter information is provided at the video encoder together with the encoded video data. The video decoder is capable of obtaining the filter information and to set up the filter characteristics accordingly.

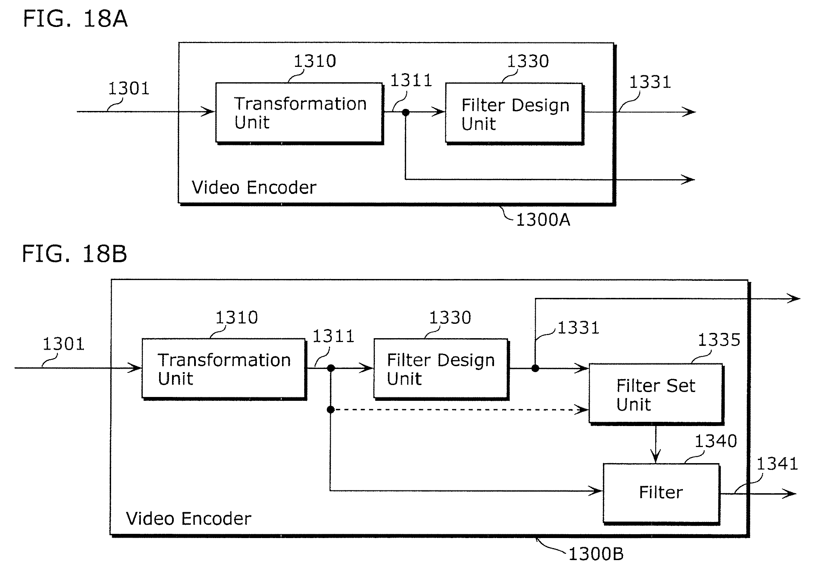

FIGS. 18A and 18B schematically illustrate video encoders 1300A and 1300B in accordance with the present invention. The video encoder 1300A includes: a transformation unit 1310 that transforms a video signal 1301 into the frequency domain; and a filter design unit 1330 that generates filter information 1331 based on a video signal 1311 transformed into the frequency domain.

The video signal 1301 here refers to a two-dimensional signal such as pixel values or prediction error values if predictive encoding is applied. The transformation for transforming the video signal into the frequency domain can be any transformation such as Fourier, discrete cosine, Karhunen-Loève transformation, or any fast and/or integer version of such transformations.

The video signal 1311, which is transformed into the frequency domain, is then used for the filter design unit 1330 that determines the filter information 1331 used for filtering of the video signal in the frequency domain. Such filter information 1331 may be filter coefficients and/or offset of the video signal in frequency domain. However, such filter information 1331 may also be any statistical information related to the transformed video signal in the frequency domain that can be used to calculate the filter coefficients and/or set-up the filter. The filter information 1331 may also be determined based on quantized and non-quantized transformation coefficients, if quantization is applied after the transformation (either as a part of the transformation unit or the filter design unit 1330).

The filter information 1331 are then provided to a video decoder side. Hereby, the advantage of providing the filter information 1331 to the video decoder side is the possibility of providing a video decoder with information for setting-up the filter that cannot be obtained by the video decoder itself. Such information is, for instance, information related to a video signal before any lossy compression has been made.

Both, the filter information 1331 and the video signal 1311 transformed into the frequency domain may be further encoded. The filter design unit 1330 preferably also uses the encoded and/or compressed video signal in the frequency domain to determine the filter information 1331 as will be explained with respect to particular embodiments of the present invention.

The video encoder 1300B illustrated in FIG. 18B further includes: a filter 1340 that applies filtering to the video signal 1311 transformed into the frequency domain; and a filter set unit 1335 that sets the filter 1340 to the filter information 1331 generated at the filter design unit 1330.

The setting-up the filter 1340 includes providing to the filter parameters such as filter coefficients, video signal offsets, which define the filtering operation to be performed. These parameters are either obtained with the filter information 1331 or calculated based on the filter information 1331 and possibly also based on the transformed video signal 1311.

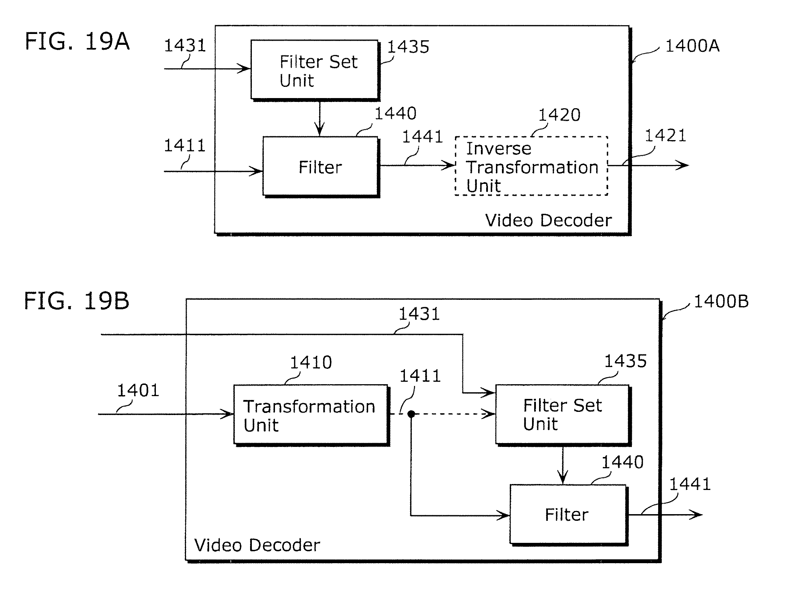

FIG. 19A schematically illustrates video decoders 1400A and the 1400B in accordance with the present invention. The video decoder 1400A illustrated in FIG. 19A includes: a filter 1440 that applies filtering to a video signal 1411 in the frequency domain; a filter set unit 1435 that sets up the filter 1440; and an inverse transformation unit 1420 that transforms the video signal 1411 in the frequency domain to which filtering has been applied at the filter 1440, to a video signal 1421 in the spatial domain.

Filter information 1431 and the video signal 1411 are provided to the video decoder 1400A. The filter information 1431 is provided by the video encoder side, for instance by one of the video encoders 1300A and 1300B shown in FIGS. 18A and 18B. The filter information 1431 is used to set up the filter 1440, which is used to filter the video signal 1411 in the frequency domain.

If a video signal 1401 entering the video decoder 1400B is not in the frequency domain, it has to be first transformed at a transformation unit 1410 into the video signal 1411 in the frequency domain, as shown in FIG. 19B. The filter set unit 1435 may set up the filter 1440 by using the video signal 1411 transformed into the frequency domain in addition to the filter information 1431.

The filtered video signal 1441 in the frequency domain may be inversely transformed at the inverse transformation unit 1420 to the spatial domain, or may be further processed. However, the filter set unit 1435 may set up the filter 1440 without obtaining or considering the filter information 1431. The filtering at the filter 1440 is applied block-wise.

(First Embodiment)

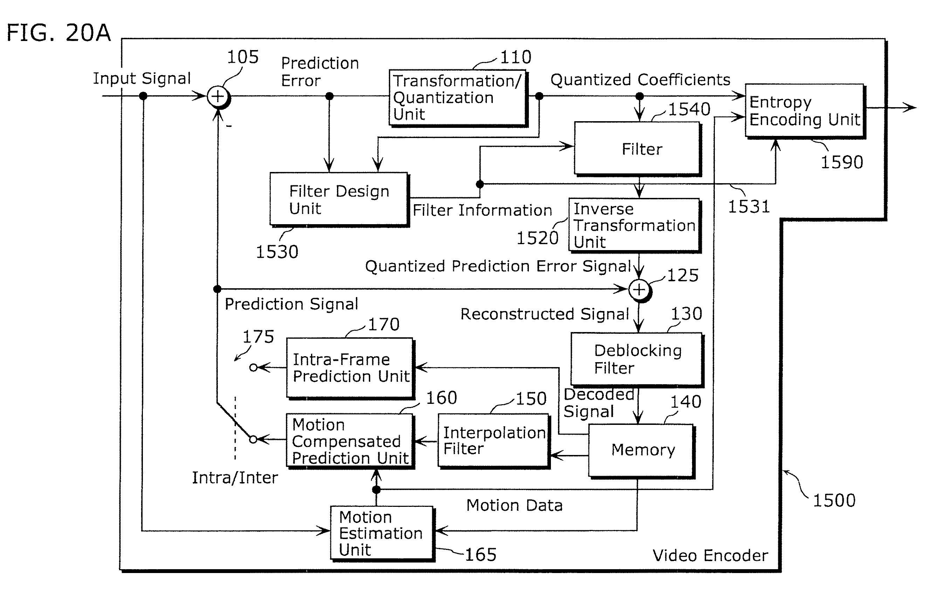

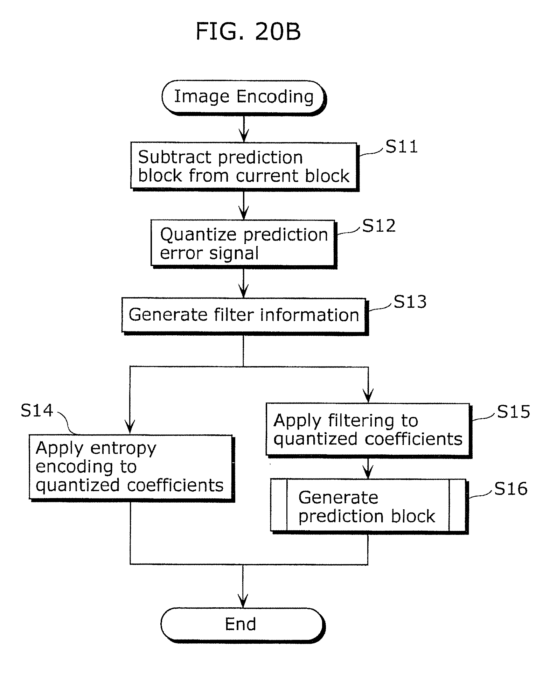

The video encoder 1500 in accordance with the first embodiment of the present invention is described with reference to FIG. 20A and FIG. 20B. FIG. 20A is a functional block diagram of the video encoder 1500. FIG. 20B is a flowchart of processing performed by the video encoder 1500.

The processing of generating an encoded signal in accordance with the first embodiment includes processing of (i) subtracting a prediction signal from a video signal so as to generate a prediction error signal, (ii) transforming the prediction error signal from the spatial domain into the frequency domain, and (iii) quantizing the signal transformed in the frequency domain so as to generate a quantized coefficient. Furthermore, the filter information is determined to minimize a mean squared error between (a) the prediction error signal in the frequency domain and (b) the quantized prediction error signal in the frequency domain to which filtering has been applied.

The video encoder 1500 includes, as illustrated in FIG. 20A, a subtractor 105, a transformation/quantization unit 110, an adder 125, a deblocking filter 130, an inverse transformation unit 1520, a filter design unit 1530, a filter 1540, an entropy encoding unit 1590, an output unit (not shown) that outputs an encoded signal, and a prediction block generation unit (not shown).

The video encoder 1500 encodes a video signal as an input signal so as to output an encoded signal. The output destination of the encoded signal is not limited. For example, the video encoder 1500 may provide the encoded signal to a recording medium such as a Digital Versatile Disc (DVD) or a Blu-ray Disc (BD), or transmit the encoded signal to the video decoder 1600 via a transmission path.

The subtractor 105 generates a prediction error signal by subtracting a prediction block (prediction signal) from a current block to be encoded (input signal). The transformation/quantization unit 110 applies Discrete Cosine Transformation (DCT) to the prediction error signal, and quantizes the signal to generate a quantized coefficient. The entropy encoding unit 1590 applies entropy encoding to the quantized coefficient so as to generate an encoded signal. It should be noted that the entropy encoding may be applied not only to the quantized coefficient but also to motion compensation data generated at the motion estimation unit 165, the filter information 1531 generated at the filter design unit 1530, and the like.

The filter design unit 1530 generates the filter information 1531 that includes a filter coefficient and first and second offset values. More specifically, each piece of filter information is determined to minimize a mean squared error between (a) a video signal transformed into the frequency domain and (b) a signal in the frequency domain to which filtering has been applied at the filter 1540. The filter information 1531 is provided to the filter 1540, and also outputted via the entropy encoding unit 1590. It should be noted that the filter information 1531 needs to include at least the filter coefficient and the second offset value, and that the first offset value may be eliminated.

The filter 1540 applies filtering to the quantized signal in the frequency domain by using the filter information. More specifically, processing of canceling, for each frequency component, noise superimposed during the quantization is applied. The filter 1540 in accordance with the first embodiment inversely quantizes the quantized coefficient generated at the transformation/quantization unit 110. Then, the noise superimposed during the quantization is canceled for each frequency component. The filtering will be described in more detail later.

The inverse transformation unit 1520 applies inverse DCT to the quantized coefficient, which has been filtered at the filter 1540 and inversely quantized, so as to generate a quantized prediction error signal. The adder 125 adds a prediction block to the quantized prediction error signal so as to generate a reconstructed signal. The deblocking filter 130 cancels block distortion from the reconstructed signal.

Based on image encoded before a current block to be encoded (input signal), the prediction block generation unit generates a prediction block that is generated by predicting the current block. The prediction block generation unit includes the memory 140, an interpolation filter 150, a motion estimation unit 165, a motion compensated prediction unit 160, an intra-frame prediction unit 170, and the switch 175.

The memory 140 serves as a delay device in which a decoded signal is temporarily stored. More specifically, the memory 140 sequentially stores blocks which have been quantized at the transformation/quantization unit 110 and inversely quantized, thereby storing one picture. The interpolation filter 150 spatially interpolates a pixel value of a decoded signal, prior to motion compensated prediction. The motion estimation unit 165 performs motion estimation based on the decoded signal and a next block to be encoded, so as to generate motion data (motion vector). The motion compensated prediction unit 160 performs motion compensated prediction based on the decoded signal and the motion data so as to generate a prediction block. The intra-frame prediction unit 170 applies intra-frame prediction to the decoded image to generate a prediction signal. The switch 175 selects, as a prediction mode, one of an "intra" mode or an "inter" mode. Then, the prediction block provided from the switch 175 is a signal that predicts the next block to be encoded.

Next, the processing performed by the video encoder 1500 is described with reference to FIG. 20B.

First, the subtractor 105 subtracts a prediction signal from an input signal to generate a prediction error signal (S11). Next, the transformation/quantization unit 110 applies DCT to the prediction error signal and quantizes the signal to generate a quantized coefficient (S12).

Next, the filter design unit 1530 obtains the prediction error signal and the quantized coefficient to generate the filter information 1531. More specifically, the filter design unit 1530 applies transformation (DCT) to the prediction signal, and inversely quantizes the quantized coefficient. Then, the filter design unit 1530 generates the filter information 1531 to minimize a mean squared error between (a) a prediction signal in the frequency domain and (b) a signal that has been inversely quantized and filtered.

Next, the entropy encoding unit 1590 applies entropy encoding to the quantized coefficient, the motion data, and the filter information 1531 so as to generate an encoded signal (S14). It should be noted that the filter information 1531 may be entropy-encoded together with the quantized coefficient and the like, or may be outputted separately from them. On the other hand, in parallel to the processing of the entropy encoding unit 1590, the filter 1540 applies filtering to the quantized coefficient by using the filter information 1531 (S15).

Next, the inverse transformation unit 1520 applies inverse DCT to an output signal of the filter 1540 so as to generate a quantized prediction error signal. The adder 125 adds a prediction block to the quantized prediction error signal so as to generate a reconstructed signal. The deblocking filter 130 cancels block distortion from the reconstructed signal to generate a decoded signal. Then, the prediction block generation unit generates a prediction block based on the decoded signal (S16).

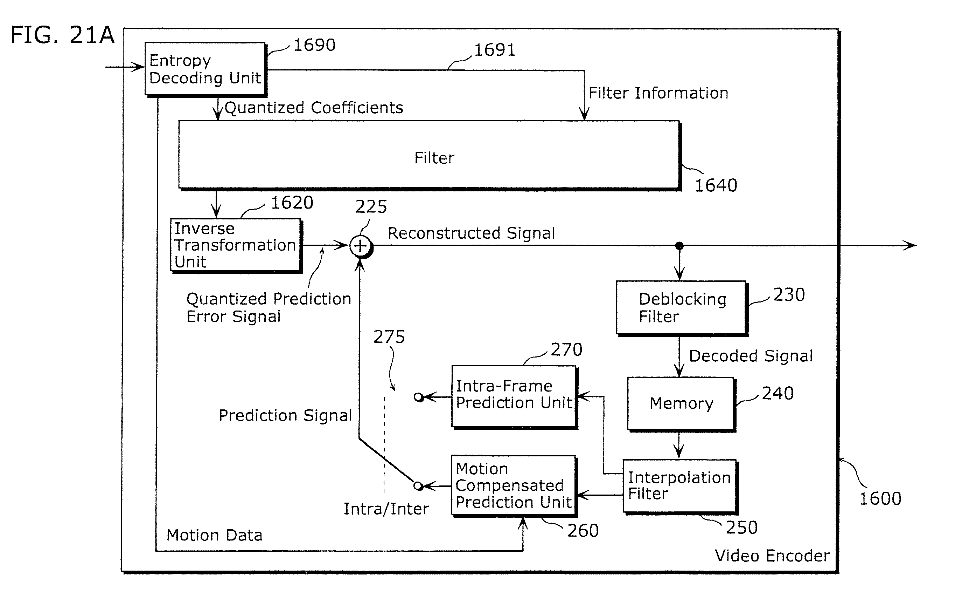

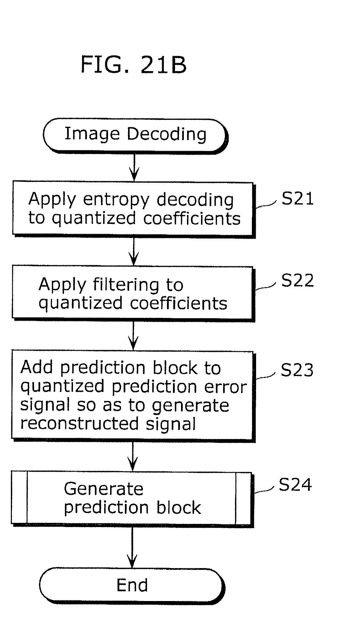

Next, a structure and processing of the video decoder 1600 in accordance with the first embodiment of the present invention are described with reference to FIG. 21A and FIG. 21B. FIG. 21A is a functional block diagram of the video encoder 1600. FIG. 21B is a flowchart of processing performed by the video decoder 1600.

An encoded signal in accordance with the first embodiment is generated by transforming a video signal from the spatial domain into the frequency domain, quantizing the transformed signal, and entropy encoding the quantized signal. Furthermore, the processing of generating a decoded signal includes processing of applying entropy decoding to the encoded signal so as to generate a quantized coefficient as the decoded signal. Moreover, the filtering includes processing of filtering the quantized coefficient and inversely quantizing the quantized coefficient.

The video decoder 1600 includes, as illustrated in FIG. 21A, an obtainment unit that obtains an encoded signal, an entropy decoding unit 1690, a filter 1640, an inverse transformation unit 1620, an adder 225, a deblocking filter 230, and a prediction block generation unit (not shown). The video decoder 1600 decodes the encoded signal generated at the video encoder 1500 illustrated in FIG. 20A so as to generate a decoded block (decoded signal).

The entropy decoding unit 1690 applies entropy decoding to the encoded signal provided from the video encoder 1500 so as to obtain a quantized coefficient, motion data, and filter information 1691. Likewise the filter 1540, the filter 1640 filters the quantized coefficient by using the filter information 1691.

The inverse transformation unit 1620 applies inverse DCT to the signal provided from the filter 1640 so as to generate a quantized prediction error signal. The adder 225 adds a prediction signal provided from the prediction block generation unit to the quantized prediction error signal provided from the inverse transformation unit 1620, so as to generate a reconstructed signal. The deblocking filter 230 applies deblocking filtering to the reconstructed signal provided from the adder 225 to smooth edges of the block so as to improve subjective image quality.

The prediction block generation unit includes the memory 240, an intra-frame prediction unit 270, a motion compensated prediction unit 260, an interpolation filter 250, and the switch 275. The prediction block generation unit basically has the same structure and processing as described previously, but differs from the previously-described prediction block generation unit in that the motion estimation unit 165 is eliminated and that motion data is obtained from the entropy decoding unit 1690.

Next, the processing performed by the video decoder 1600 is described with reference to FIG. 21B.

First, the entropy decoding unit 1690 applies entropy decoding to an encoded signal so as to obtain a quantized coefficient, motion data, and the filter information 1691 (S21). Next, the filter 1640 applies filtering to the quantized coefficient by using the filter information 1691 (S22).

Next, the inverse transformation unit 1620 applies inverse DCT to the signal provided from the filter 1640 so as to generate a quantized prediction error signal. Next, the adder 225 adds a prediction block to the quantized prediction error signal so as to generate a reconstructed signal (S23). Furthermore, the deblocking filter 230 cancels block distortion from the reconstructed signal. Next, the prediction block generation unit generates a prediction block (S24). In accordance with the embodiment of the present invention, the filter design and filtering in the frequency domain is employed for loop filtering. FIGS. 20A and 21A illustrate examples of such video encoder 1500 and video decoder 1600, respectively.

Based on the (transformed) prediction error signal and on the corresponding quantized transformation coefficients, the filter design unit 1530 estimates the filter coefficients which are used by the frequency filter 1540 to filter the quantized transformation coefficients. The filter coefficients may then be provided to the entropy encoding unit 1590 within the new loop filter information 1531 for encoding. However, it may not be necessary to provide/encode the filter coefficients themselves.

The new loop filter information 1531 should in general comprise the information necessary to set up the filter at the video decoder 1600 side in a similar way as at the video encoder 1500. It may be any information enabling video decoder 1600 to determine the filter coefficients.

The entropy encoding unit 1590 may use an integer variable length code such as Exp-Golomb, Golomb, unitary code or a code designed taking into account the particular statistics of the new loop filter information to be encoded. The encoded new loop filter information is then provided together with the other encoded video data to the video decoder 1600 side. The filtered transformation coefficients at the video encoder 1500 are inversely transformed at the inverse transformation unit 1520 to obtain the filtered and quantized prediction error signal.

At the video decoder 1600, the new loop filter information 1691 is decoded by the entropy decoding unit 1690 and provided to the filter 1640 which performs filter design and filtering. The filter design unit is necessary to calculate the filter coefficients based on the new loop filter information in case they are not directly provided by the video encoder 1500. The filter 1640 is the set up using the so calculated filter coefficients or directly from the entropy decoding unit 1690 obtained filter coefficients and possibly other necessary data obtained within the new loop filter information 1691.

The quantized transformation coefficients are then filtered by the filter 1640 and inversely transformed by the inverse transformation unit 1620 resulting in the corresponding filtered and quantized prediction error signal values, which are further added to the prediction signal to obtain the reconstructed signal. The reconstructed signal may further be filtered, for instance, by a deblocking filter 230.

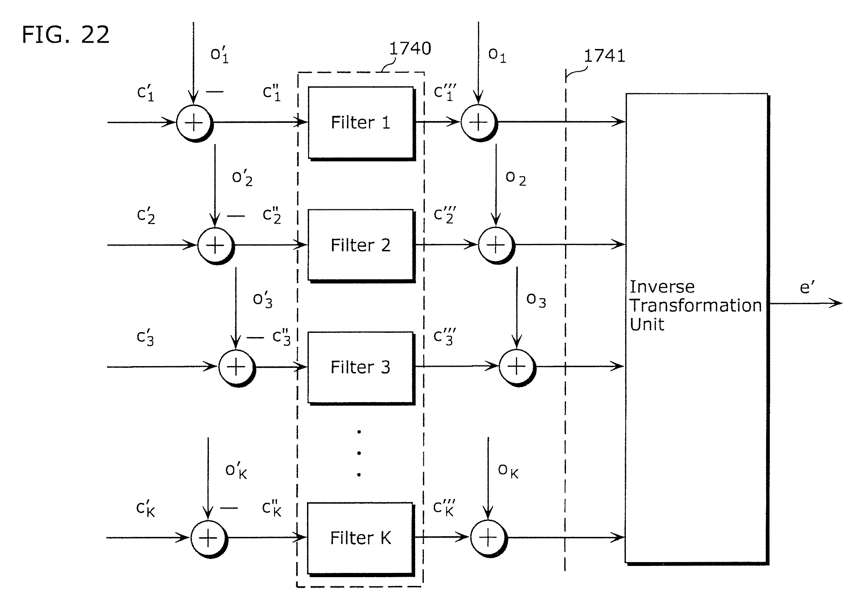

FIG. 22 shows the details of the example filtering performed by the filters 1540 and 1640 in the frequency domain employed in the video encoder 1500 and/or video decoder 1600. From the $K$ quantized transformation coefficients $c_1' .. , c_k'$, individual offsets $o_1', ..., o_k'$ (hereinafter, corresponding to the first offset) are subtracted resulting in the transformation coefficients $c_1'', ..., c_k''$ without offset. Preferably, the offsets $o_1', ..., o_k'$ correspond to the mean values $E[c_1'], ..., E[c_k']$ of the respective quantized transformation coefficients $c_1'..., c_k'$.

Each transformation coefficient $c_1'', ..., c_k''$ is then filtered by the filter 1740 resulting in $K$ quantized transformation coefficients $c_1''', ..., c_k'''$. Here, the filter 1740 includes independent filters $1, ..., K$ which correspond to $c_1'', ..., c_k''$, respectively. For the filters $1, ..., K$, respective filter coefficients adapted to the respective $c_1'', ..., c_k''$ are set.

After filtering, to each of the $K$ filtered transformation coefficients $c_1''', ..., c_k'''$, a respective individual offset $o_1, ..., o_k$ (hereinafter, corresponding to the second offset) is added. The offsets $o_1, ..., o_k$ are preferably the mean values of the transformation coefficients $c_1, ..., c_k$ of the original prediction error signal $s$. The resulting transformation coefficients 1741 are inversely transformed at the inverse transformation unit 1520 or 1620. The output signal $e'$ provided from the inverse transformation unit 1520 or 1620 corresponds to quantized and filtered prediction error values (residuals).

At the video encoder 1500, the filter coefficients $w_{1,k}, ..., w_{M,k}$ for filtering of each of the $K$ transformation coefficients ($k = 1, ..., K$) with a filter of $M$-th order (given by the $M$ filter coefficients) are calculated, for instance, as a Wiener filter. In order to allow the video decoder 1600 to perform the same filtering as the video encoder 1500, the filter information 1531 contains the offsets $o_1, ..., o_k$ and the filter coefficients $w_{1,k}, ..., w_{M,k}$.

The filtering shown in FIG. 22 includes: executing, for each of blocks included in a decoded signal, weighted addition for (a) a value of each frequency component of a to-be-processed block and (b) a value of a corresponding frequency component in a temporally and spatially neighboring block of the to-be-processed block (the corresponding frequency component in the neighboring block corresponds to a target frequency component in the current block), by using a weight coefficient included in filter information; subtracting the first offset value from a value of each frequency component, for the to-be-processed block for which the weighted addition has not yet been executed; and adding the second offset included in the filter information to a value of each frequency component, for the to-be-processed block for which the weighted addition has been executed.

Here, the weight coefficient is determined to minimize a mean squared error between (a) a to-be-processed block in the frequency domain for which the filtering has been applied and (b) a block corresponding to the to-be-processed block included in the video signal in the frequency domain. Furthermore, the first offset value is calculated for each frequency component, by using a plurality of temporally and spatially consecutive blocks including the to-be-processed block, among blocks included in the decoded signal in the frequency domain. Moreover, the second offset value is calculated for each frequency component, by using a plurality of temporally and spatially consecutive blocks including the to-be-processed block, among blocks included in the decoded signal in the frequency domain.

More specifically, the filters 1540 and 1640 are applied to signal block-wise, to which quantization is to be applied. In other words, $c_1', ..., c_k'$ corresponds to a value (namely, $k = 64$) of each frequency component of a transformation coefficient.

In the first process of the filtering, the first offset value $o_1', ..., o_k'$ is subtracted from a value $c_1', ..., c_k'$ of each frequency component of a quantized coefficient. The first offset value $o_1', ..., o_k'$ is a value that is generated by extracting the value $c_1', ..., c_k'$ of each frequency component of a quantized coefficient from the temporally and spatially consecutive blocks, and averaging the value for each same frequency component.

Next, in the second process in the filtering, the quantized coefficient $c_1'', ..., c_k''$ that is generated by subtracting the first offset value $o_1', ..., o_k'$ is inversely quantized, and then filtered by the filter 1740. The filter 1740 includes filters $1, ..., K$ for respective frequency components, and the filters are provided with respective filter coefficients $w_1, ..., w_k$. Here, the filter coefficient $w_k$ includes $M$ (for example, $M = 9$) weight coefficients $w_{1,k}, ..., w_{M,k}$. The weight coefficients are used to perform weighted addition for (a) a value of each frequency component of a to-be-processed block and (b) a value of a corresponding frequency component in a temporal and spatial neighboring block of the to-be-processed block (the corresponding frequency component in the neighboring block corresponds to a target frequency component in the current block).

Here, the weight coefficient $w_{1,k}, ..., w_{M,k}$ is determined to minimize a mean squared error between (a) the filtered transformation coefficient $c_1''', ..., c_k'''$ provided from the filter 1740 and (b) a value $c_1-o_1, ..., c_k-o_k$ that is generated by subtracting the second offset value $o_1, ..., o_k$ from the transformation coefficient $c_1, ..., c_k$ of the original prediction error signal *s*.

Next, in the third process of the filtering, the second offset value $o_1, ..., o_k$ is added to the filtered transformation coefficient $c_1''', ..., c_k'''$. The second offset value $o_1, ..., o_k$ is a value that is generated by extracting the transformation coefficient $c_1, ..., c_k$ of the original prediction error signal s from the temporally and spatially consecutive blocks, and averaging the value for each same frequency component.

Alternatively to sending the filter coefficients, information necessary for obtaining the filter coefficients may be sent, which cannot be obtained at the video decoder 1600. Such information is any information related to the input transformation coefficients $c_1, ..., c_k$ quantization which can be used to calculate the filter coefficients $w_{1,k}, ..., w_{M,k}$. In case of the Wiener filter design, for instance, a cross correlation vector between the input transformation coefficients and the filtered transformation coefficients may be sent, or autocorrelation of the noise, etc. Providing the offsets $o_1, ..., o_k$ together with the encoded video signal improves the quality after the filtering. However, implementations of the present invention without sending the offsets $o_1, ..., o_k$ are also possible.

In this example, the filter order *M* is equal for the individual coefficient filters for filtering of individual transformation coefficients. However, it may be an advantage if the filter order for filtering different transformation coefficients differs. The particular filter orders $M_1, ..., M_k$ for different transformation coefficients may then be fixed (default or set within the video encoder/video decoder settings), or signalized together with the filter information.

(Second Embodiment)

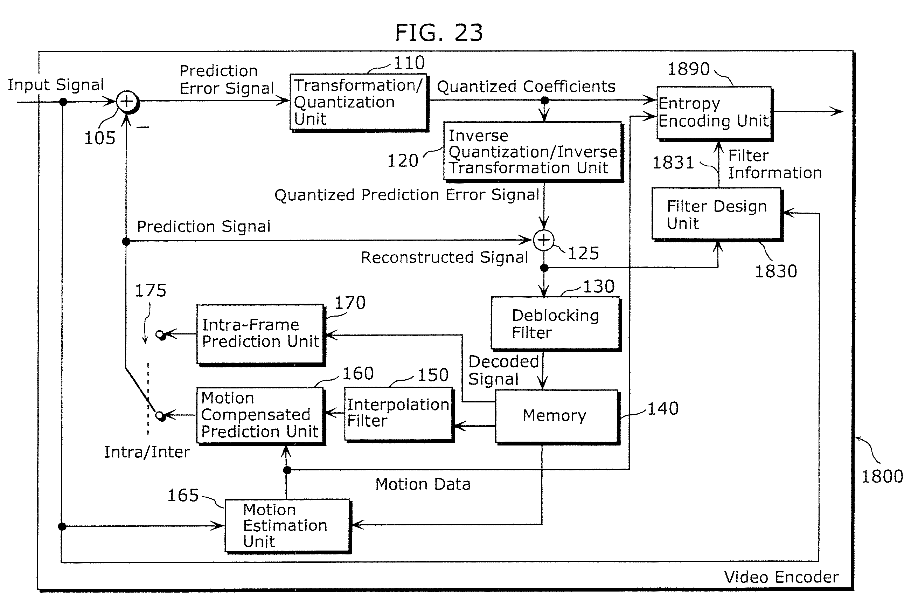

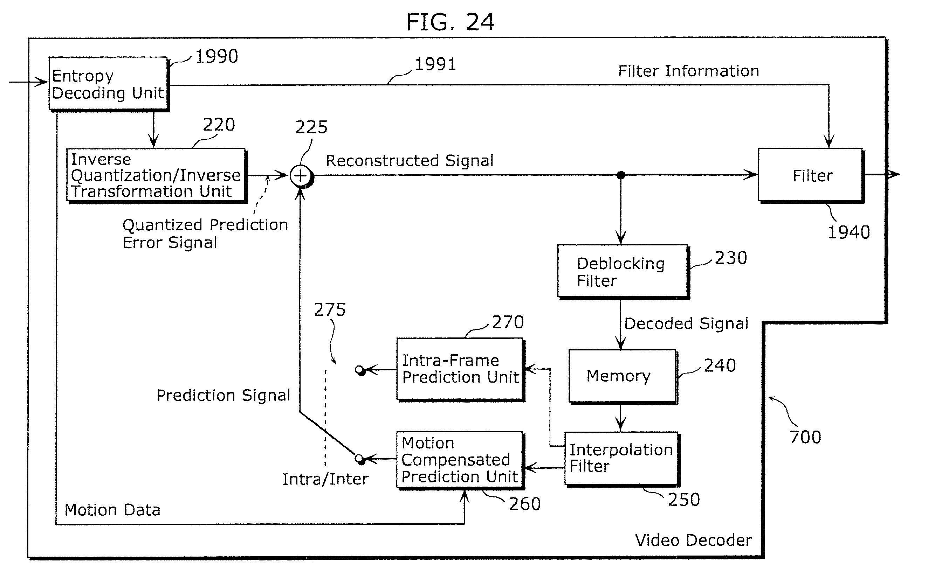

A video encoder 1800 and a video decoder 1900 in accordance with the second embodiment of the present invention are described with reference to FIG. 23 and FIG. 24. In accordance with the second embodiment of the present invention, the filter design and filtering in the frequency domain is applied to a post filter, which operates on the reconstructed image/video signal. FIG. 23 and FIG. 24 illustrate such a video encoder 1800 and a video decoder 1900, respectively. Here, the same reference numerals assigned to the units in the video encoder 1500 and the video decoder 1600 in accordance with the first embodiments are assigned to the identical units of the second embodiment, so that the identical units are not explained again below.

The processing of generating an encoded signal in accordance with the second embodiment includes processing of quantizing a video signal in the frequency domain and inversely quantizing the resulting signal to generate a reconstructed signal. Furthermore, filter information is determined to minimize a mean squared error between (a) the video signal in the frequency domain and (b) the reconstructed signal in the frequency domain to which filtering has been applied.

As illustrated in FIG. 23, the video encoder 1800 differs from the video encoder 1500 illustrated in FIG. 20A in that the filter design unit 1530 and the filter 1540 are eliminated and a filter design unit 1830 is included instead.

The filter design unit 1830 generates filter information 1831 used by a filter 1940 in the video decoder 1900. More specifically, the filter design unit 1830 obtains an input signal and a reconstructed signal and transforms each of them into the frequency domain. Then, the filter design unit 1830 determines the filter information 1831 to minimize a mean squared error between (a) the input signal in the frequency domain and (b) the reconstructed signal in the frequency domain to which filtering has been applied by the filter 1940.

As illustrated in FIG. 24, the video decoder 1900 differs from the video decoder 1600 illustrated in FIG. 6A in that the filter 1640 is eliminated and the filter 1940 is included instead.

An encoded signal in accordance with the second embodiment is generated by subtracting a prediction signal from a video signal, transforming the resulting signal from the spatial domain into the frequency domain, quantizing the transformed signal, and entropy encoding the quantized signal. Furthermore, processing of generating a decoded signal includes processing of entropy decoding an encoded signal, inversely quantizing the resulting signal, inversely transforming the resulting signal from the frequency domain into the spatial domain, and adding a prediction signal to the resulting signal to generate a reconstructed signal as the decoded signal. Furthermore, filtering includes (i) processing of transforming a reconstructed signal from the spatial domain into the frequency domain, (ii) processing of filtering the reconstructed signal in the frequency domain, (iii) and processing of inversely transforming the filtered reconstructed signal from the frequency domain into the spatial domain.

The filter 1940 transforms a reconstructed signal, which is provided from the adder 225, from the spatial domain into the frequency domain, then filters the signal in the frequency domain by using filter information 1991, and inversely transforms the filtered signal from the frequency domain into the spatial domain.

The filter design unit 1830 for designing the post filter in the frequency domain implemented within the video encoder 1800 provides new post filter information 1831 to an entropy encoding unit 1890. The new post filter information 1831 here may contain directly the filter coefficients, or any other information, which enables video decoder 1900 to calculate the post filter coefficients.

At the video encoder 1800 side, post filtering does not need to be applied since it is not used in the prediction loop. The filter design unit 1830 calculates the filter coefficients or the other relevant information to be provided based on the input signal and on the reconstructed signal. The filter coefficients may be estimated, for instance, as Wiener filter coefficients, or, alternatively, statistical data such as cross correlation between the input signal and the reconstructed signal, autocorrelation of the noise, or correlation between the noise and the signal may be provided.

At the video decoder 1900, new post filter information 1991 provided by the video encoder 1800 together with the encoded video data is decoded by an entropy decoding unit 1990. The filter 1940 is capable of obtaining the new post filter information 1991 and the reconstructed video signal and of setting up the filter, by which the reconstructed signal is thus filtered.

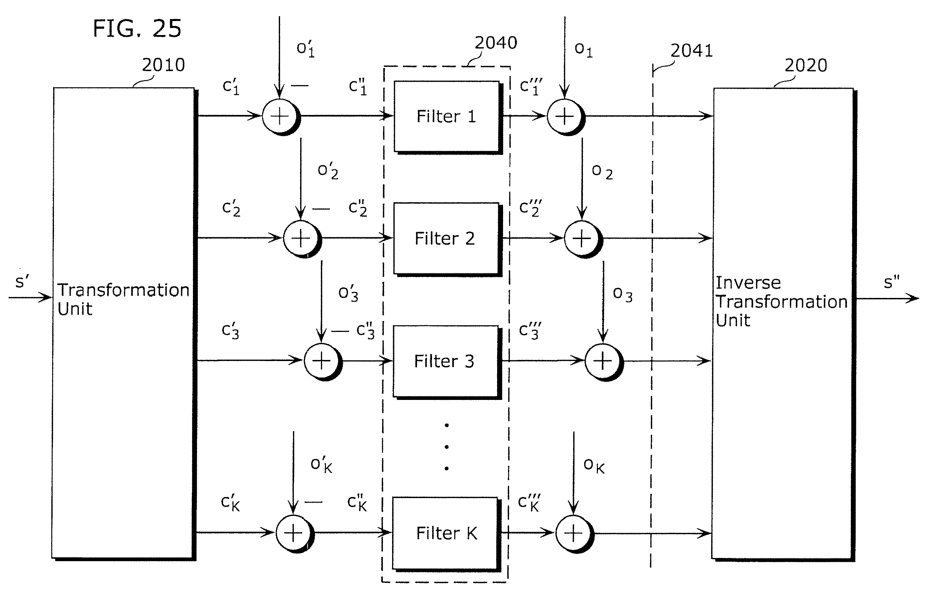

FIG. 25 illustrates details of an example of the filter 1940 in the frequency domain for this embodiment of the present invention. The reconstructed signal $s'$ is transformed into the frequency domain at a transformation unit 2010. Preferably, the same transformation technique is used as in the transformation/quantization unit 110 of the video encoder 1800 for the encoding of the prediction error. This may simplify possible software and/or hardware implementation. However, a different transformation may also be used, differing from the transformation technique used by the video encoder 1800, for instance, by the basis functions and/or size. The transformation may also be selected as a part of the filter design unit 1830 and the selected transformation may be provided to the video decoder 1900 together with the encoded video data. The selection may be performed out of the predefined set of transformations, or, alternatively, the entire transformation matrix may be determined and signalized.

The transformation unit 2010 transforms the input reconstructed signal $s'$ into $K$ transformation coefficients $c_l', .. , c_k'$. From the $K$ transformation coefficients $c_l', ..., c_k'$, individual offsets $o_{l'}, ..., o_k'$ (the first offset values) are subtracted, resulting in the transformation coefficients $c_l'', .. , c_k''$. Again, the offsets $o_l', ..., o_k'$ are preferably generated by extracting the corresponding transformation coefficients $c_l', ..., c_k'$ from a plurality of temporally and spatially neighboring blocks and averaging the transformation coefficients.

Each transformation coefficient $c_l'', ..., c_k''$ after subtracting the offset is filtered by a filter 2040 resulting in the $K$ filtered transformation coefficients $c_l''', ...., c_k'''$.

To each of the $K$ filtered transformation coefficients $c_l''', c_k'''$, an individual offset $o_l, ..., o_k$ (the second offset value) is added. The offsets $o_l, ..., o_k$ are generated by extracting the transformation coefficients $c_l, ..., c_k$ of the original input signal $s$ from a plurality of temporally and spatially neighboring blocks and averaging the transformation coefficients. The resulting transformation coefficients 2041 are inversely transformed at an inverse transformation unit 2020. The output signal $s''$ represents the filtered reconstructed image.

Similarly as in the previously described first embodiment of the present invention, the filter coefficients $w_{l,k}, ..., w_{M,k}$ and the offsets $o_l, ..., o_k$ are preferably entropy encoded at the entropy encoding unit 1890 and provided from the video encoder 1800 to the video decoder 1900. In addition, the transformation information signalizing the transformation technique applied by the transformation unit 2010 and/or the inverse transformation unit 2020 may be transmitted from the video encoder 1800 to the video decoder 1900. Such transformation information may either be a designation of one of the transformations forming a predefined fixed set of allowed transformations. Alternatively, the transformation and/or the inverse transformation matrix may be signalized. Other possibilities, such as implicit determination of the transformation based on the received video data, may also be implemented. The term video data refers to all syntax elements transmitted together with the encoded quantized transformation coefficients and necessary for the correct decoding of the video sequence.

(Third Embodiment)

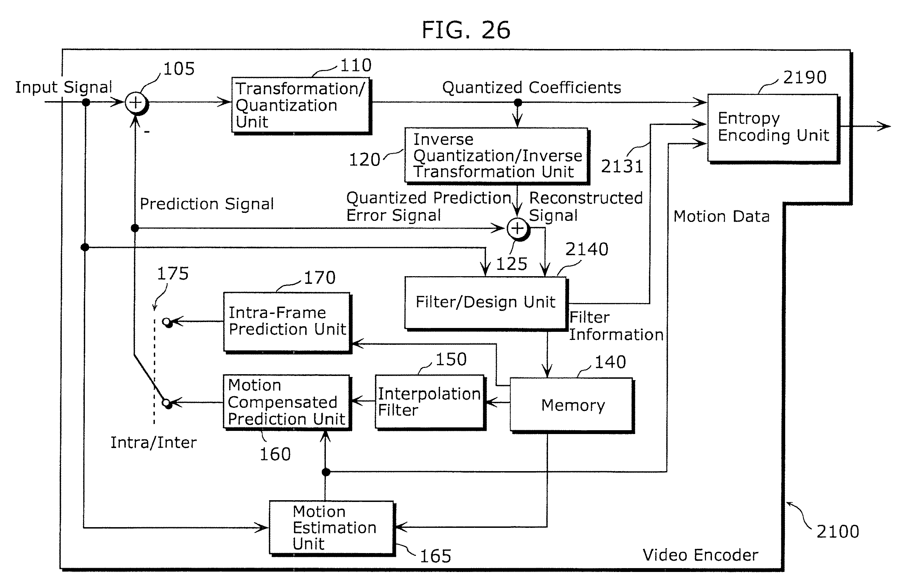

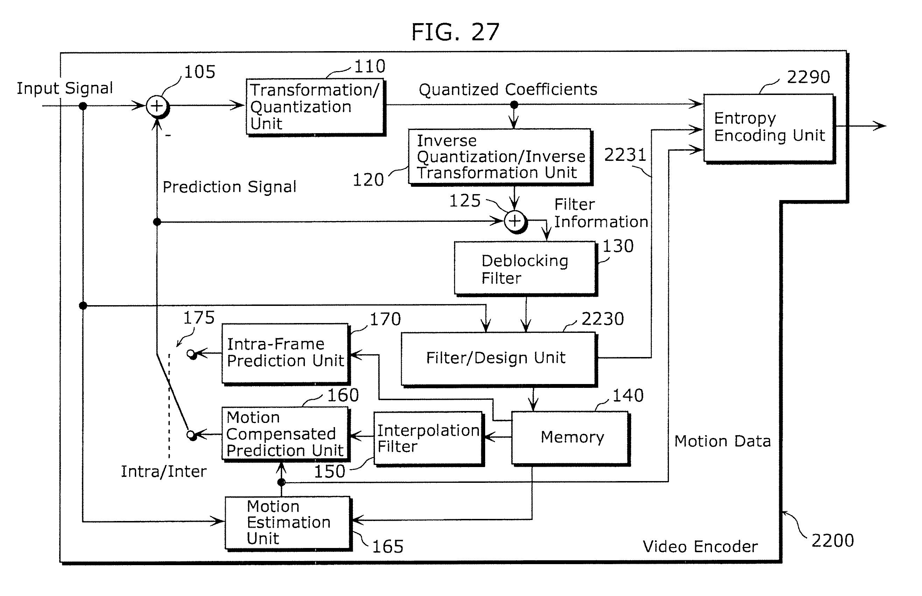

Video encoders 2100 and 2200 in accordance with the third embodiment of the present invention are described with reference to FIG. 26 and FIG. 27. In accordance with the third embodiment of the present invention, the filtering in the frequency domain is applied to the reconstructed video signal. FIG. 26 and FIG. 27 exemplify such video encoders 2100 and 2200. Here, the same reference numerals assigned to the units in the video encoder 1500 and the video decoder 1600 in accordance with the first embodiments are assigned to the identical units of the third embodiment, so that the identical units are not explained again below.

In particular, the video encoder 2100 illustrated in FIG. 26 differs from the video encoder 1500 illustrated in FIG. 20A in that the deblocking filter 130 is replaced by a filter/design unit 2140. The filter/design unit 2140 performs filter design and filtering. The coefficients of the filter are calculated in the frequency domain based on the input video signal (desired signal) and on the reconstructed video signal. Filter information 2131 is then provided to an entropy encoding unit 2190 for encoding.

The video encoder 2200 illustrated in FIG. 27 differs from the video encoder 2200 illustrated in FIG. 20A in that the deblocking filter 130 is replaced by a filter/design unit 2230. The filter/design unit 2230 provides an entropy encoding unit 2290 with filter information 2231 such as filter coefficients, calculated in the frequency domain based on the input (desired) video signal and the reconstructed and de-blocked video signal.

It should be noted that the filter/design units 2140 and 2230 illustrated in FIG. 26 and FIG. 27, respectively, generate filter information 2131 and 2231, respectively, for example, by the same method as used by the filter design unit 1830 illustrated in FIG. 23, and performs filtering by the method as illustrated in FIG. 25. However, the filter/design unit 2230 illustrated in FIG. 27 differs from the examples of FIG. 23 and FIG. 26 which obtains a signal directly from the adder 125 in that the signal is obtained from the deblocking filter 130.

The video decoders corresponding to the video encoders 2100 and 2200 with loop filter in the frequency domain have basically the similar functional blocks for filtering as the video encoders 2100 and 2200. The filter design is performed based on the obtained filter information and/or the information calculated locally. After setting up the filter, the reconstructed video signal is filtered in the frequency domain.

(Fourth Embodiment)

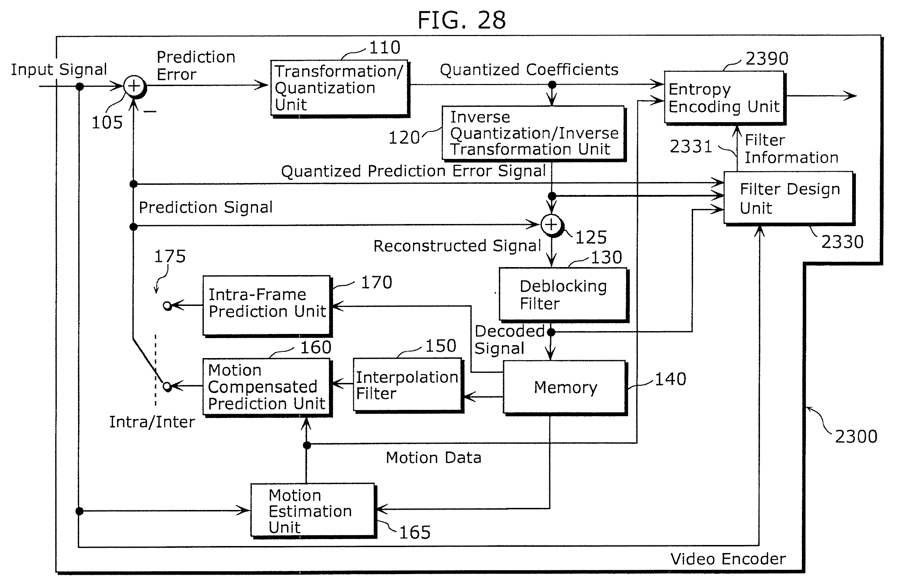

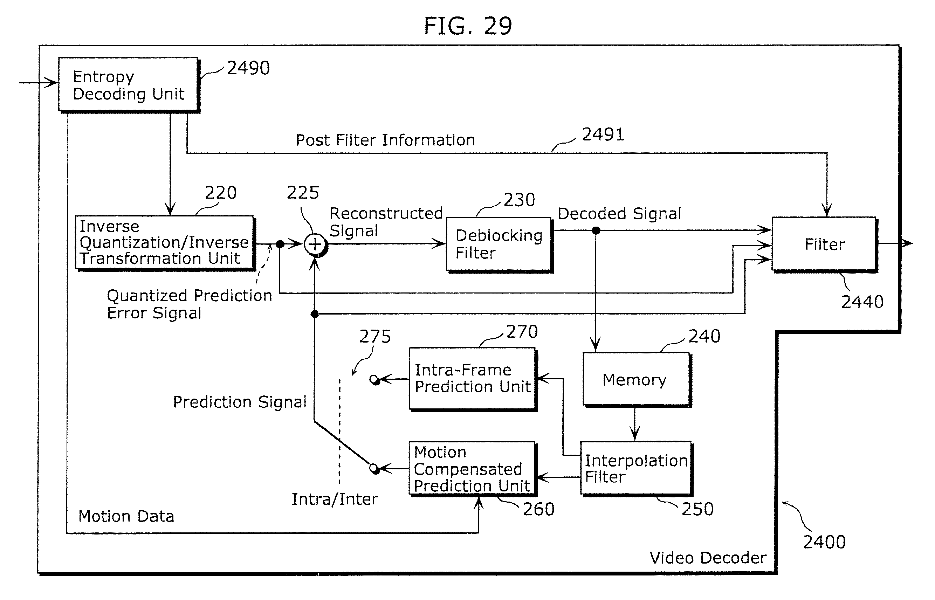

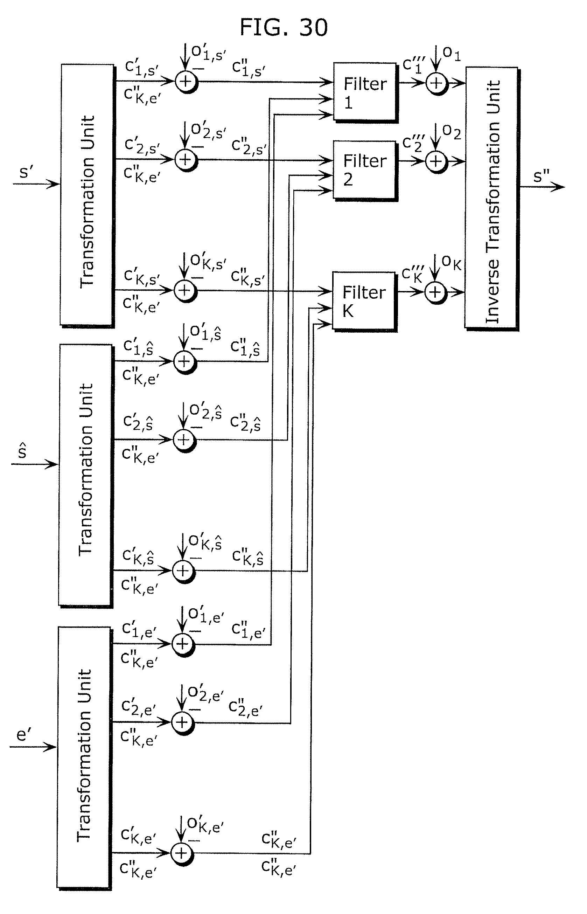

A video encoder 2300 and a video decoder 2400 in accordance with the fourth embodiment of the present invention are described with reference to FIGS. 28 to 30. In accordance with the fourth embodiment of the present invention, the prediction signal, the quantized prediction error signal, and the reconstructed signal are considered separately in the filtering (design) process. FIG. 28 is a functional block diagram of the video encoder 2300. FIG. 29 is a functional block diagram of the video decoder 2400. FIG. 30 is an example of the process of the filtering in accordance with the fourth embodiment. Here, the same reference numerals assigned to the units in the video encoder 1500 and the video decoder 1600 in accordance with the first embodiments are assigned to the identical units of the fourth embodiment, so that the identical units are not explained again below.

Processing of generating an encoded signal in accordance with the fourth embodiment includes (i) subtracting a prediction signal from a video signal to generate a prediction error signal, (ii) transforming the prediction error signal from the spatial domain into the frequency domain, (iii) quantizing the transformed signal, (iv) inversely quantizing the quantized signal, (v) transforming the resulting signal from the frequency domain into the spatial domain to generate a quantized prediction error signal, and (vi) adding a prediction signal to the quantized prediction error signal to generate a reconstructed signal. Furthermore, filter information is determined to minimize a mean squared error between (a) the prediction error signal in the frequency domain and (b) the quantized prediction error signal in the frequency domain to which filtering has been applied, based on the prediction signal in the frequency domain, the quantized prediction error signal in the frequency domain, and the reconstructed signal in the frequency domain.

The video encoder 2300 illustrated in FIG. 28 differs from the video encoder 1500 illustrated in FIG. 20A in that a filter design unit 2330 is included. The filter design unit 2330 determines the filter information 2331 in the frequency domain based on input (desired) video signal, prediction signal, quantized prediction error signal and the decoded (reconstructed and de-blocked) video signal. Such filter information 2331 is then provided to an entropy encoding unit 2390.

The filter design unit 2330 determines the filter information 2331 to minimize a mean squared error between (a) the prediction error signal in the frequency domain and (b) the quantized prediction error signal in the frequency domain to which filtering has been applied at the filter 2440.

The video decoder 2400 illustrated in FIG. 29 corresponds to the video encoder 2300.

An entropy decoding unit 2490 decodes the filter information 2491 and provides it to the filter 2440. The filter 2440 sets up the post filter and applies it to the reconstructed signal. Setting up the filter may here also include the filter design similar to the filter design unit 2330 at the video encoder 2300 side, especially in case that instead of the filter coefficients the information necessary for their calculation is provided.

The filter design unit 2440 transforms the quantized prediction error signal, the prediction signal, and the reconstructed signal, from the spatial domain into the frequency domain. Then, for each value of the same frequency component in respective blocks in the respective signals transformed into the frequency domain, filtering is performed by using the filter information 2491. Here, the respective blocks corresponding to each other among the signals.

FIG. 30 is a diagram illustrating the filter 2440 of the video decoder 2400 in detail.

An encoded signal in this example is generated by subtracting a prediction signal from a video signal to generate a prediction error signal, transforming the prediction error signal from the spatial domain into the frequency domain, quantizing the transformed signal, and entropy encoding the quantized signal. The processing of generating a decoded signal includes (i) applying entropy decoding to the encoded signal, (ii) inversely quantizing the resulting signal, (iii) inversely transforming the resulting signal from the frequency domain into the spatial domain to generate a quantized prediction error signal, and (iv) adding a prediction signal to the quantized prediction error signal to generate a reconstructed signal. Moreover, the filtering includes applying, by using a weight coefficient included in the filter information, weighted addition to values of same frequency component in respective blocks in (a) the quantized prediction error signal as a decoded signal, (b) the prediction signal, and (c) the reconstructed signal. Here, the blocks corresponding to each other among the signals. Furthermore, the weight coefficient is determined to minimize a mean squared error between (a) the prediction error signal in the frequency domain and (b) the quantized prediction error signal in the frequency domain to which filtering has been applied.

In the filter 2440, the prediction signal s^, the quantized prediction error signal e', and the reconstructed signal s' are independently considered.

In order to adjust (a) a value generated by extracting the transformation coefficients $c_{l,e'}$, ..., $c_{k,e'}$ of the quantized prediction error signal e' from a plurality of temporally and spatially neighboring blocks and averaging the transformation coefficients and (b) a value generated by extracting the transformation coefficients $c_l$, ..., $c_k$ of the original prediction error signal e from a plurality of temporally and spatially neighboring blocks and averaging the transformation coefficients, a mean adjustment is performed as already briefly described with reference to FIG. 22.

For this purpose, the offsets $o_{l,e'}$, ..., $o_{k,e'}$, are calculated as $o_{k,e'}= E[c_{k,e'}]$, where $k$ = 1, ..., $K$. The offsets $o_l$, ..., $o_k$ are calculated as $o_k = E[c_k]$, where $k$ = 1, ..., $K$. The calculating here refers to estimating the mean of the quantized prediction error signal e' and the mean of the original prediction error signal e, for instance as an average over a plurality of corresponding samples.

The optimization criterion for the design of the $K$ filters for the respective transformation coefficients in the frequency domain is the minimum mean squared error between the desired signal $c_l$-$o_l$, ..., $c_k$-$o_k$, which corresponds to the transformation coefficients of the original prediction error signal e without offset signal $o_l$, ..., $o_k$, and the filtered signal $c_l'''$, ..., $c_k'''$. The linear filtering is to be performed as follows:

[Mathematical Formula 28]


$$c_k''' = \sum_{m=1}^{M} w_{k,m} \cdot c_{k,m}'' \qquad \text{(Equation 28)}$$


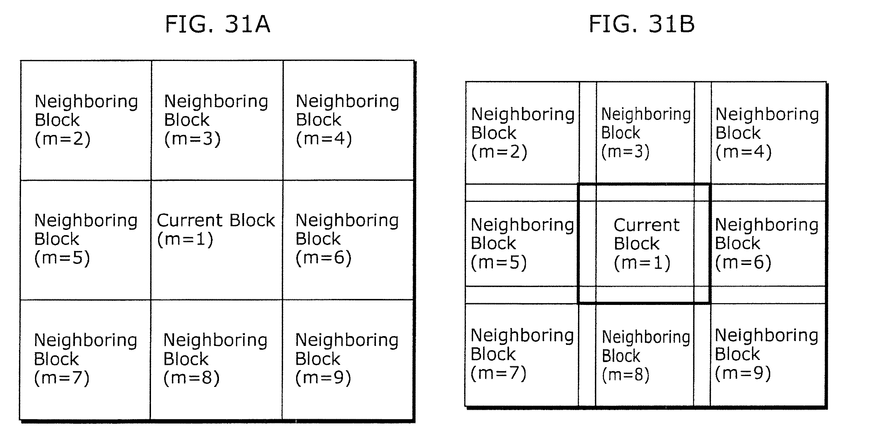

wherein $w_{1,k}$, ..., $w_{M,k}$ are $M \cdot K$ filter coefficients of the $K$ filters in the frequency domain, one filter of order $M$, i.e., with $M$ filter coefficients for each frequency component. Each such individual filter weights $M$ transformation coefficients $c_{k,m}''$ of the same frequency component in $M$ blocks placed, for instance, as illustrated in FIGS 31A and 31B.

In particular, FIG. 31A shows a non-overlapping arrangement of nine blocks, the transformation coefficients of which are used in filtering. However, it may be an advantage to use transformation coefficients of overlapping blocks as the correlation between them may be higher. An arrangement with blocks overlapping symmetrically is shown in FIG. 31B. However, the blocks may overlap asymmetrically by areas of different sizes. The way of overlapping may be chosen, for instance, according to the characteristics of the blocks. Moreover, the overlapping may be maximized by shifting the neighboring blocks by a single pixel (or even a sub-pixel) with respect to the current block. In such case, a plurality of filtered signal representations would be obtained, that may be further arbitrarily selected and/or combined to obtain the desired filtered image.

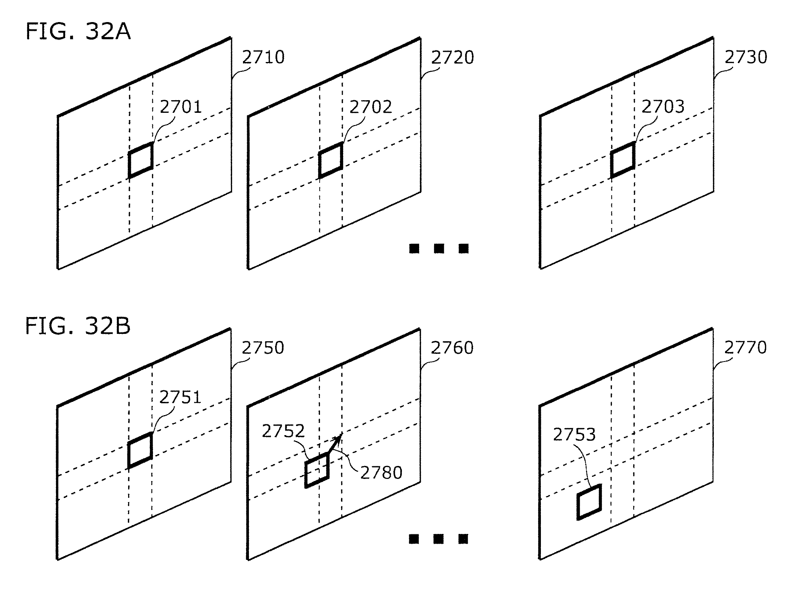

Alternatively, the filtering may weight the transformation coefficients corresponding to the same frequency of blocks neighboring to the current block in the time axis, i.e. the blocks in previous and/or the following frames. Two examples of such neighboring blocks are illustrated in FIGS 32A and 27B, respectively.

FIG. 32A illustrates a frame 2710 containing a current block 2701. A block 2702 temporally adjacent to the current block 2701 is in a frame 2720 temporally adjacent to the frame 2710. Other temporally neighboring blocks from other temporally neighboring frames can be considered for filtering, up to $M$-th block 2703 within the $M$-th frame 2730. In this example, the temporally neighboring blocks 2701, 2702, ..., 2703 are placed in the same position within different frames of a video sequence.

FIG. 32B illustrates another example of a frame 2750 comprising a current block 2751 and a block 2752 temporally adjacent to the current block 2751. The block 2752 within a frame 2760 neighboring to the frame 2750, is obtained by motion estimation. A motion vector 2780 indicates the motion, which the best matching block 2752 in the frame 1760 underwent to become the current block 2751 in the frame 2750. Thus, in this example, the temporally neighboring blocks are the blocks obtained using motion estimation, i.e. finding the best matching block 2752 for the current block 2751 in the neighboring frame 2760. The blocks (e.g. a block 2753) in other neighboring frames (e.g. a frame 2770) may be found either as the best match for the current block 2751, or as a best match for another neighboring block of the current block such as the block 2752 within the neighboring frame 2760.

Applying motion compensation for determining the neighboring blocks used in filtering as shown in FIG. 32B provides the set of neighboring blocks with statistics more similar than those of the example in FIG. 32A. In general, the temporally neighboring blocks for filtering are not necessarily in the frames directly adjacent. For instance, in case of an occlusion, the block from an adjacent frame does not need to be considered for filtering. Moreover, the $M$ neighboring blocks may be chosen not only from the frames previously encoded/decoded but also from the frames following the frame including the current block. The $M$ neighboring blocks may also be selected from both the temporal and the spatial neighborhood of the current block.

The filter coefficients $w_{k,1}, ..., W_{k,M}$, which minimize the mean squared error between the wanted signal $c_1\text{-}o_1, ...,$ $c_k\text{-}o_k$ and the filtered signal $c_1''', ..., c_k'''$ can be determined by solving the Wiener-Hopf equations:

[Mathematical Formula 29]

$$\begin{bmatrix} w_{k,1} \\ w_{k,2} \\ \vdots \\ w_{k,M} \end{bmatrix} = \begin{bmatrix} E\left[c_{k,1}'' \cdot c_{k,1}''\right] & E\left[c_{k,1}'' \cdot c_{k,2}''\right] & \cdots & E\left[c_{k,1}'' \cdot c_{k,M}''\right] \\ E\left[c_{k,2}'' \cdot c_{k,1}''\right] & E\left[c_{k,2}'' \cdot c_{k,2}''\right] & \cdots & \vdots \\ \vdots & \vdots & \ddots & \vdots \\ E\left[c_{k,M}'' \cdot c_{k,1}''\right] & \cdots & \cdots & E\left[c_{k,M}'' \cdot c_{k,M}''\right] \end{bmatrix}^{-1} \begin{bmatrix} E\left[(c_k - o_k) \cdot c_{k,1}''\right] \\ E\left[(c_k - o_k) \cdot c_{k,2}''\right] \\ \vdots \\ E\left[(c_k - o_k) \cdot c_{k,M}''\right] \end{bmatrix}$$

(Equation 29)

The computation of the filter coefficients $w_{k,1}, ..., w_{k,M}$ requires the knowledge of all expected values (correlation terms) in the Wiener-Hopf equations. Similarly, the filter information 2491 used in the filter 2440 in the video decoder 2400 is calculated using the above method by the filter design unit 2330 in the video encoder 2300. Again, (a) a value generated by extracting the transformation coefficients $c_1', ..., c_k'$ of the reconstructed signal s' from a plurality of temporally and spatially neighboring blocks and averaging the transformation coefficients and (b) a value generated by extracting the transformation coefficients $c_1, ..., c_k$ of the original prediction error signal s from a plurality of temporally and spatially neighboring blocks and averaging the transformation coefficients are adjusted by the offsets $o_1', .... o_k'$ corresponding to $o_k' = E[c_k']$ and by the offsets $o_1, ..., o_k$ corresponding to $o_k = E[c_k]$.

Here, $k = 1, ..., K$. Obtaining the filter coefficients by minimizing the mean squared error between the desired signal $c_1\text{-}o_1, ..., c_k\text{-}o_k$ and the filtered signal $c_1''', ..., c_k'''$ leads, again, to a system of Wiener-Hopf equations as shown above.

The filter design for the respective examples of the video encoders 2100, 2200, and 2300 and/or the corresponding video decoder 2400 is exemplified in the following. The result of the filter design may be used to set up, for instance, the filter shown in FIG. 30.

Hereby, the prediction signal $s^\wedge$, the quantized prediction error signal $e'$, and the reconstructed signal $s'$ are considered separately. The corresponding offsets $o_{1,s'}, ..., o_{k,s'}$ are calculated as $o_{k,s'} = E[c_{k,s'}']$, the offsets $o_{1,e'}, ..., o_{k,e'}$ are calculated as $o_{k,e'} = E[C_{k,e'}']$, the offsets $o_{1,s^\wedge}, ..., o_{k,s^\wedge}$ are calculated as $o_{k,s^\wedge} = E[c_{k,s^\wedge}']$, and the offsets $o_1, ..., o_k$ are calculated as $o_k = E[c_k]$, where $k = 1, ..., K$.

The optimization criterion for the design of the $K$ filters in the frequency domain is, again, the minimum mean squared error between the desired signal $c_1\text{-}o_1,..., c_k\text{-}o_k$ and the filtered signal $c_1''', ..., c_k'''$. The linear filtering is performed as

[Mathematical Formula 30]

$$c_k''' = \sum_{m=1}^{M} w_{k,s',m} \cdot c_{k,s',m}'' + \sum_{n=1}^{N} w_{k,\hat{s},n} \cdot c_{k,\hat{s},n}'' + \sum_{o=1}^{O} w_{k,e',o} \cdot c_{k,e',o}'' ,$$

(Equation 30)

wherein $w_{k,s',1}, ..., w_{k,s',M}$ are $M \cdot K$ filter coefficients for the reconstructed signal, $w_{k,s^\wedge,1}, ..., w_{k,s^\wedge,N}$ are $N \cdot K$ filter coefficients for the prediction signal, and $w_{k,e',1}, ..., w_{k,e',O}$ are $O \cdot K$ filter coefficients for the quantized prediction error signal. Parameters $M, N,$ and $O$ denote the filter order. Each filter weights the $M+N+O$ transformation coefficients , $c_{k,s',m}''$ , $c_{k,\hat{s},n}''$ , $c_{k,e',o}''$ of the same frequency component of $M+N+O$ blocks.

The filter coefficients, which minimize the mean squared error between the desired signal $c_1\text{-}o_1, ..., c_k\text{-}o_k$ and

the filtered signal $c_i'''$, ..., $c_k'''$ can be determined by the following system of Wiener-Hopf equations:

$$[\text{Mathematical Formula 31}]$$

$$\begin{bmatrix} w_{k,s',1} \\ w_{k,s',2} \\ \vdots \\ w_{k,s',M} \\ w_{k,\hat{s},1} \\ w_{k,\hat{s},2} \\ \vdots \\ w_{k,\hat{s},N} \\ w_{k,e',1} \\ w_{k,e',2} \\ \vdots \\ w_{k,e',Q} \end{bmatrix} = \begin{bmatrix} \underline{E}[c''_{k,s',i} \cdot c''_{k,s',j}] & \underline{E}[c''_{k,s',i} \cdot c''_{k,\hat{s},j}] & \underline{E}[c''_{k,s',i} \cdot c''_{k,e',j}] \\ \underline{E}[c''_{k,\hat{s},i} \cdot c''_{k,s',j}] & \underline{E}[c''_{k,\hat{s},i} \cdot c''_{k,\hat{s},j}] & \underline{E}[c''_{k,\hat{s},i} \cdot c''_{k,e',j}] \\ \underline{E}[c''_{k,e',i} \cdot c''_{k,s',j}] & \underline{E}[c''_{k,e',i} \cdot c''_{k,\hat{s},j}] & \underline{E}[c''_{k,e',i} \cdot c''_{k,e',j}] \end{bmatrix}^{-1} \cdot \begin{bmatrix} E[c''_{k,s',1} \cdot (c_k - o_k)] \\ E[c''_{k,s',2} \cdot (c_k - o_k)] \\ \vdots \\ E[c''_{k,s',M} \cdot (c_k - o_k)] \\ E[c''_{k,\hat{s},1} \cdot (c_k - o_k)] \\ E[c''_{k,\hat{s},2} \cdot (c_k - o_k)] \\ \vdots \\ E[c''_{k,\hat{s},N} \cdot (c_k - o_k)] \\ E[c''_{k,e',1} \cdot (c_k - o_k)] \\ E[c''_{k,e',2} \cdot (c_k - o_k)] \\ \vdots \\ E[c''_{k,e',Q} \cdot (c_k - o_k)] \end{bmatrix}$$

$$(\text{Equation 31})$$

wherein $\underline{E}[x_i y_j]$ denotes a sub-matrix consisting of all cross correlation terms between $x_i$ and $x_j$. The filter design and/or filtering in frequency domain may be performed for selected coefficients only. For instance, only the DC coefficients may be filtered. Alternatively, for instance, a set of the first L coefficients may be filtered, or the coefficients to be filtered may be determined based on the content of the video. In particular, the values of the transformation coefficients may be evaluated in order to determine if the filtering shall be applied or not.

This provides the possibility to disable the filtering, for instance, in the case where the values of transformation coefficients to be filtered vary considerably. The evaluation of transformation coefficient values is preferably based on a comparison with a threshold. For instance, differences between the transformation coefficients of the current block and another block used for filtering is calculated and based thereon, the filtering is enabled or disabled.

If the difference between the coefficients exceeds the threshold, filtering is disabled. Otherwise, the filtering is enabled. The decision can alternatively be based on a statistic of the transformation coefficient within the neighboring blocks such as variance. If variance of the transformation coefficients of the same frequency in the neighboring blocks used for filtering exceeds a threshold, the filtering is disabled. A threshold per frequency component may be set based on quantization parameter, or fixed, or signalized together with the encoded video data.

The possibility of disabling the filtering may increase the quality of the filtered signal in cases where the characteristics of blocks to be filtered over differ substantially, e.g., if high gradients are present (edges in spatially neighboring blocks, scene changes in temporally neighboring blocks).

According to the above description, the transformation coefficients were described as having been obtained by transforming the ordinary (typically used) macroblocks sampled vertically and horizontally in a raster given by the input color format. However, the present invention is not limited to determining filter information, setting-up the filter and filtering of the transformation coefficients obtained in this way. The blocks for transformation may be, for instance, also sampled after having been rotated by a predefined angle such as 45°. This may be of advantage for blocks with certain contents. Both the sampling and the transformation do not necessarily correspond to those of a video code applied.

The above method described with reference to FIG. 31A, FIG. 31B, FIG. 32A, and FIG. 33 can be applied to the filter design and the filtering in accordance not only with the fourth embodiment, but also with the first to third and fifth embodiments.

(Fifth Embodiment)

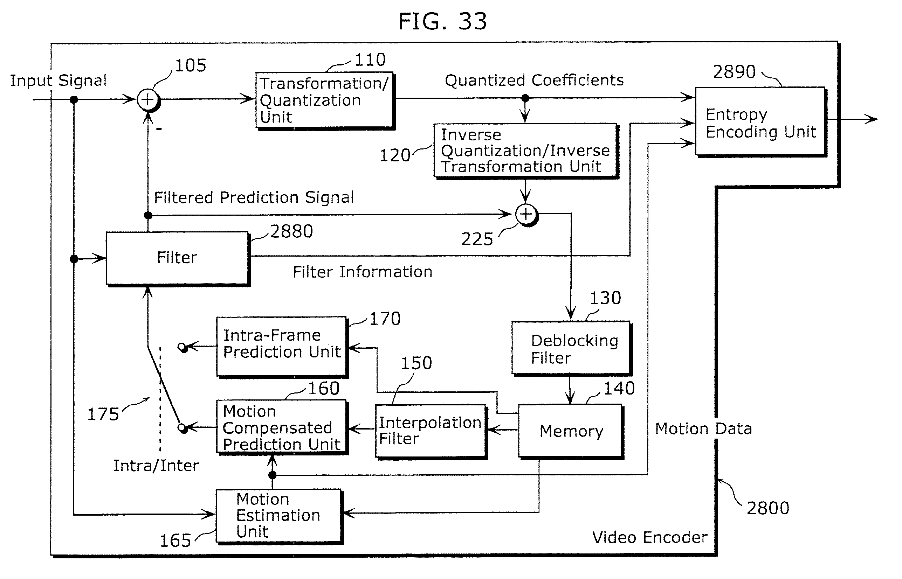

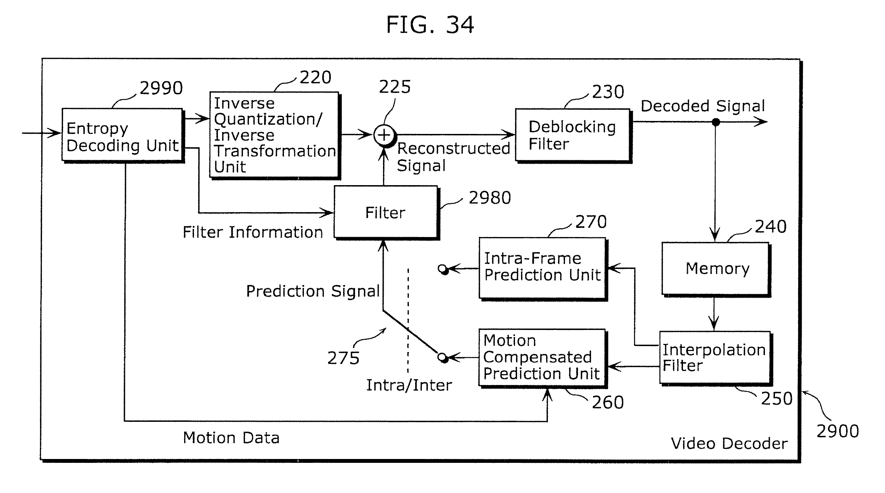

A video encoder 2800 and a video decoder 2900 in accordance with the fifth embodiment of the present invention are described with reference to FIG. 33 and FIG. 34. FIG. 33 is a functional block diagram of the video encoder 2800. FIG. 34 is a functional block diagram of the video decoder 2900. Here, the same reference numerals assigned to the units in the video encoder 1500 and the video decoder 1600 in accordance with the first embodiments are assigned to the identical units of the fifth embodiment, so that the identical units are not explained again below.

The video encoder 2800 illustrated in FIG. 33 differs from the video encoder 1500 illustrated in FIG. 20A in that a filter 2880 for filtering only a prediction signal in the frequency domain in loop is included.

The processing of generating an encoded signal in accordance with the fifth embodiment includes processing of (i) subtracting a prediction signal from a video signal so as to generate a prediction error signal, (ii) transforming the prediction error signal from the spatial domain into the frequency domain, and (iii) quantizing the resulting signal, (iv) inversely quantizing the resulting signal, (v) transforming the resulting signal from the frequency domain into the spatial domain so as to generate a quantized prediction error signal, and (vi) adding a prediction signal to the quantized prediction error signal so as to generate a reconstructed signal. Furthermore, the filter information is determined to minimize a mean squared error between (a) the video signal in the frequency domain and (b) the prediction signal in the frequency domain to which filtering has been applied.

The filter information is predicted as a Wiener filter coefficient based on the input signal and prediction signal in the frequency domain. The filtered prediction signal is then further provided to the transformation/quantization unit 110 and an entropy encoding unit 2890, and is used for reconstruction prior to the processing of the deblocking filter 130. The filter information is encoded by the entropy encoding unit 2890, and provided to the video decoder 2900 side.

The video decoder 2900 illustrated in FIG. 34 differs from the video decoder 1600 illustrated in FIG. 21A in that a filter 2980 for filtering a prediction signal in the frequency domain is included.

An encoded signal in accordance with the fifth embodiment is generated by subtracting a prediction signal from a video signal, transforming the resulting signal from the spatial domain into the frequency domain, quantizing the transformed signal, and entropy encoding the quantized signal. The processing of generating a decoded signal includes processing of (i) entropy decoding the encoded signal, (ii) inversely quantizing the resulting signal, (iii) inversely transforming the resulting signal from the frequency domain into the spatial domain so as to generate a quantized prediction error signal, and (iv) adding a prediction signal to the quantized prediction error signal so as to generate a reconstructed signal. Moreover, the filtering includes (i) processing of transforming a prediction signal from the spatial domain into the frequency domain, (ii) processing of filtering the prediction signal in the frequency domain, (iii) and processing of inversely transforming the filtered prediction signal from the frequency domain into the spatial domain.

An Entropy decoding unit 2990 decodes the filter information and passes them to the filter 2980 for filtering the prediction signal. The prediction signal is filtered before it is used for the adder 225 and the deblocking filter 230. Such filtering of the prediction signal enables minimizing of the prediction error, and thus, further improving the reconstructed video quality.

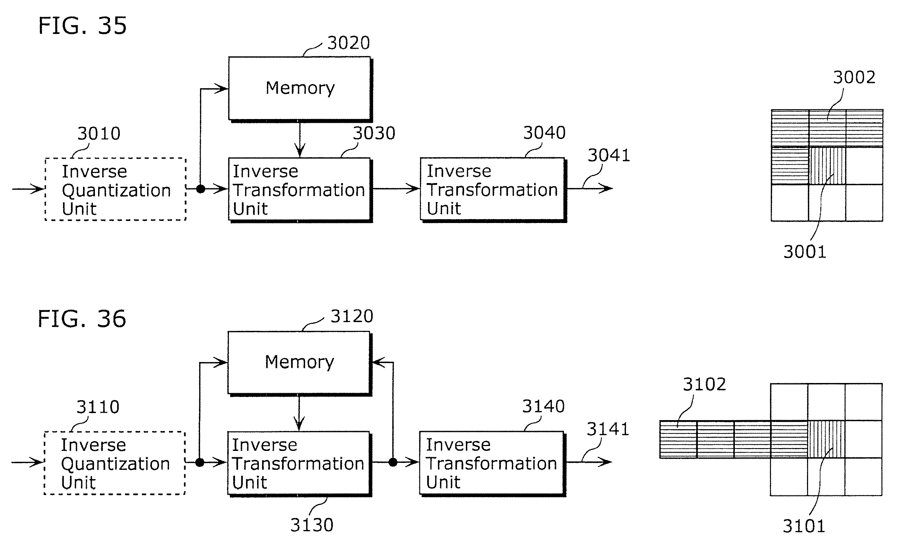

FIG. 35 shows details of an example video encoder in accordance with each embodiment of the present invention. If the filtering is applied by weighting the transformation coefficients of same frequency from different (spatially and/or temporally neighboring) blocks, it is necessary to store these neighboring blocks. If the filtering is applied to the reconstructed video signal, no additional storage capacity is needed, since the reconstructed video signal is stored within the loop in the memory 140, 240.

However, in case of a filter 3030, for instance, a current block 3001 of the prediction signal or the prediction error signal, the values of coefficients of the neighboring blocks 3002 have to be stored in a memory 3020. The filtered signal is then inverse transformed and the inverse transformed signal 3041 can be used for reconstruction. The neighboring blocks 3002 in this example are the previously encoded/decoded spatially neighboring blocks. However, in general, arbitrary number of block at different positions within the video sequence may be used.

FIG. 36 illustrates another example wherein the filtering performed by the filter 3130 is an infinite impulse response (IIR) filtering. Unlike finite response filtering (FIR), the IIR filters weight not only the samples of the input signal but also the samples of the output (filtered) signal. Accordingly, the filtered signal has to be stored in a memory 3120 in addition to the signal to be filtered. Although most of the examples above related to FIR filtering, the present invention is not limited thereto.

While FIR filters are in general easier to design, IIR filtering in frequency domain may provide better performance. The blocks involved in the filtering of a current block 3101 are in general all previously filtered neighboring blocks 3102. In FIG. 36, only four previous blocks are shown. However, due to weighting of already filtered signal, theoretically all previously filtered blocks contribute to the result of filtering. The degree of contribution of each block decreases with its distance (spatial and/or temporal - according to the choice of the neighboring blocks) from the current block 3101.

The above method described with reference to FIG. 35 and FIG. 36 can be applied to the filter design and the filtering in accordance not only with the fifth embodiment, but also with the first to fourth embodiments.

The above embodiments of the present invention are not restricted with respect to adaptivity of the filters applied. The filters employed at the video encoder 1300 and/or video decoder 1400 may be designed once per video sequence, or even based on several video sequences. However, adapting the filter design to the current statistics typically results to an improved image quality. The filter design may be performed, for instance, regularly per group of pictures, or per image, or even per slice or per macroblock, block or per a number of such image elements. Correspondingly, the filter information may be provided (signaled) with the same regularity.

However, it may be an advantage to provide the filter information less frequently than performing the filter design. In particular if information for calculating the filter coefficients is provided such as cross correlation between the desired signal and the filtered signal, or autocorrelation of noise, this information may be sent less frequently than the filter coefficients are really calculated. While the filter information is not updated, the additional information necessary for calculating the filter coefficients, which can be obtained from the decoded video transformation coefficients and/or video signal, is refreshed.

The filter design and/or signaling of the filter information may also be performed irregularly, for instance, when the statistics of the video signal changes significantly. The local adaption of the filter may be achieved in similar ways as disclosed in the European patent application with application number 08015661.5, which is incorporated herein by reference. Furthermore, the quantization settings such as quantization parameter and/or quantization matrix values may be used to determine the filter coefficients for the particular frequency components.

In the case of adaptive filters, filter information, e.g. filter coefficients, are (entropy) encoded and provided to the video decoder as a side information. In the context of the H.264/MPEG-4 AVC encoding scheme or its future enhancements and following standards, the filter information, may preferably be transmitted in the slice header, in the picture parameter set (PPS) NAL unit, or in the sequence parameter set (SPS) NAL unit. For the adaptive post filter schemes, the post filter information can also be sent as an SEI (Supplemental Enhancement Information) to the video decoder.

When the quantized prediction error is considered in the filtering process (i.e. for the filter design and/or filtering), it does not necessarily need to be transformed separately as shown in FIG. 30 since it is already available in the transform domain. However, other transformation technique may be chosen regardless the transformation/quantization unit 110 and the inverse quantization/inverse transformation unit 120 used by the video encoder. Such transformation and/or inverse transformation may be determined at the video encoder, encoded and provided to the video decoder.

Moreover, the block grid used for the transformation in the filtering process (at least one of the design and application of the filter) need not be necessarily the same as the block grid in one of the encoding steps such as the transformation/quantization unit 110. The block grid for the filtering process may be for example shifted by one or two picture elements (such as pixels) to the left, right, top and/or bottom. Any other shift is possible. The blocks used for filter design and filter application does not necessarily have to have the same size as the blocky used for encoding.

The number of transforms that are applied may be over complete. This means that more coefficients in the transform domain may be generated than picture elements in the spatial domain by the use of overlapping transforms. This would result in more than one filtered representation for each picture element (for instance pixel value). These could be weighted to get a final filtered representation. This weighting could also be adaptive and could be encoded and provided to the video decoder.

The entropy encoding units applied in the above video encoder examples are not necessarily the same. Preferably, the entropy encoding of the filter information is adapted to the statistics thereof in order to achieve higher compression gain.

The examples of the embodiments of the present invention were described with focus on Wiener filter design. This is because Wiener filter can easily be calculated based on the knowledge of the first two statistic moments. However, other filter design may also be applied, which may, for instance take into account also higher order statistics (e.g. maximum likelihood estimation) or optimize other norm or metric than mean squared error.

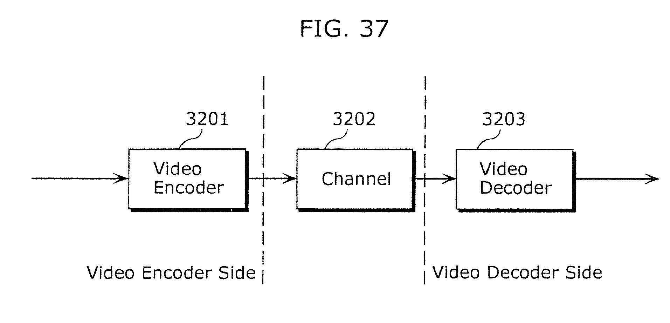

FIG. 37 illustrates a system for transferring a video signal from a video encoder 3201 side to a video decoder 3203 side in accordance with the present invention. An input video signal is encoded by a video encoder 3201 and provided to a channel 3202. The video encoder 3201 is a video encoder in accordance with any of the embodiments of the present invention as described above.

The video encoder 3201 illustrated in FIG. 37 includes at least (a) an encoding unit that transforms a video signal from the spatial domain into the frequency domain and quantizing the transformed signal so as to generate an encoded signal, (b) a filter design unit that generates filter information used to specify filtering for canceling, for each frequency component of quantized signal in the frequency domain, noise superimposed during the quantization, and (c) an output unit that outputs the encoded signal and the filter information. Furthermore, the filter information is determined to minimize a mean squared error between (a) the video signal in the frequency domain and (b) the signal in the frequency domain to which filtering has been applied.

On the other hand, the video decoder 3203 illustrated in FIG. 37 includes (a) an obtainment unit that obtains filter information for specifying an encoded signal and filtering, (b) a decoding unit that decodes the encoded signal to generate a decoded signal, (c) a filter unit that applies filtering to the decoded signal in the frequency domain by using the filter information. Here, the filtering is used to cancel, for each frequency component of the decoded signal in the frequency domain, noise superimposed during encoding of the decoded signal. Moreover, the filter information includes information for minimizing a mean squared error between (a) the video signal in the frequency domain and (b) the decoded signal in the frequency domain to which filtering has been applied.

The channel 3202 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system.

Apart from the encoding of a video signal, the video encoder 3201 side may also include preprocessing of the input video signal such as format conversion and/or transmitter for transmitting the encoded video signal over the channel 3202 or an application for transferring the encoded video signal into the storage. The encoded video signal is then obtained from the channel 3202 by a video decoder 3203. The video decoder 3203 is a video decoder in accordance with any embodiment of the present invention as described above. The video decoder 3203 decodes the encoded video signal. Apart from the decoding of a video signal, the video decoder 3203 side may further include a receiver for receiving the encoded video signal from a channel 3202, or an application for extracting the encoded video data from the storage, and/or post-processing means for post processing of the decoded video signal, such as format conversion.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video encoding system, and the terminology mainly relates to the H.264/AVC terminology. However, this terminology and the description of the various embodiments with respect to H.264/AVC based encoding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video encoding. Nevertheless, the improvements proposed herein may be readily applied in the video encoding described. Furthermore the concept of the invention may be also readily used in the enhancements of H.264/AVC encoding currently discussed by the JVT.

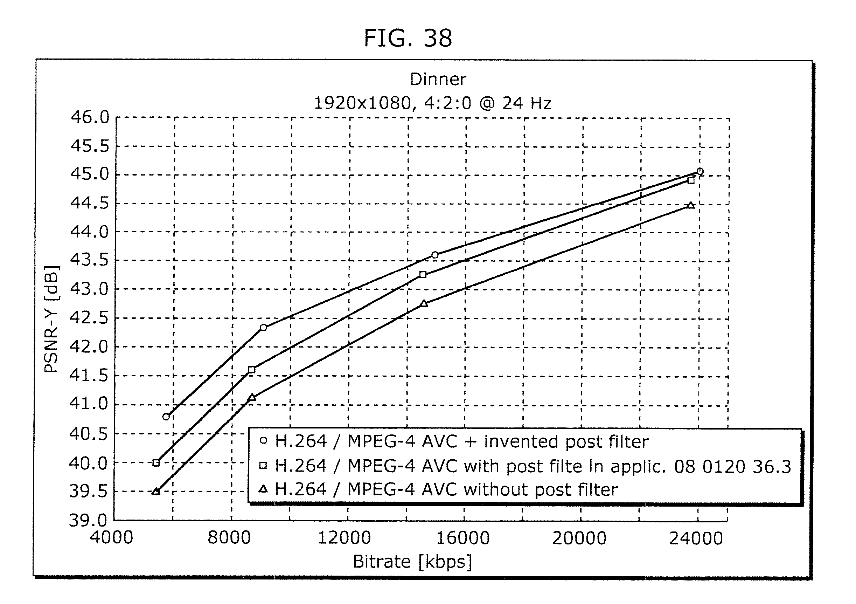

FIG. 38 is a graph illustrating an example of benefit that can be achieved by the present invention. The graph shows the Y-PSNR (peak signal to noise ratio of the luminance component Y) with respect to bit rate required for encoding the MPEG test sequence "Dinner" in YUV 4:2:0 color space with spatial resolution 1920 x 1080 pixels and frame rate of 24 frames per second. An encoding scheme according to the present invention is compared to H.264/MPEG-4 AVC without post filter and to H.264/MPEG-4 AVC enhanced by a non-separable two-dimensional Wiener post filter according to European patent application Nr. 08 0120 36.3. Experiments were performed using a quantization weighting matrix (Q-Matrix). Intra encoding and a 4x4 transform has been applied.

Summarizing, the encoding and decoding of a video signal according to the present invention employ filter design and filtering in the frequency domain and allow providing of filter information for setting-up a corresponding filter from the video encoder side to a video decoder side. Filtering in the frequency domain provides advantages especially for the cases where the noise is also inserted in the frequency domain, for instance, in video encoding based on quantizing the transformed video signal.

(Sixth Embodiment)

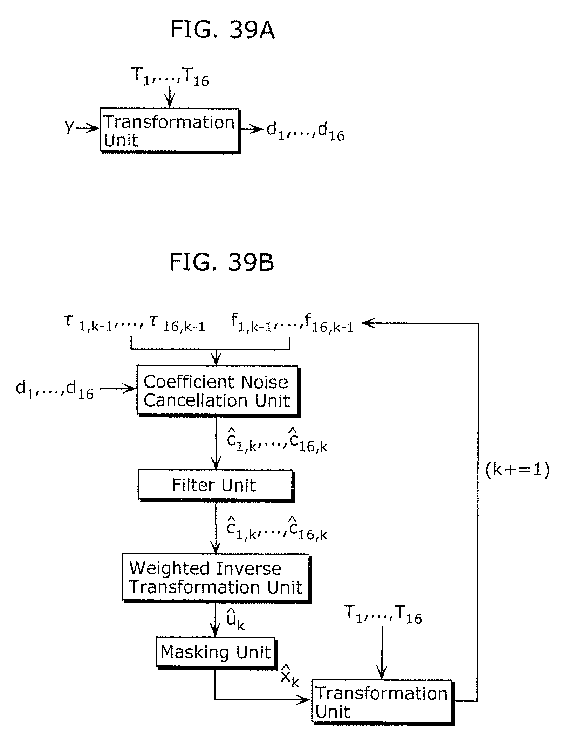

Next, in order to improve efficiency of the noise cancellation filter, a flow of extension algorithm as shown in FIG. 39A and FIG. 39B is provided. The flow of extension algorithm differs from the algorithm flow shown in FIG. 9A and FIG. 9B in a Wiener filter operation to a coefficient $c_{i,k}{}^{\wedge}$. The Wiener filtering results in a coefficient $c_{i,k}{}^{\sim}$. These are used in calculation of weighted inverse transformation. The Wiener filter operation is a linear filter as expressed by the equation 32. Here, the symbol "~ (tilde)" is a symbol assigned above an immediately prior character. In the description, hereinafter, the symbol "~ (tilde)" has the above meaning.

[Mathematical Formula 32]

$$\tilde{c}_{i,k}(j) = o_k(j) + \sum_{l=1}^{L} a_{l,k}(j) \cdot \hat{c}_{l,k}(j)$$

(Equation 32)

According to the above equation 32, a coefficient $c_{i,k}\tilde{}(j)$ is a result of linear combination of coefficient prediction values $c_{i,k}\wedge(j)$. A filter length is $L$. An offset $o_k(j)$ can be added. The coefficient $c_{i,k}\tilde{}(j)$ is a weighted sum of L coefficient prediction values $c_{i,k}\wedge(j)$. Each coefficient prediction value $c_{i,k}\wedge(j)$, which is a coefficient of a current block or a neighboring block of the current block (refer to FIG. 31A), is generated by transformation into the frequency domain. The neighboring block may overlap with the current block (refer to FIG. 31B). Preferably, the coefficient $\alpha_{l,k}(j)$ and the offset $o_k(j)$ separately correspond to each noise cancellation loop expressed by $k = 0, ..., 2$.

The coefficient $a_{l,k}(j)$ and the offset $o_k(j)$ are predicted at the video encoder side by minimizing a mean squared error between the original coefficient $c_i(j)$ and the filtered coefficient $c_{i,k}\tilde{}(j)$. The coefficient $a_{l,k}(j)$ and the offset $o_k(j)$ are encoded and provided to the video decoder side.

The coefficient encoding is preferably performed by using prediction encoding according to the following method. When $k = 1, 2$, each coefficient $a_{l,k}(j)$ is predicted by $a_{l,k-1}(j)$. Only a difference $a_{l,k}(j) - a_{l,k-1}(j)$ is encoded and provided. The encoding may be performed by fixed length encoding or variable length encoding.

When $k = 1, 2$, each offset $o_k(j)$ is predicted by $o_{k-1}(j)$. Only a difference $o_k(j) - o_{k-1}(j)$ is encoded and provided. The encoding may be performed by fixed length encoding or variable length encoding.

Although this noise cancellation filter may be combined with the Wiener filter so as to be used as a post filter, it is not applied in the encoding/decoding loop. In this case, it is preferable to use a Supplemental Enhancement Information (SEI) message to provide the Wiener filter coefficient.

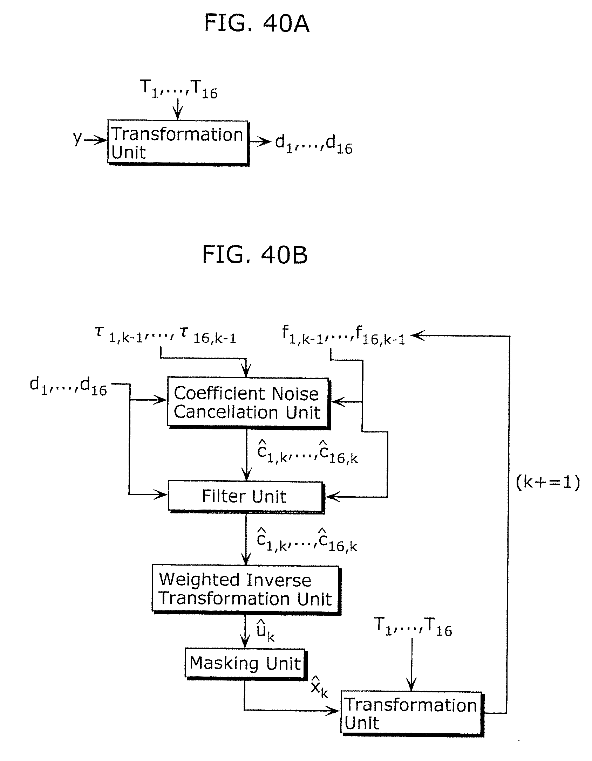

FIG. 40A and FIG. 40B show a flow of another extension algorithm. The flow differs from the flow shown in FIG. 39A and FIG. 39B in that the Wiener filter receives not a single input signal, but two different input signals. The first input signal is a coefficient $f_{l,k-l}, ..., f_{L,k-l}$ to which the coefficient noise cancellation operation has not yet been applied. The second input signal is a coefficient $c_{l,k}\wedge, .. c_{L,k}\wedge$ to which the noise cancellation operation has been applied. A result of the Wiener filtering is expressed by the following equation 33.

[Mathematical Formula 33]

$$\tilde{c}_{i,k}(j) = o_k(j) + \sum_{l=1}^{L_1} a_{l,k}(j) \cdot \hat{c}_{l,k}(j) + \sum_{l=1}^{L_2} b_{l,k}(j) \cdot f_{l,k-1}(j)$$

(Equation 33)

By using the two different signals $f_{l,k-l}, ..., f_{L,k-l}$ and $c_{l,k}\wedge, ..., c_{L,k}\wedge$ as inputs of the Wiener filtering, a mean squared error can be decreased more than the case using only the signal $c_{l,k}\wedge, ..., c_{L,k}\wedge$. This is because noise is different between the two signals each of which expresses noise of the original image signal. The above equation 33 further includes a structure of combining three Wiener filters and one offset. Each noise expression ($f_{l,k-l}, ..., f_{L,k-l}$ or $c_{l,k}\wedge, ..., c_{L,k}\wedge$) is filtered by the Wiener filter. The two results are also filtered by the Wiener filter. The eventual result is added with the offset. The coefficients $a_{l,k}(j)$ and $b_{l,k}(j)$ are encoded and provided. Furthermore, the offset $o_k(j)$ is encoded and provided. Regarding the encoding steps, the prediction between a coefficient at a step $k$ and a coefficient at a step k-1 as described previously can be applied to $a_{l,k}(j)$, $b_{l,k}(j)$, and $o_k(j)$.

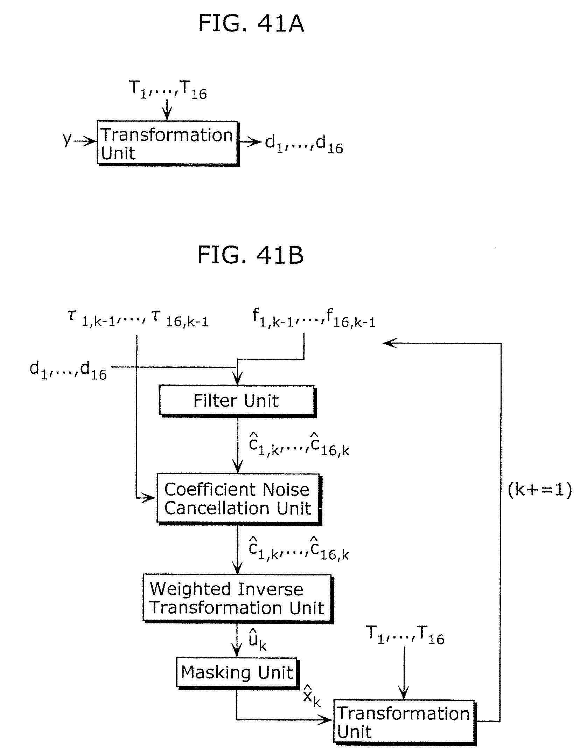

FIG. 41A and FIG. 41B show a flow of still another extension algorithm. In this case, a coefficient is first filtered by the linear Wiener filter. The resulting filtered coefficient is further noise cancelled by the nonlinear noise cancellation filter.

It should be noted that the processing in accordance with the sixth embodiment can be applied to the video encoders and video decoders in accordance with the first to the fifth embodiments.

(Seventh Embodiment)

By recording a program, which realizes the video encoding method and the video decoding method described in the above embodiments, onto a recording medium, it is possible to easily perform the processing as described in the above embodiments in an independent computer system. The recording medium may be any mediums, such as a magnetic disk, an optical disk, a magnet-optical disk, an IC card, and a semiconductor memory, as far as the mediums can record the program.

Furthermore, the applications of the video encoding method and the video decoding method described in the above embodiments, and a system using such applications are described here.

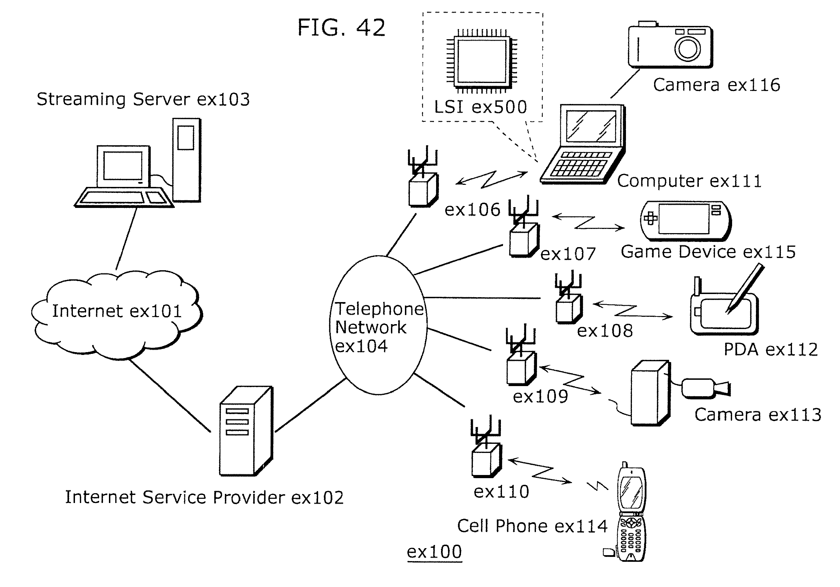

FIG. 42 is a diagram showing the overall configuration of a content supply system ex100 for realizing content distribution service. The area for providing communication service is divided into cells of desired size, and base stations ex106 to ex110 which are fixed wireless stations are placed in respective cells.

In this content supply system ex100, various devices such as a computer ex111, a personal digital assistant (PDA) ex112, a camera ex113, a cell phone ex114 and a game device ex115 are connected to the Internet ex101, via an Internet service provider ex102, a telephone network ex104 and base stations ex106 to ex110, for example.

However, the content supply system ex100 is not limited to the combination as shown in FIG. 42, and may include a combination of any of these devices which are connected to each other. Also, each device may be connected directly to the telephone network ex104, not through the base stations ex106 to ex110 which are the fixed wireless stations. Furthermore, the devices may be connected directly to one another via Near Field Communication (NFC) or the like.

The camera ex113 is a device such as a digital video camera capable of shooting moving images. A camera ex116 is a device such as a digital video camera capable of shooting still images and moving images. The cell phone ex114 may be any of a cell phone of a Global System for Mobile Communications (GSM) system, a Code Division Multiple Access (CDMA) system, a Wideband-Code Division Multiple Access (W-CDMA) system, a Long Term Evolution (LTE) system, a High Speed Packet Access (HSPA) system, a Personal Handy-phone System (PHS), and the like.

In the content supply system ex100, the camera ex113 or the like is connected to a streaming server ex103 via the base station ex109 and the telephone network ex104, which realizes live distribution or the like. In the live distribution, the encoding as described in the above embodiments is performed for a content (such as a video of a live music performance) shot by a user using the camera ex113, and the encoded content is provided to the streaming server ex103. On the other hand, the streaming server ex103 makes steam distribution of the received content data to the clients at their requests. The clients include the computer ex111, the PDA ex112, the camera ex113, the cell phone ex114, the game device ex115, and the like, capable of decoding the above-mentioned encoded data. Each device receiving the distributed data decodes the received data to be reproduced.

Here, either the camera ex113 or the streaming server ex103 for transmitting the data may encode the shot data, both of them may share the encoding. Likewise, either the client or the streaming server ex103 may decode the distributed data, or both of them may share the decoding. Also, the still image and/or moving image data shot by the camera ex116 may be transmitted not only to the camera ex113 but also to the streaming server ex103 via the computer ex111. In this case, either the camera ex116, the computer ex111, or the streaming server ex103 may perform the encoding, or all of them may share the encoding.

It should be noted that the above-described encoding and the decoding are performed by a Large Scale Integration (SLI) ex500 generally included in each of the computer ex111 and the devices. The LSI ex500 may be implemented as a single chip or a plurality of chips. It should be noted that software for encoding and decoding images may be integrated into any type of a recording medium (such as a CD-ROM, a flexible disk and a hard disk) that is readable by the computer ex111 or the like, so that the encoding and decoding are performed by using the software. Furthermore, if the cell phone ex114 is a camera-equipped cell phone, it may transmit generated moving image data. This moving image data is the data encoded by the LSI ex500 included in the cell phone ex114.

It should be noted that the streaming server ex103 may be implemented as a plurality of servers or a plurality of computers, so that data is divided into pieces to be processed, recorded, and distributed separately.

As described above, the content supply system ex100 enables the clients to receive and reproduce encoded data. Thus, in the content supply system ex100, the clients can receive information transmitted by the user, then decode and reproduce it, so that the user without specific rights nor equipment can realize individual broadcasting.

When each device included in this system performs encoding or decoding, the video encoding method or the video decoding method described in the above embodiments may be used.

The cell phone ex114 is now described as an example thereof.

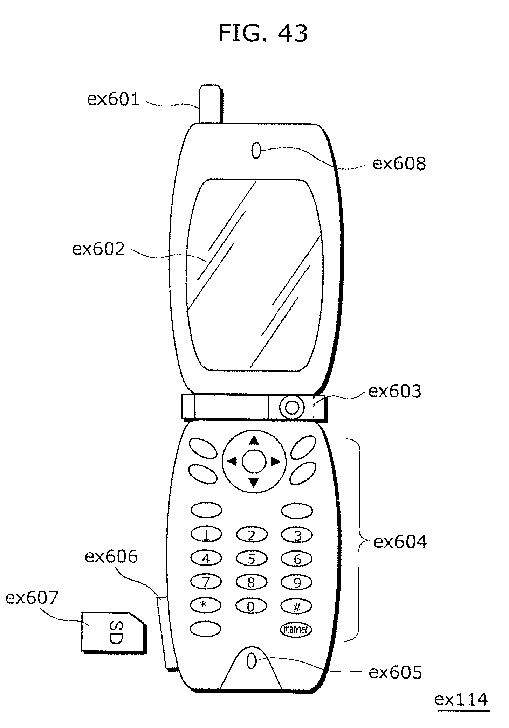

FIG. 43 is a diagram showing the cell phone ex114 which uses the video encoding method and the video decoding method as described in the above embodiments. The cell phone ex114 has: an antenna ex601 for communicating radio waves with the base station ex110; a camera unit ex603 such as a CCD camera capable of shooting moving and still images; a display unit ex602 such as a liquid crystal display for displaying the data obtained by decoding video shot by the camera unit ex603, video received by the antenna ex601, or the like; a main body including a set of operation keys ex604; a voice output unit ex608 such as a speaker for outputting voices; a voice input unit ex605 such as a microphone for inputting voices; a recording medium ex607 for storing encoded or decoded data, such as data of moving or still images shot by the camera, and data of text, moving images or still images of received e-mails; and a slot unit ex606 for attaching the recording medium ex607 into the cell phone ex114. The recording medium ex607 includes a flash memory element, a kind of Electrically Erasable and Programmable Read Only Memory (EEPROM) that is an electrically rewritable and erasable nonvolatile memory, in a plastic case such as an SD card.

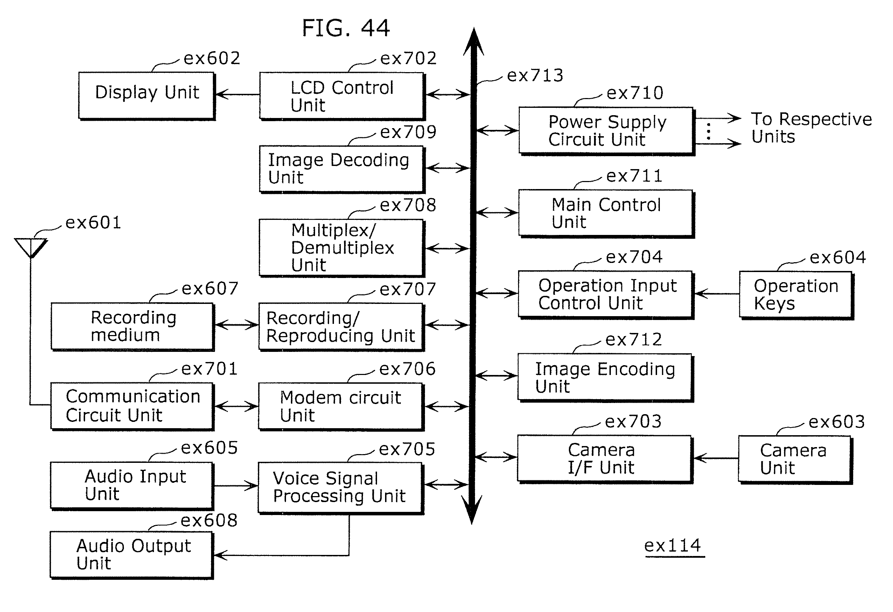

Furthermore, the cell phone ex114 is described with reference to FIG. 44. In the cell phone ex114, a power supply circuit unit ex710, an operation input control unit ex704, an image encoding unit ex712, a camera interface unit ex703, an Liquid Crystal Display (LCD) control unit ex702, an image decoding unit ex709, a multiplex/demultiplex unit ex708, a recording/reproducing unit ex707, a modem circuit unit ex706 and a voice processing unit ex705, are connected to a main control unit ex711, and to each other, via a synchronous bus ex713. The main control unit ex711 is for the overall controlling of each unit of the main body including the display unit ex602 and the operation keys ex604.

When a call-end key or a power key is turned ON by a user's operation, the power supply circuit unit ex710 supplies the respective units with power from a battery pack so as to activate the camera-equipped digital cell phone ex114 to a ready state.

In the cell phone ex114, under the control of the main control unit ex711 including a CPU, ROM, RAM and the like, the voice processing unit ex705 converts the voice signals received by the voice input unit ex605 in voice conversation mode into digital voice data, the modem circuit unit ex706 performs spread spectrum processing of the digital voice data, and the communication circuit unit ex701 performs digital-to-analog conversion and frequency transformation of the data, so as to transmit the resulting data via the antenna ex601. Also, in the cell phone ex114, the data received by the antenna ex601 in voice conversation mode is amplified and subjected to the frequency transformation and analog-to-digital conversion, the modem circuit unit ex706 performs inverse spread spectrum processing of the data, and the voice processing unit ex705 converts it into analog voice data, so as to output the resulting data via the voice output unit ex608.

Furthermore, when transmitting an e-mail in data communication mode, the text data of the e-mail inputted by operating the operation keys ex604 of the main body is sent out to the main control unit ex711 via an operation input control unit ex704. After the modem circuit unit ex706 performs spread spectrum processing of the text data and the communication circuit unit ex701 performs a digital-to-analog conversion and frequency transformation on the text data, the main control unit ex711 transmits the data to the base station ex110 via the antenna ex601.

When transmitting image data in data communication mode, the image data shot by the camera unit ex603 is provided to the image encoding unit ex712 via the camera interface unit ex703. When the image data is not transmitted, the image data shot by the camera unit ex603 can also be displayed directly on the display unit ex602 via the camera interface unit ex703 and the LCD control unit ex702.

The image encoding unit ex712, including the video encoder described in the present invention, compresses and encodes the image data provided from the camera unit ex603 by the video encoding method used for the video encoder as described in the above embodiments so as to convert it into encoded image data, and sends it out to the multiplex/demultiplex unit ex708. At this time, the cell phone ex114 sends out the voices received by the voice input unit ex605 during the shooting by the camera unit ex603, as digital voice data, to the multiplex/demultiplex unit ex708 via a voice processing unit ex705.

The multiplex/demultiplex unit ex708 multiplexes the encoded image data provided from the image encoding unit ex712 and the voice data provided from the voice processing unit ex705, and a modem circuit unit ex706 then performs spread spectrum processing of the multiplexed data obtained as the result of the processing, and the communication circuit unit ex701 performs digital-to-analog conversion and frequency transformation on the resulting data and transmits it via the antenna ex601.

As for receiving data of a moving image file which is linked to a website or the like in data communication mode, the modem circuit unit ex706 performs inverse spread spectrum processing of the data received from the base station ex110 via the antenna ex601, and sends out the multiplexed data obtained as the result of the processing to the multiplex/demultiplex unit ex708.

In order to decode the multiplexed data received via the antenna ex601, the multiplex/demultiplex unit ex708 demultiplexes the multiplexed data into an encoded bit stream of image data and an encoded bit stream of voice data, and provides the encoded image data to the image decoding unit ex709 and the voice data to the voice processing unit ex705, respectively, via the synchronous bus ex713.

Next, the image decoding unit ex709, including the video decoder described in the present invention, decodes the encoded bit stream of the image data using the decoding method corresponding to the encoding method as described in the above embodiments, so as to generate reproduced moving image data, and provides this data to the display unit ex602 via the LCD control unit ex702, and thus moving image data included in a moving image file linked to a website, for instance, is displayed. At the same time, the voice processing unit ex705 converts the voice data into analog voice data, and provides this data to the voice output unit ex608, and thus voice data included in a moving image file linked to a website, for instance, is reproduced.

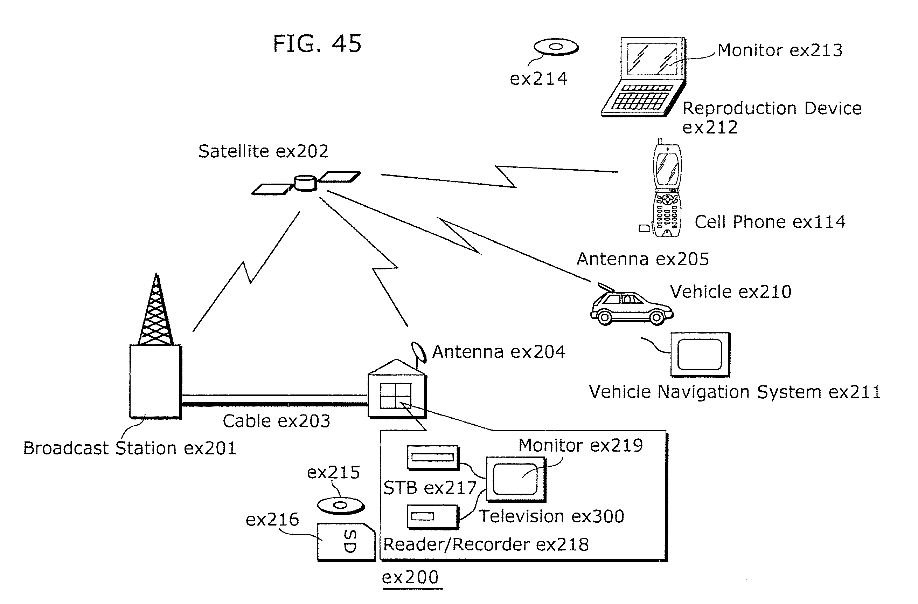

The present invention is not limited to the above-mentioned system since satellite or terrestrial digital broadcasting has been in the news lately, and at least either the video encoder or the video decoder described in the above embodiments can be incorporated into the digital broadcasting system as shown in FIG. 45. More specifically, a bit stream, which is generated by multiplexing voice data or video data or both of them, is transmitted from a broadcast station ex201 to a communication or broadcast satellite ex202 via radio waves. Upon receipt of it, the broadcast satellite ex202 transmits radio waves for broadcasting, a home antenna ex204 with a satellite broadcast reception function receives the radio waves, and a device such as a television (receiver) ex300 or a Set Top Box (STB) ex217 decodes the encoded bit stream for reproduction. The video decoder described in the above embodiments can be implemented in a reader/recorder ex218 for reading and decoding a bit stream that is generated by multiplexing image data and voice data which are recorded on recording mediums ex215 and ex216 such as a CD and a DVD that are recording mediums. In this case, the reproduced video signals are displayed on a monitor ex219. It is also conceived to implement the video decoder in the set top box ex217 connected to a cable ex203 for cable television or the antenna ex204 for satellite and/or terrestrial broadcasting so as to reproduce them on the monitor ex219 of the television. The video decoder may be incorporated into the television, not in the set top box. Also, a vehicle ex210 having an antenna ex205 can receive signals from the satellite ex202, the base station or the like, and reproduce moving images on a display device such as a vehicle navigation system ex211 or the like in the vehicle ex210.

The video decoder or video encoder described in the above embodiments can be implemented in the reader/recorder ex218 for reading and decoding an encoded bit stream that is generated by multiplexing voice data or video data or both of them recorded on the recording medium ex215 such as a DVD or a BD, or for encoding the voice data or video data or both of them and recording it as multiplexed data onto the recording medium ex215. In this case, the reproduced video signals are displayed on the monitor ex219. Moreover, the recording medium ex215, on which the encoded bitstream is recorded, enables other devices, system, and the like to reproduce the video signals. For example, the reproduction device ex212 can reproduce the video signals on a monitor ex213 by using a recording medium ex214 to which the encoded bitstream is copied.

It is also conceived to implement the video decoder in the set top box ex217 connected to the cable ex203 for cable television or the antenna ex204 for satellite and/or terrestrial broadcasting so as to reproduce them on the monitor ex219 of the television. The video decoder may be incorporated into the television, not in the set top box.

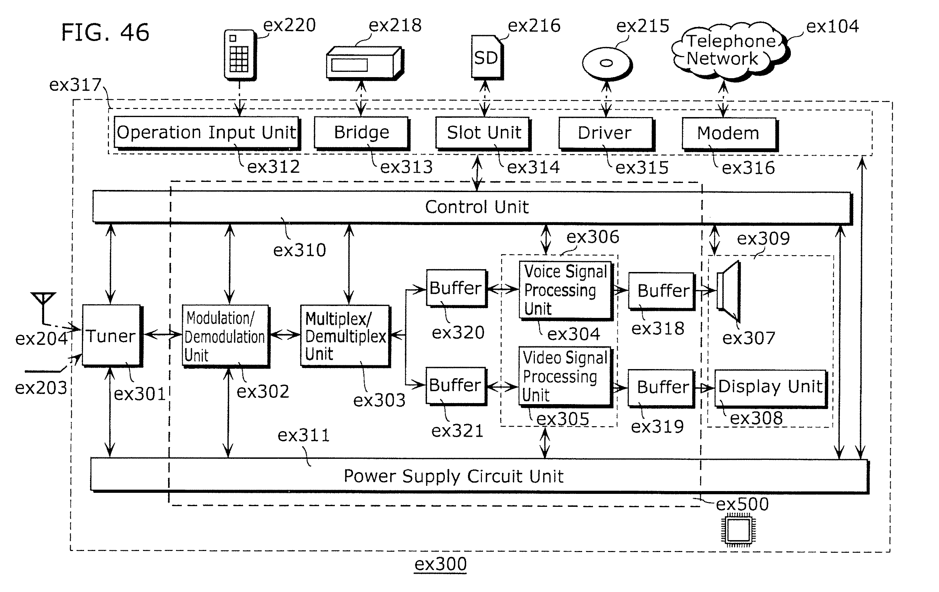

FIG. 46 is a diagram showing the television (receiver) ex300 using the video decoding method and video encoding method described in the above embodiments. The television ex300 includes: a tuner ex301 that receives or outputs a bitstream of video information via the antenna ex204, the cable ex203, or the like that receives the above broadcasting; a modulation/demodulation unit ex302 that demodulates the received encoded data or modulates generated encoded data to be transmitted to the outside; and a multiplex/demultiplex unit ex303 that demultiplexes the modulated video data from the modulated voice data or multiplexes the encoded video data and the encoded voice data. In addition, the television ex300 includes: a signal processing unit ex306 having (a) a voice signal processing unit ex304 that decodes or encodes voice data and (b) a video signal processing unit ex305 that decodes or encodes video data; and an output unit ex309 having (c) a speaker ex307 that outputs the decoded voice signal and (d) a display unit ex308, such as a display, that displays the decoded video signal. Furthermore, the television ex300 includes an interface unit ex317 having an operation input unit ex312 that receives inputs of user operations, and the like. Moreover, the television ex300 includes: a control unit ex310 for the overall controlling of the respective units; and a power supply circuit unit ex311 that supplies the respective units with power. In addition to the operation input unit ex312, the interface unit ex317 may include: a bridge ex313 connected to external devices such as the reader/recorder ex218; a slot unit ex314 enabling the recording medium ex216 such as a SD card to be attached to the interface unit ex317; a driver ex315 for connecting to an external recording medium such as a hard disk; a modem ex316 connected to a telephone network; and the like. It should be noted that the recording medium ex216 enables information to be electrically recorded on a stored nonvolatile/ volatile semiconductor memory device. The units in the television ex300 are connected to one another via a synchronous bus.

First, the description is given for the structure by which the television ex300 decodes and reproduces data received from the outside via the antenna ex204 or the like. The television ex300 receives a user operation from a remote controller ex220 or the like. Then, under the control of the control unit ex310 having a CPU and the like, the television ex300 demodulates video data and voice data at the modulation/demodulation unit ex302, and demultiplexes the demodulated video data from the demodulated voice data at the multiplex/demultiplex unit ex303. In addition, the television ex300 decodes the demultiplexed voice data at the voice signal processing unit ex304, and decodes the demultiplexed video data at the video signal processing unit ex305 using the decoding method described in the above embodiments. The decoded voice signal and the decoded video signal are separately outputted from the output unit ex309 to the outside. When outputting the signals, the signals may be temporarily accumulated in, for example, buffers ex318 and ex319, so that the voice signal and the video signal are reproduced in synchronization with each other. Furthermore, the television ex300 may read the encoded bitstream, not from broadcasting or the like but from the recording mediums ex215 and ex216 such as a magnetic/optical disk and a SD card. Next, the description is given for the structure by which the television ex300 encodes voice signal and video signal, and transmits the encoded signals to the outside or writes them onto a recording medium or the like. The television ex300 receives a user operation from the remote controller ex220 or the like, and then, under the control of the control unit ex310, encodes voice signal at the voice signal processing unit ex304, and encodes video data at the video signal processing unit ex305 using the encoding method described in the above embodiments. The encoded voice signal and the encoded video signal are multiplexed at the multiplex/demultiplex unit ex303 and then outputted to the outside. When multiplexing the signals, the signals may be temporarily accumulated in, for example, buffers ex320 and ex321, so that the voice signal and the video signal are in synchronization with each other. It should be noted that the buffers ex318 to ex321 may be implemented as a plurality of buffers as shown, or may share one or more buffers. It should also be noted that, besides the shown structure, it is possible to include a buffer, for example, between the modulation/demodulation unit ex302, so that the buffer serves as a buffer preventing system overflow and underflow, and thereby accumulate data in the buffer.

It should also be noted that, in addition to the structure for receiving voice data and video data from broadcasting, recording mediums, and the lie, the television ex300 may also have a structure for receiving audio inputs from a microphone and a camera, so that the encoding is preformed for the received data. Here, although it has been described that the television ex300 can perform the above-described encoding, multiplexing, and providing to the outside, it is also possible that the television ex300 cannot perform all of them but can perform one of the encoding, multiplexing, and providing to the outside.

It should be noted that, when the reader/recorder ex218 is to read or write an encoded bitstream from/into a recording medium, either the television ex300 or the reader/recorder ex218 may perform the above-described decoding or encoding, or the television ex300 and the reader/recorder ex218 may share the above-described decoding or encoding.

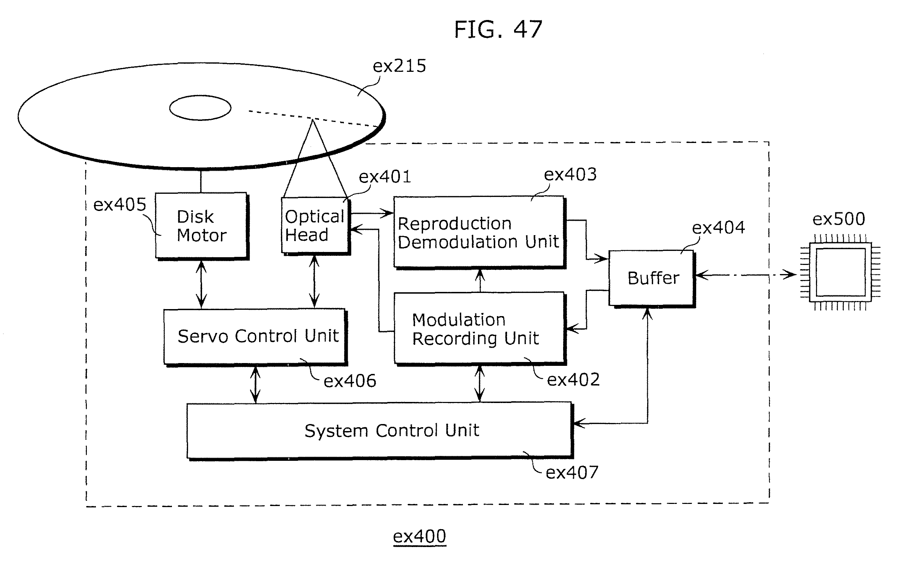

For one example, FIG. 47 shows a structure of an information reproducing/recording unit ex400 in the case where data is read from or written into an optical disk. The information reproducing/recording unit ex400 includes the following units ex401 to ex407. The optical head ex401 writes information into the recording medium ex215 as an optical disk by irradiating laser spot on a recording surface of the recording medium ex215, and reads information from the recording medium ex215 by detecting light reflected on the recording surface of the recording medium ex215. The modulation recording unit ex402 electrically drives a semiconductor laser included in the optical head ex401, and thereby modulates laser light according to recorded data. A reproduction demodulation unit ex403 amplifies reproduction signal that is obtained by electrically detecting light reflected on the recording surface by a photo detector included in the optical head ex401, then demultiplexes and demodulates signal components recorded on the recording medium ex215, and reproduces necessary information. A buffer ex404 temporarily holds the information to be recorded onto the recording medium ex215, and the information reproduced from the recording medium ex215. A disk motor ex405 rotates the recording medium ex215. A servo control unit ex406 moves the optical head ex401 to a predetermined information track while controlling rotation driving of the disk motor ex405, thereby performing tracking processing of the laser spot. The system control unit ex407 controls the overall information reproducing/recording unit ex400. The above-described reading and writing are realized when the system control unit ex407 records and reproduces information via the optical head ex401 while cooperating the modulation recording unit ex402, the reproduction demodulation unit ex403, and the servo control unit ex406, by using various information stored in the buffer ex404 and new information generated and added as needed. The system control unit ex407 includes, for example, a microprocessor, and performs the above processing by executing a reading/writing program.

Although it has been described above that the optical head ex401 irradiates laser spot, the optical head ex401 may perform higher-density recording by using near-field light.

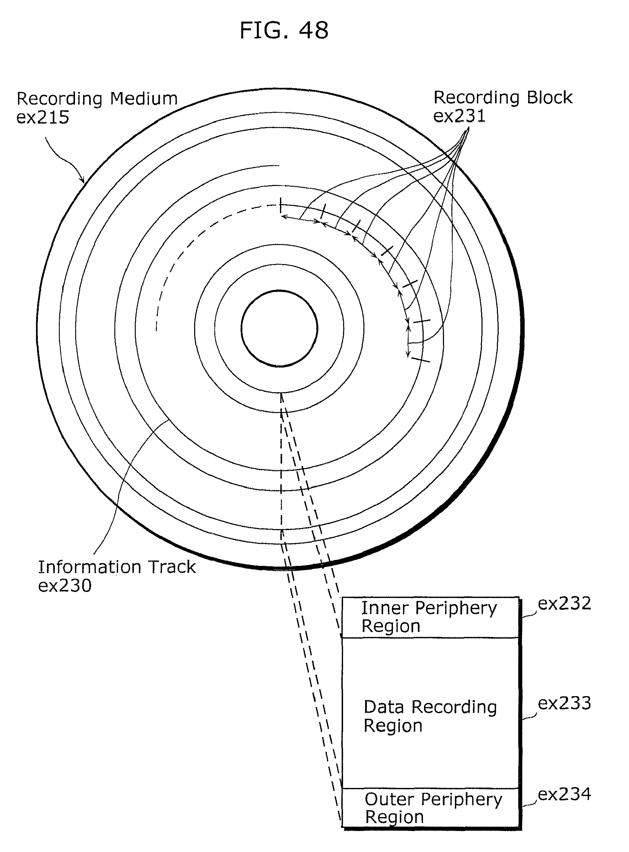

FIG. 48 shows a schematic diagram of the recording medium ex215 that is an optical disk. On the recording surface of the recording medium ex215, guide grooves are formed in a spiral shape, and on an information track ex230, address information indicating an absolute position on the disk is previously recorded using a change of the groove shape. The address information includes information for identifying a position of a recording block ex231 that is a unit for recording data, and a devise performing recording and reproduction is capable of specifying the recording block by reproducing the information track ex230 to read the address information. Moreover, the recording medium ex215 includes a data recording region ex233, an inner periphery region ex232, and an outer periphery region ex234. The data recording region ex233 is a region on which user data is recorded. The inner periphery region ex232 and the outer periphery region ex234 which are provided in the inner periphery and the outer periphery, respectively, of the data recording region ex233 are for specific uses except the user data recording. The information reproducing/recording unit ex400 reads/writes encoded voice data and video data or encoded data generated by multiplexing them, from/into such data recording region ex233 of the recording medium ex215.

Although the above has been described giving the example of a one-layer optical disk such as a DVD or a BD, the optical disk is not limited to the above but may be a multi-layer optical disk so that data can be recorded onto other regions in addition to the surface. Furthermore, the optical disk may have a structure for multidimensional recording/reproducing, such as data recording using color lights having various different wavelengths on the same position of the disk, or recording of layers of different pieces of information from various angles.

It should also be noted that it is possible in the digital broadcasting system ex200 that the vehicle ex210 having the antenna ex205 receives data from the satellite ex202 or the like, and reproduces moving images on the display device such as the vehicle navigation system ex211 or the like in the vehicle ex210. As for the configuration of the vehicle navigation system ex211, a configuration added with a GPS receiving unit to the units as shown in FIG. 46, is conceivable. The same applies to the computer ex111, the cell phone ex114 and others. Moreover, likewise the television ex300, three types of implementations can be conceived for a terminal such as the above-mentioned cell phone ex114: a communication terminal equipped with both an encoder and a decoder; a sending terminal equipped with an encoder only; and a receiving terminal equipped with a decoder only.

Thus, the video encoding method and the video decoding method described in the above embodiments can be used in any of the above-described devices and systems, and thereby the effects described in the above embodiments can be obtained.

It should be noted that the present invention is not limited to the above embodiments but various variations and modifications are possible in the embodiments without departing from the scope of the present invention.

(Eighth Embodiment)

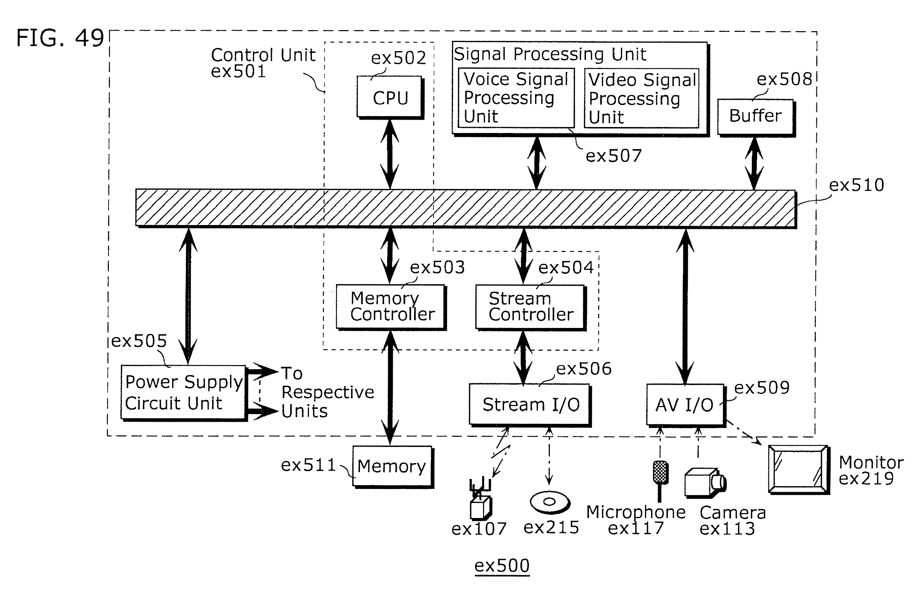

The video encoding method, the video encoder, the video decoding method, and the video decoder described in the above embodiments are typically implemented into a Large Scale Integration (LSI) which is an integrated circuit. As one example, FIG. 49 shows a structure of a LSI ex500 on which they are integrated into a single chip. The LSI ex500 includes the following units ex501 to ex509 which are connected to one another via a bus ex510. When a power source is ON, a power supply circuit unit ex505 supplies power to the respective units to activate them to be capable of operating.

For example, in the case of encoding, the LSI ex500 receives input audio/visual (AV) signals from an AV I/O ex509 via the microphone ex117, the camera ex113, or the like, under the control of the control unit ex501 having a CPU ex502, a memory controller ex503, a stream controller ex504, and the like. The input AV signals are temporarily accumulated in an external memory ex511 such as a SDRAM. Under the control of the control unit ex501, the accumulated data is, for example, divided into a plurality of times depending on a processing amount and a processing speed, and eventually provided to a signal processing unit ex507. The signal processing unit ex507 performs encoding of voice signal and/or encoding of video signal. Here, the encoding of video signal is the encoding described in the above embodiments. Furthermore, the signal processing unit ex507 performs multiplexing of the encoded voice data and the encoded video data and other processing as needed, and provides the resulting data from a stream I/O ex506 to the outside. The output bitstream is transmitted to the base station ex107, or written to the recording medium ex215. It is preferable that the above signals are temporarily accumulated in a buffer ex508 so that they are multiplexed in synchronization with each other.

Moreover, for example, in the case of decoding, under the control of the control unit ex501, the LSI ex500 temporarily accumulates, to a memory ex511 or the like, encoded data that is obtained using the stream I/O ex506 via the base station ex107, or encoded data that is obtained by reading it from the recording medium ex215. Under the control of the control unit ex501, the accumulated data is, for example, divided into a plurality of times depending on a processing amount and a processing speed, and eventually provided to the signal processing unit ex507. The signal processing unit ex507 performs decoding of voice signal and/or decoding of video signal. Here, the decoding of video signal is the decoding described in the above embodiments. It is preferable that the decoded voice signal and the decoded video signal are temporarily accumulated in the buffer ex508 as needed, so that they can be reproduced in synchronization with each other. The decoded output signal is outputted from each output unit of the cell phone ex114, the game device ex115, the television ex300, and the like, appropriately via the memory ex511 or the like.

Although it has been described above that the memory ex511 is outside the LSI ex500, the memory ex511 may be included in the LSI ex500. It is also possible that the buffer ex508 is not limited to one buffer but may include a plurality of buffers. It is further possible that the LSI ex500 may be integrated into a single chip, or may be integrated separately.

Here, the integrated circuit is referred to as a LSI, but the integrated circuit can be called an IC, a system LSI, a super LSI or an ultra LSI depending on their degrees of integration.

The technique of integrated circuit is not limited to the LSI, and it may be implemented as a dedicated circuit or a general-purpose processor. It is also possible to use a Field Programmable Gate Array (FPGA) that can be programmed after manufacturing the LSI, or a reconfigurable processor in which connection and setting of circuit cells inside the LSI can be reconfigured.

Furthermore, if due to the progress of semiconductor technologies or their derivations, new technologies for integrated circuits appear to be replaced with the LSIs, it is, of course, possible to use such technologies to implement the functional blocks as an integrated circuit. For example, biotechnology and the like can be applied to the above implementation.

Although the video encoding method, the video encoder, the video decoding method, and video decoder in accordance with the present invention has been described with reference to the embodiments, the present invention is not limited to the embodiments. Those skilled in the art will be readily appreciated that various modifications and combinations of the structural elements and functions in the embodiments are possible without materially departing from the novel teachings and advantages of the present invention. Accordingly, all such modifications and combinations are intended to be included within the scope of this invention.

Industrial Applicability

The present invention is useful for a video encoding method (encoder) and a video decoding method (decoder).

Numerical References

| | |
|---|---|
| 100, 400, 500, 600, 1300A, 1300B, 1500, 1800, 2100, 2200, 2300, 2800, 320 | video encoder |
| 105 | subtractor |
| 110 | transform/quantization unit |
| 120, 220 | inverse quantization/inverse transformation unit |
| 125, 225 | adder |
| 130, 230 | deblocking filter |
| 140, 240, 3020, 3120 | memory |
| 150, 250 | interpolation filter |
| 160, 260 | motion compensated prediction unit |
| 165 | motion estimation unit |
| 170, 270 | intra-frame prediction unit |
| 175, 275 | switch |
| 180, 640 | post filter design unit |
| 190, 490, 590, 690, 1590, 1890, 2190, 2290, 2390, 2890 | entropy encoding unit |
| 200, 700, 1400A, 1400B, 1600, 1900, 2400, 2900, 3203 | video decoder |
| 280, 740 | post filter |
| 290, 1690, 1990, 2490, 2990 | entropy decoding unit |
| 300, 930, 1130 | Wiener filter |
| 440, 540 | Wiener filter/design unit |
| 810, 910, 1110 | DCT unit |
| 820, 920, 112 | inverse DCT unit |
| 1301, 1311, 1401, 1411, 1441 | video signal |
| 1310, 1410, 2010 | transformation unit |
| 1330, 1530, 1830, 2330 | filter design unit |
| 641, 1331, 1431, 1531, 1691, 1831, 1991, 2131, 2231, 2331, 2491 | filter information |
| 1420 | inverse transformation unit |
| 1435 | filter set unit |
| 1440, 1540, 1640, 1740, 1940, 2040, 2440, 2880, 2980, 3030, 3130 | filter |
| 1520, 1620, 2020, 3040, 3140 | inverse transformation unit |
| 1741, 2041 | transformation coefficient |
| 2140, 2230 | filter/design unit |
| 2710, 2720, 2730, 2750, 2760, 2770 | frame |
| 2701, 2702, 2703, 2751, 2752, 2753 | block |
| 2780 | motion vector |
| 3010, 3110 | inverse quantization unit |
| 3041, 3141 | signal |
| 3001, 3101 | current block |

| 3002, 3102 | neighboring blocks |
| 3202 | channel |
| ex100 | content supply system |
| ex101 | Internet |
| ex102 | Internet service provider |
| ex103 | streaming server |
| ex104 | telephone network |
| ex106, ex107, ex108, ex109, ex110 | base station |
| ex111 | computer |
| vex112 | PDA |
| ex113, ex116 | camera |
| ex114 | camera-equipped cell phone (cell phone) |
| ex115 | game device |
| ex117 | microphone |
| ex200 | digital broadcasting system |
| ex201 | broadcast station |
| ex202 | broadcast satellite (satellite) |
| ex203 | cable |
| ex204, ex205, ex601 | antenna |
| ex210 | vehicle |
| ex211 | vehicle navigation system |
| ex212 | reproduction device |
| ex213, ex219 | monitor |
| ex214, ex215, ex216, ex607 | recording medium |
| ex217 | Set Top Box (STB) |
| ex218 | reader/recorder |
| ex220 | remote controller |
| ex230 | information track |
| ex231 | recording block |
| ex232 | inner periphery region |
| ex233 | data recording region |
| ex234 | outer periphery region |
| ex300 | television |
| ex301 | tuner |
| ex302 | modulation/demodulation unit |
| ex303 | multiplex/demultiplex unit |
| ex304 | voice signal processing unit |
| ex305 | video signal processing unit |
| ex306, ex507 | signal processing unit |
| ex307 | speaker |
| ex308, ex602 | display unit |
| ex309 | output unit |
| ex310, ex501 | control unit |
| ex311, ex505, ex710 | power supply circuit unit |
| ex312 | operation input unit |
| ex313 | bridge |
| ex314, ex606 | slot unit |
| ex315 | driver |
| ex316 | modem |
| ex317 | interface unit |
| ex318, ex319, ex320, ex321, ex404, ex508 | buffer |
| ex400 | information reproducing/recording unit |
| ex401 | optical head |
| ex402 | modulation recording unit |
| ex403 | reproduction demodulation unit |
| ex405 | disk motor |
| ex406 | servo control unit |

| | |
|---|---|
| ex407 | system control unit |
| ex500 | LSI |
| ex502 | CPU |
| ex503 | memory controller |
| ex504 | stream controller |
| ex506 | stream I/O |
| ex509 | AV I/O |
| ex510 | bus |
| ex603 | camera unit |
| ex604 | operation keys |
| ex605 | voice input unit |
| ex608 | voice output unit |
| ex701 | communication circuit unit |
| ex702 | LCD control unit |
| ex703 | camera interface unit (camera I/F unit) |
| ex704 | operation input control unit |
| ex705 | voice signal processing unit |
| ex706 | modem circuit unit |
| ex707 | recording/reproducing unit |
| ex708 | multiplex/demultiplex unit |
| ex709 | image decoding unit |
| ex711 | main control unit |
| ex712 | image encoding unit |
| ex713 | synchronous bus |

**Claims**

1. A video decoding method of decoding an encoded signal generated by encoding a video signal, said video decoding method comprising:

    obtaining (a) the encoded signal and (b) filter information for specifying filtering;
    generating a decoded signal by decoding the encoded signal; and
    applying the filtering to the decoded signal in frequency domain by using the filter information, the filtering being applied to cancel, for each of frequency components in the decoded signal in the frequency domain, noise superposed during the encoding of the video signal,
    wherein the filter information includes information for minimizing a mean squared error between (a) the video signal in the frequency domain and (b) the decoded signal in the frequency domain to which the filtering has been applied.

2. The video decoding method according to Claim 1,
    wherein the filtering includes applying, for each of blocks included in the decoded signal by using a weight coefficient included in the filter information, weighted addition to (a) a value of each of frequency components in a current block that is the each of blocks and (b) a value of a frequency component in a temporally or spatially neighboring block of the current block, the frequency component in the neighboring block corresponding to the each of frequency components in the current block, and
    the weight coefficient is determined to minimize a mean squared error between (a) the current block in the frequency domain to which the filtering has been applied and (b) a block in the video signal in the frequency domain which corresponds to the current block.

3. The video decoding method according to Claim 2,
    wherein the filtering further includes:

    subtracting a first offset value from the value of the each of the frequency components, for the current block to which the weighted addition has not yet been applied; and
    adding a second offset value included in the filter information to the value of the each of the frequency components, for the current block to which the weighted addition has been applied,
    wherein the first offset value is calculated for the each of the frequency components by using a plurality of temporally or spatially consecutive blocks including the current block, among the blocks included in the decoded signal in the frequency domain, and

the second offset value is calculated for the each of the frequency components by using a plurality of temporally or spatially consecutive blocks including a block corresponding to the current block, among blocks included in the video signal in the frequency domain.

4. The video decoding method according to Claim 1,
wherein the encoded signal is generated by: transforming the video signal from spatial domain into the frequency domain; quantizing the transformed video signal; and applying entropy encoding to the quantized video signal,
said generating of the decoded signal includes applying entropy decoding to the encoded signal to generate a quantized coefficient as the decoded signal, and
said applying of the filtering includes: applying the filtering to the quantized coefficient; and inversely quantizing the quantized coefficient to which the filtering has been applied.

5. The video decoding method according to Claim 1,
wherein the encoded signal is generated by: subtracting a prediction signal from the video signal; transforming the subtracted video signal from spatial domain into the frequency domain; quantizing the transformed video signal; and applying entropy encoding to the quantized video signal,
said generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate an inversely transformed signal; and adding the prediction signal to the inversely transformed signal to generate a reconstructed signal as the decoded signal, and
said applying of the filtering includes: transforming the reconstructed signal from the spatial domain into the frequency domain; applying the filtering to the reconstructed signal transformed into the frequency domain; and inversely transforming the reconstructed signal applied with the filtering from the frequency domain into the spatial domain.

6. The video decoding method according to Claim 1,
wherein the encoded signal is generated by: subtracting a prediction signal from the video signal to generate a prediction error signal; transforming the prediction error signal from the spatial domain into the frequency domain; quantizing the transformed prediction error signal; and applying entropy encoding to the prediction error signal that has been quantized,
said generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate a quantized prediction error signal; and adding the prediction signal to the quantized prediction error signal to generate a reconstructed signal,
the filtering includes applying, by using a weight coefficient included in the filter information, weighted addition to values of same frequency component in respective blocks in (a) the quantized prediction error signal as the decoded signal, (b) the prediction signal, and (c) the reconstructed signal, the respective blocks corresponding to each other, and
the weight coefficient is determined to minimize a mean squared error between (a) the prediction error signal in the frequency domain and (b) the quantized prediction error signal in the frequency domain to which the filtering has been applied.

7. The video decoding method according to Claim 1,
wherein the encoded signal is generated by: subtracting a prediction signal from the video signal; transforming the subtracted video signal from spatial domain into the frequency domain; quantizing the transformed video signal; and applying entropy encoding to the quantized video signal, and
said generating of the decoded signal includes: applying entropy decoding to the encoded signal to generate an entropy-decoded signal; inversely quantizing the entropy-decoded signal to generate an inversely quantized signal; inversely transforming the inversely quantized signal from the frequency domain into the spatial domain to generate a quantized prediction error signal; and adding the prediction signal to the quantized prediction error signal to generate a reconstructed signal as the decoded signal, and
said applying of the filtering includes: transforming the prediction signal from the spatial domain into the frequency domain; applying the filtering to the prediction signal transformed into the frequency domain; and inversely transforming the prediction signal applied with the filtering from the frequency domain into the spatial domain.

8. A video encoding method of encoding a video signal to generate an encoded signal, said video encoding method comprising:

   generating the encoded signal by, at least, (a) transforming the video signal from spatial domain into frequency domain and (b) quantizing the transformed video signal to generate a quantized signal in the frequency domain;
   generating filter information for specifying filtering that is applied to cancel, for each of frequency components in the quantized signal in the frequency domain, noise superposed during the quantization; and
   outputting the encoded signal and the filter information,
   wherein the filter information is determined to minimize a mean squared error between (a) the video signal in the frequency domain and (b) the quantized signal in the frequency domain to which the filtering has been applied.

9. The video encoding method according to Claim 8, further comprising
   applying the filtering to the quantized signal in the frequency domain by using the filter information,
   wherein the filtering includes applying, for each of blocks included in the quantized signal as a current block by using a weight coefficient included in the filter information, weighted addition to (a) a value of each of frequency components in the current block and (b) a value of a frequency component in a temporally or spatially neighboring block of the current block, the frequency component in the neighboring block corresponding to the each of frequency components in the current block, and
   said generating of the filter information includes determining the weight coefficient to minimize a mean squared error between (a) the current block to which the filtering has been applied and (b) a block in the video signal in the frequency domain which corresponds to the current block.

10. The video encoding method according to Claim 9,
    wherein the filtering includes: subtracting a first offset value from the value of the each of the frequency components, for the current block to which the weighted addition has not yet been applied; and adding a second offset value to the value of the each of the frequency components, for the current block to which the weighted addition has been applied, and
    said generating of the filter information includes:

    calculating the first offset value for the each of the frequency components by using a plurality of temporally or spatially consecutive blocks including the current block, among the blocks included in the quantized signal in the frequency domain; and
    calculating the second offset value for the each of the frequency components by using a plurality of temporally or spatially consecutive blocks including a block corresponding to the current block, among blocks included in the video signal in the frequency domain,
    wherein at least the second offset value is included in the filter information.

11. The video encoding method according to Claim 8,
    wherein said generating of the encoded signal includes:

    subtracting a prediction signal from the video signal to generate a prediction error signal; transforming the prediction error signal from the spatial domain into the frequency domain; and quantizing the transformed prediction error signal to generate a quantized coefficient, and
    said generating of the filter information includes determining the filter information to minimize a mean squared error between (a) the prediction error signal in the frequency domain and (b) the quantized prediction error signal in the frequency domain to which the filtering has been applied.

12. The video encoding method according to Claim 8,
    wherein said generating of the encoded signal includes:

    quantizing the video signal in the frequency domain; and inversely quantizing the quantized video signal to generate a reconstructed signal, and
    said generating of the filter information includes determining the filter information to minimize a mean squared error between (a) the video signal in the frequency domain and (b) the reconstructed signal in the frequency domain to which the filtering has been applied.

13. The video encoding method according to Claim 8,
    wherein said generating of the encoded signal includes:

subtracting a prediction signal from the video signal to generate a prediction error signal; transforming the prediction error signal from the spatial domain into the frequency domain; quantizing the transformed prediction error signal; inversely quantizing the prediction error signal that has been quantized; transforming the inversely quantized prediction error signal from the frequency domain into the spatial domain to generate a quantized prediction error signal; and adding the prediction signal to the quantized prediction error signal to generate a reconstructed signal, and

said generating of the filter information includes determining, based on the (a) the prediction error signal in the frequency domain and (b) the quantized prediction error signal in the frequency domain, and (c) the reconstructed signal in the frequency domain, the filter information to minimize a mean squared error between (a) the prediction error signal in the frequency domain and (b) the quantized prediction error signal in the frequency domain to which the filtering has been applied.

14. The video encoding method according to Claim 8,
wherein said generating of the encoded signal includes:

subtracting a prediction signal from the video signal to generate a prediction error signal; transforming the prediction error signal from the spatial domain into the frequency domain; quantizing the transformed prediction error signal; inversely quantizing the prediction error signal that has been quantized; transforming the inversely quantized prediction error signal from the frequency domain into the spatial domain to generate a quantized prediction error signal; and adding the prediction signal to the quantized prediction error signal to generate a reconstructed signal, and

said generating of the filter information includes determining the filter information to minimize a mean squared error between (a) the video signal in the frequency domain and (b) the prediction signal in the frequency domain to which the filtering has been applied.

15. A video decoder decoding an encoded signal generated by encoding a video signal, said video decoder comprising:

an obtainment unit configured to obtain (a) the encoded signal and (b) filter information for specifying filtering; a decoding unit configured to generate a decoded signal by decoding the encoded signal; and a filter unit configured to apply the filtering to the decoded signal in frequency domain by using the filter information, the filtering being applied to cancel, for each of frequency components in the decoded signal in the frequency domain, noise superposed during the encoding of the video signal,

wherein the filter information includes information for minimizing a mean squared error between (a) the video signal in the frequency domain and (b) the decoded signal in the frequency domain to which the filtering has been applied.

16. A video encoder encoding a video signal to generate an encoded signal, said video encoder comprising:

an encoding unit configured to generate the encoded signal by, at least, (a) transforming the video signal from spatial domain into frequency domain and (b) quantizing the transformed video signal to generate a quantized signal in the frequency domain;

a filter design unit configured to generate filter information for specifying filtering that is applied to cancel, for each of frequency components in the quantized signal in the frequency domain, noise superposed during the quantization; and

an output unit configured to output the encoded signal and the filter information,

wherein the filter information is determined to minimize a mean squared error between (a) the video signal in the frequency domain and (b) the quantized signal in the frequency domain to which the filtering has been applied.

17. A program for decoding an encoded signal generated by encoding a video signal, said program causing a computer to execute:

obtaining (a) the encoded signal and (b) filter information for specifying filtering; generating a decoded signal by decoding the encoded signal; and applying the filtering to the decoded signal in frequency domain by using the filter information, the filtering being applied to cancel, for each of frequency components in the decoded signal in the frequency domain, noise superposed during the encoding of the video signal,

wherein the filter information includes information for minimizing a mean squared error between (a) the video signal in the frequency domain and (b) the decoded signal in the frequency domain to which the filtering has been applied.

18. A program for encoding a video signal to generate an encoded signal, said program causing a computer to execute:

generating the encoded signal by, at least, (a) transforming the video signal from spatial domain into frequency domain and (b) quantizing the transformed video signal to generate a quantized signal in the frequency domain; generating filter information for specifying filtering that is applied to cancel, for each of frequency components in the quantized signal in the frequency domain, noise superposed during the quantization; and outputting the encoded signal and the filter information, wherein the filter information is determined to minimize a mean squared error between (a) the video signal in the frequency domain and (b) the quantized signal in the frequency domain to which the filtering has been applied.

19. An integrated circuit decoding an encoded signal generated by encoding a video signal, said integrated circuit comprising:

an obtainment unit configured to obtain (a) the encoded signal and (b) filter information for specifying filtering; a decoding unit configured to generate a decoded signal by decoding the encoded signal; and a filter unit configured to apply the filtering to the decoded signal in frequency domain by using the filter information, the filtering being applied to cancel, for each of frequency components in the decoded signal in the frequency domain, noise superposed during the encoding of the video signal, wherein the filter information includes information for minimizing a mean squared error between (a) the video signal in the frequency domain and (b) the decoded signal in the frequency domain to which the filtering has been applied.

20. An integrated circuit encoding a video signal to generate an encoded signal, said integrated circuit comprising:

an encoding unit configured to generate the encoded signal by, at least, (a) transforming the video signal from spatial domain into frequency domain and (b) quantizing the transformed video signal to generate a quantized signal in the frequency domain; a filter design unit configured to generate filter information for specifying filtering that is applied to cancel, for each of frequency components in the quantized signal in the frequency domain, noise superposed during the quantization; and an output unit configured to output the encoded signal and the filter information, wherein the filter information is determined to minimize a mean squared error between (a) the video signal in the frequency domain and (b) the quantized signal in the frequency domain to which the filtering has been applied.

FIG. 1

Video Encoder

## FIG. 2

Video Decoder 200

Input Signal → Entropy Decoding Unit (290) → Inverse Quantization/Inverse Transformation Unit (220)

Quantized Prediction Error Signal

(225) + → Deblocking Filter (230) → Decoded Signal → Post Filter (280) → Output Signal

Post Filter Information

Reconstructed Signal

Prediction Signal

Memory (240)

Intra-Frame Prediction Unit (270)

275

Intra/Inter

Motion Compensated Prediction Unit (260)

Interpolation Filter (250)

Motion Data

EP 2 352 293 A1

47

## FIG. 3

## FIG. 4

EP 2 352 293 A1

## FIG. 5

Input Signal → ⊕ 105 → Transformation/ Quantization Unit 110 → Quantized Coefficients → Entropy Encoding Unit 590

Inverse Quantization/Inverse Transformation Unit 120

Prediction Signal

125 ⊕ → Filter Coefficient

Deblocking Filter 130

541

Intra-Frame Prediction Unit 170

Wiener Filter/ Design Unit 540

175

Motion Compensated Prediction Unit 160

Interpolation Filter 150

Memory 140

Motion Data

Intra/Inter

Motion Estimation Unit 165

Video Encoder 400

EP 2 352 293 A1

## FIG. 6

EP 2 352 293 A1

## FIG. 7

EP 2 352 293 A1

# FIG. 8

Decoding Error

Decoding Unit → (+) [+, +] → Nonlinear Noise Cancellation Filter → Display Unit

Motion Compensated Prediction Unit ← Z⁻¹ ←

Reference Frame

# FIG. 9A

$T_1, \ldots, T_{16}$

$y \rightarrow$ | Transformation Unit | $\rightarrow d_1, \ldots, d_{16}$

# FIG. 9B

$\tau_{1,k-1}, \ldots, \tau_{16,k-1}$   $f_{1,k-1}, \ldots, f_{16,k-1}$

$d_1, \ldots, d_{16} \rightarrow$ | Coefficient Noise Cancellation Unit |

$\hat{c}_{1,k}, \ldots, \hat{c}_{16,k}$

| Weighted Inverse Transformation Unit |

$\hat{u}_k$

| Masking Unit |

$T_1, \ldots, T_{16}$

$\hat{x}_k$

| Transformation Unit |

$(k{+}{=}1)$

# FIG. 10

Transformation
1

Transformation
2

Transformation
3

Transformation
4

Transformation
5

. . .

Transformation
13

. . .

Transformation
16

# FIG. 11A

$$T_1 \ldots T_{16}$$

$x \rightarrow$ | Transformation Unit | $\rightarrow c_1 \ldots c_{16}$

# FIG. 11B

$$T_1 \ldots T_{16}$$

$y \rightarrow$ | Transformation Unit | $\rightarrow d_1 \ldots d_{16}$

# FIG. 12

Transformation 1            Transformation 7

Pixel n

$$u_k(n) = \alpha_1(n)T_1^{-1}[\hat{c}_{1,k}](n) + \ldots + \alpha_7(n)T_7^{-1}[\hat{c}_{7,k}](n) + \ldots$$

Blocks in Transformation 7 among blocks including pixel n do not include a plurality of objects (include only a single object). Therefore, the blocks for which noise cancellation is performed using Transformation 7 are set to have a greater degree of contribution to pixel n. In other words, the following relationship is established.

$$\alpha_7(n) > \alpha_1(n). \quad \left( \alpha_i(n) \geq 0, \sum_{i=1}^{16} \alpha_i(n) = 1 \right)$$

When restriction is applied so that a sum of weighting is 1, weighted noise cancellation results in cross-correlation robust.

EP 2 352 293 A1

# FIG. 13

EP 2 352 293 A1

# FIG. 14

FIG. 15

$s$ $\longrightarrow$ $n_q$ $\oplus$ $s'$ $\longrightarrow$ 930 $h_s$ $s''$ $\longrightarrow$

FIG. 16

FIG. 17

FIG. 18A

FIG. 18B

FIG. 19A

FIG. 19B

**FIG. 20A**

EP 2 352 293 A1

# FIG. 20B

```
          ( Image Encoding )
                  │
                  ▼
     ┌─────────────────────────┐    S11
     │ Subtract prediction      │
     │ block from current block │
     └─────────────────────────┘
                  │
                  ▼
     ┌──────────────────┐   S12
     │ Quantize prediction │
     │ error signal       │
     └──────────────────┘
                  │
                  ▼
     ┌─────────────────────────┐   S13
     │ Generate filter information│
     └─────────────────────────┘
         │                    │
         │                    ▼
         │          ┌──────────────────┐   S15
    S14  │          │ Apply filtering to │
         ▼          │ quantized coefficients│
  ┌──────────────┐  └──────────────────┘
  │ Apply entropy │           │
  │ encoding to   │           ▼
  │ quantized     │  ┌──────────────────┐  S16
  │ coefficients  │  │ Generate           │
  └──────────────┘  │ prediction block   │
         │          └──────────────────┘
         │                    │
         └─────────┬──────────┘
                   ▼
              ( End )
```

FIG. 21A

# FIG. 21B

```
        ┌─────────────────────┐
        │   Image Decoding    │
        └─────────────────────┘
                  │
                  ▼
  ┌─────────────────────────────┐
  │ Apply entropy decoding      │ ⌐ S21
  │ to quantized coefficients   │
  └─────────────────────────────┘
                  │
                  ▼
  ┌─────────────────────────────┐
  │ Apply filtering to          │ ⌐ S22
  │ quantized coefficients      │
  └─────────────────────────────┘
                  │
                  ▼
  ┌─────────────────────────────┐
  │ Add prediction block to     │ ⌐ S23
  │ quantized prediction error  │
  │ signal so as to generate    │
  │ reconstructed signal        │
  └─────────────────────────────┘
                  │
                  ▼
  ┌─────────────────────────────┐
  │      Generate               │ ⌐ S24
  │   prediction block          │
  └─────────────────────────────┘
                  │
                  ▼
        ┌─────────────────────┐
        │         End         │
        └─────────────────────┘
```

FIG. 22

## FIG. 23

## FIG. 24

EP 2 352 293 A1

FIG. 25

## FIG. 26

EP 2 352 293 A1

Video Encoder 2100

## FIG. 27

Input Signal → 105 (+, −) → Transformation/Quantization Unit (110) → Quantized Coefficients → Entropy Encoding Unit (2290)

Inverse Quantization/Inverse Transformation Unit (120)

Prediction Signal

125 (+) → Filter Information

Deblocking Filter (130)

Filter/Design Unit (2230)

Intra-Frame Prediction Unit (170)

175

Motion Compensated Prediction Unit (160)

Interpolation Filter (150)

Memory (140)

Intra/Inter

Motion Estimation Unit (165)

2231

Motion Data

Video Encoder

2200

EP 2 352 293 A1

FIG. 28

## FIG. 29

# FIG. 30

# FIG. 31A

| Neighboring Block (m=2) | Neighboring Block (m=3) | Neighboring Block (m=4) |
|---|---|---|
| Neighboring Block (m=5) | Current Block (m=1) | Neighboring Block (m=6) |
| Neighboring Block (m=7) | Neighboring Block (m=8) | Neighboring Block (m=9) |

# FIG. 31B

| Neighboring Block (m=2) | Neighboring Block (m=3) | Neighboring Block (m=4) |
|---|---|---|
| Neighboring Block (m=5) | Current Block (m=1) | Neighboring Block (m=6) |
| Neighboring Block (m=7) | Neighboring Block (m=8) | Neighboring Block (m=9) |

FIG. 32A

FIG. 32B

# FIG. 33

EP 2 352 293 A1

FIG. 34

Video Decoder 2900

Entropy Decoding Unit 2990

Inverse Quantization/ Inverse Transformation Unit 220

Filter Information

Filter 2980

Prediction Signal

Intra/Inter 275

Motion Data

225 (+) Reconstructed Signal

Deblocking Filter 230

Decoded Signal

Memory 240

Interpolation Filter 250

Intra-Frame Prediction Unit 270

Motion Compensated Prediction Unit 260

80

# FIG. 35

Inverse Quantization Unit 3010

Memory 3020

Inverse Transformation Unit 3030

Inverse Transformation Unit 3040

3041

3002

3001

# FIG. 36

Inverse Quantization Unit 3110

Memory 3120

Inverse Transformation Unit 3130

Inverse Transformation Unit 3140

3141

3101

3102

# FIG. 37

Video Encoder Side | Video Decoder Side

3201 — Video Encoder → 3202 — Channel → 3203 — Video Decoder

EP 2 352 293 A1

## FIG. 38

Dinner
1920x1080, 4:2:0 @ 24 Hz

Legend:
- ○ H.264 / MPEG-4 AVC + invented post filter
- □ H.264 / MPEG-4 AVC with post filte In applic. 08 0120 36.3
- △ H.264 / MPEG-4 AVC without post filter

Y-axis: PSNR-Y [dB]
X-axis: Bitrate [kbps]

FIG. 39A

$$T_1, \ldots, T_{16}$$

$$y \rightarrow \boxed{\text{Transformation Unit}} \rightarrow d_1, \ldots, d_{16}$$

FIG. 39B

$$\tau_{1,k-1}, \ldots, \tau_{16,k-1} \quad f_{1,k-1}, \ldots, f_{16,k-1} \longleftarrow$$

$$d_1, \ldots, d_{16} \rightarrow \boxed{\text{Coefficient Noise Cancellation Unit}}$$

$$\hat{c}_{1,k}, \ldots, \hat{c}_{16,k}$$

$$\boxed{\text{Filter Unit}}$$

$$\hat{c}_{1,k}, \ldots, \hat{c}_{16,k}$$

$$\boxed{\text{Weighted Inverse Transformation Unit}}$$

$$\hat{u}_k$$

$$\boxed{\text{Masking Unit}}$$

$$(k{+}{=}1)$$

$$\hat{x}_k$$

$$T_1, \ldots, T_{16}$$

$$\boxed{\text{Transformation Unit}}$$

# FIG. 40A

$T_1,...,T_{16}$

$y \rightarrow$ | Transformation Unit | $\rightarrow d_1,...,d_{16}$

# FIG. 40B

$\tau_{1,k-1},...,\tau_{16,k-1}$     $f_{1,k-1},...,f_{16,k-1} \leftarrow$

$d_1,...,d_{16}$ → | Coefficient Noise Cancellation Unit |

$\hat{c}_{1,k},...,\hat{c}_{16,k}$

| Filter Unit |

$\hat{c}_{1,k},...,\hat{c}_{16,k}$

| Weighted Inverse Transformation Unit |

$\hat{u}_k$

| Masking Unit |

$\hat{x}_k$

$T_1,...,T_{16}$

| Transformation Unit |

$(k+=1)$

# FIG. 41A

$$T_1, ..., T_{16}$$

$$y \rightarrow \boxed{\begin{array}{l}\text{Transformation}\\\text{Unit}\end{array}} \rightarrow d_1, ..., d_{16}$$

# FIG. 41B

$$\tau_{1,k-1}, ..., \tau_{16,k-1} \qquad f_{1,k-1}, ..., f_{16,k-1}$$

$$d_1, ..., d_{16}$$

$$\boxed{\text{Filter Unit}}$$

$$\hat{c}_{1,k}, ..., \hat{c}_{16,k}$$

$$\boxed{\begin{array}{l}\text{Coefficient Noise}\\\text{Cancellation Unit}\end{array}}$$

$$\hat{\hat{c}}_{1,k}, ..., \hat{\hat{c}}_{16,k}$$

$$\boxed{\begin{array}{l}\text{Weighted Inverse}\\\text{Transformation Unit}\end{array}}$$

$$\hat{u}_k$$

$$\boxed{\text{Masking Unit}}$$

$$\hat{x}_k \qquad T_1, ..., T_{16}$$

$$\boxed{\begin{array}{l}\text{Transformation}\\\text{Unit}\end{array}}$$

$$(k{+}{=}1)$$

FIG. 42

Streaming Server ex103

LSI ex500

Camera ex116

Computer ex111

Internet ex101

Telephone
Network
ex104

ex106

ex107

Game Device ex115

ex108

PDA ex112

Internet Service Provider ex102

ex109

Camera ex113

ex110

Cell Phone ex114

ex100

EP 2 352 293 A1

FIG. 43

ex601

ex608

ex602

ex603

ex604

ex606

ex607

SD

1 2 3
4 5 6
7 8 9
* 0 #

manner

ex605

ex114

# FIG. 44

ex602

**Display Unit**

ex702

**LCD Control Unit**

ex713

ex709

**Image Decoding Unit**

ex710

**Power Supply Circuit Unit** — To Respective Units

ex708

**Multiplex/ Demultiplex Unit**

ex711

**Main Control Unit**

ex601

ex607

**Recording medium**

ex707

**Recording/ Reproducing Unit**

ex704

**Operation Input Control Unit**

ex604

**Operation Keys**

ex701

**Communication Circuit Unit**

ex706

**Modem circuit Unit**

ex712

**Image Encoding Unit**

ex605

**Audio Input Unit**

ex705

**Voice Signal Processing Unit**

ex703

**Camera I/F Unit**

ex603

**Camera Unit**

ex608

**Audio Output Unit**

ex114

EP 2 352 293 A1

FIG. 45

ex214

Monitor ex213

Reproduction Device ex212

Satellite ex202

Cell Phone ex114

Antenna ex205

Vehicle ex210

Antenna ex204

Vehicle Navigation System ex211

Cable ex203

Broadcast Station ex201

ex215

ex216

Monitor ex219

STB ex217

Television ex300

SD

Reader/Recorder ex218

ex200

FIG. 46

ex220 ex218 ex216 ex215 ex104
SD Telephone Network

ex317

| Operation Input Unit | Bridge | Slot Unit | Driver | Modem |

ex312 ex313 ex314 ex315 ex316

Control Unit

ex310 ex306 ex309

ex204
Tuner

Modulation/ Demodulation Unit

Multiplex/ Demultiplex Unit

Buffer
ex320

Voice Signal Processing Unit
ex304

Buffer
ex318

ex307

ex203
ex301 ex302 ex303

Buffer
ex321

Video Signal Processing Unit
ex305

Buffer
ex319

Display Unit
ex308

ex311

Power Supply Circuit Unit

ex500

ex300

EP 2 352 293 A1

91

FIG. 47

# FIG. 48

Recording Medium ex215

Recording Block ex231

Information Track ex230

Inner Periphery Region — ex232

Data Recording Region — ex233

Outer Periphery Region — ex234

FIG. 49

EP 2 352 293 A1

ex500

# INTERNATIONAL SEARCH REPORT

| | International application No. |
|---|---|
| | PCT/JP2009/006392 |

## A. CLASSIFICATION OF SUBJECT MATTER
*H04N7/26*(2006.01)i

According to International Patent Classification (IPC) or to both national classification and IPC

## B. FIELDS SEARCHED

Minimum documentation searched (classification system followed by classification symbols)
H04N7/24-7/68

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2006-262278 A (Fuji Xerox Co., Ltd.), 28 September 2006 (28.09.2006), paragraphs [0090] to [0097] & US 2006/0210182 A1 | 1,2,4,8,9, 12,15-20 |
| A | JP 2006-211152 A (National University Corporation Hokkaido University), 10 August 2006 (10.08.2006), entire text; all drawings (Family: none) | 1-20 |
| A | WO 2007/111292 A1 (Matsushita Electric Industrial Co., Ltd.), 04 October 2007 (04.10.2007), entire text; all drawings & EP 1841230 A1 & KR 10-2009-0003272 A | 1-20 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 February, 2010 (19.02.10) | 02 March, 2010 (02.03.10) |

| Name and mailing address of the ISA/ Japanese Patent Office | Authorized officer |
|---|---|
| Facsimile No. | Telephone No. |

Form PCT/ISA/210 (second sheet) (April 2007)

95

**INTERNATIONAL SEARCH REPORT**

International application No.

PCT/JP2009/006392

| C (Continuation). DOCUMENTS CONSIDERED TO BE RELEVANT |
|---|

| Category* | Citation of document, with indication, where appropriate, of the relevant passages | Relevant to claim No. |
|---|---|---|
| A | JP 2004-222288 A (Samsung Electronics Co., Ltd.), 05 August 2004 (05.08.2004), entire text; all drawings & US 2004/0190610 A1 & EP 1439706 A2 & KR 10-2004-0065406 A | 1-20 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 08012036 A
- EP 1841230 A
- EP 08015661 A

### Non-patent literature cited in the description

- Adaptive Filter Theory. **S. Haykin.** Prentice Hall Information and System Sciences Series. Prentice Hall, 2002